(19) Europäisches Patentamt
European Patent Office
Office européen des brevets

(11) EP 4 648 303 A1

(12) **EUROPEAN PATENT APPLICATION**
published in accordance with Art. 153(4) EPC

(43) Date of publication:
**12.11.2025 Bulletin 2025/46**

(21) Application number: **24750601.7**

(22) Date of filing: **01.02.2024**

(51) International Patent Classification (IPC):
***H04B 7/0456*** (2017.01) ***H04B 7/0404*** (2017.01)
***H04B 7/06*** (2006.01) ***H04W 72/12*** (2023.01)
***H04W 72/21*** (2023.01) ***H04W 72/231*** (2023.01)
***H04W 72/232*** (2023.01) ***H04L 5/00*** (2006.01)

(52) Cooperative Patent Classification (CPC):
**H04B 7/0404; H04B 7/0456; H04B 7/06; H04L 5/00; H04W 72/12; H04W 72/21; H04W 72/231; H04W 72/232**

(86) International application number:
**PCT/KR2024/001557**

(87) International publication number:
**WO 2024/162804 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.02.2023 KR 20230013427**

(71) Applicant: **Samsung Electronics Co., Ltd.**
**Suwon-si, Gyeonggi-do 16677 (KR)**

(72) Inventors:
- **LIM, Seongmok**
  **Suwon-si, Gyeonggi-do 16677 (KR)**
- **PARK, Kyoungmin**
  **Suwon-si, Gyeonggi-do 16677 (KR)**
- **JANG, Youngrok**
  **Suwon-si, Gyeonggi-do 16677 (KR)**
- **JI, Hyoungju**
  **Suwon-si, Gyeonggi-do 16677 (KR)**
- **CHOI, Kyungjun**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **UPLINK DATA CHANNEL SCHEDULING METHOD AND DEVICE FOR MULTI-PANEL SIMULTANEOUS TRANSMISSION IN WIRELESS COMMUNICATION SYSTEM**

(57) The present disclosure relates to a 5G or 6G communication system for supporting higher data transmission rates. Particularly, according to the disclosure, a method performed by means of a user equipment (UE) in a wireless communication system comprises the steps of: receiving, from a base station, configuration information including first configuration information for a physical uplink shared channel (PUSCH) and second configuration information about a first sounding reference signal (SRS) resource set and a second SRS resource set, the first configuration information including information about a multi-panel simultaneous transmission method; receiving, from the base station, first downlink control information (DCI) related to information about a first transmission configuration indicator (TCI) state and a second TCI state, which are related to the PUSCH; receiving, from the base station, second DCI for scheduling the PUSCH, the second DCI including an SRS resource set indicator field; and transmitting, to the base station, the PUSCH on the basis of the SRS resource set indicator field, wherein, if a code point of the SRS resource set indicator field indicates a first value, the first TCI state is applied to transmission of the PUSCH, if the code point of the SRS resource set indicator field indicates a second value, the second TCI state is applied to transmission of the PUSCH, and, if the code point of the SRS resource set indicator field indicates a third value, the first TCI state and the second TCI state can be applied to transmission of the PUSCH.

EP 4 648 303 A1

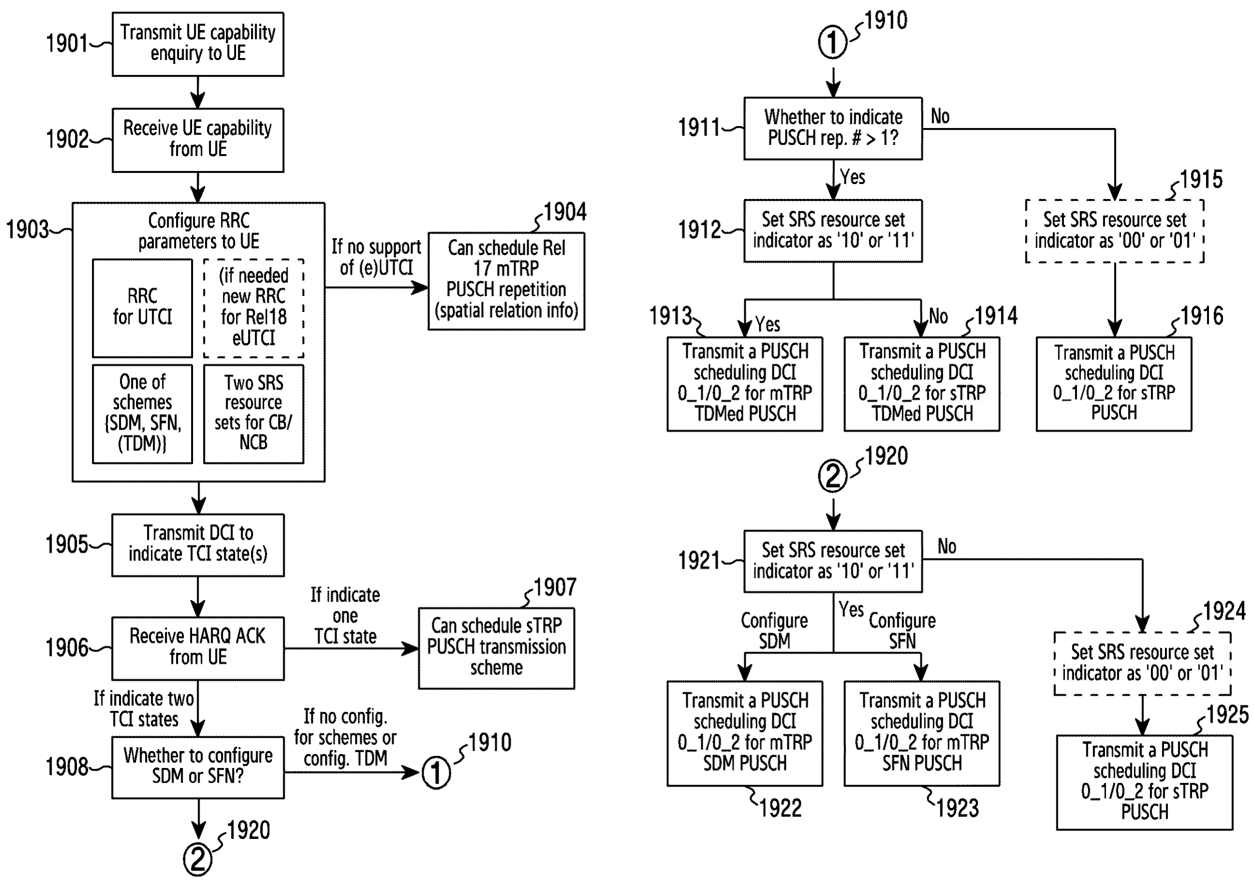
1901
Transmit UE capability enquiry to UE
1902
Receive UE capability from UE
1903
Configure RRC parameters to UE
RRC for UTCI
(if needed new RRC for Rel18 eUTCI
One of schemes {SDM, SFN, (TDM)}
Two SRS resource sets for CB/ NCB
If no support of (e)UTCI
1904
Can schedule Rel 17 mTRP PUSCH repetition (spatial relation info)
1905
Transmit DCI to indicate TCI state(s)
1906
Receive HARQ ACK from UE
If indicate one TCI state
1907
Can schedule sTRP PUSCH transmission scheme
If indicate two TCI states
1908
Whether to configure SDM or SFN?
If no config. for schemes or config. TDM
1910
1920
1910
1911
Whether to indicate PUSCH rep. # > 1?
No
Yes
1912
Set SRS resource set indicator as '10' or '11'
1915
Set SRS resource set indicator as '00' or '01'
1913
Yes
No
1914
Transmit a PUSCH scheduling DCI 0_1/0_2 for mTRP TDMed PUSCH
Transmit a PUSCH scheduling DCI 0_1/0_2 for sTRP TDMed PUSCH
1916
Transmit a PUSCH scheduling DCI 0_1/0_2 for sTRP PUSCH
1920
1921
Set SRS resource set indicator as '10' or '11'
No
Yes
Configure SDM
Configure SFN
1924
Set SRS resource set indicator as '00' or '01'
1925
Transmit a PUSCH scheduling DCI 0_1/0_2 for sTRP PUSCH
Transmit a PUSCH scheduling DCI 0_1/0_2 for mTRP SDM PUSCH
Transmit a PUSCH scheduling DCI 0_1/0_2 for mTRP SFN PUSCH
1922
1923

FIG.19

## Description

[Technical Field]

The disclosure relates to an operation of a terminal and a base station in a wireless communication system (or mobile communication system). Specifically, the disclosure relates to a method of performing uplink simultaneous transmission by using multiple panels in a wireless communication system, a terminal capability reporting method of a terminal and a higher layer parameter configuration method of a base station for a corresponding operation, and a method of determining, by a terminal, a scheduled transmission method among uplink transmission methods including a multi-panel simultaneous transmission method and transmitting an uplink channel, and a device capable of performing same.

[Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to- everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization(NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, with the advancement of communication systems, research is being conducted on an uplink transmission and reception process using multiple panels. In particular, there is a growing demand for specifying uplink simultaneous transmission utilizing multiple panels.

[Disclosure of Invention]

[Technical Problem]

Various embodiments of the disclosure are to provide a device and a method capable of effectively providing services in a mobile communication system. Various embodiments of the disclosure are to provide a method of selecting and performing, by a terminal, a transmission method of a desired uplink channel by referring to a higher layer parameter configuration and scheduling information for simultaneously transmitting multiple uplink channels by using multiple panels in a wireless communication system.

[Solution to Problem]

A method performed by a terminal (user equipment, UE) in a wireless communication system may include receiving, from a base station, configuration information including first configuration information for a physical uplink shared channel (PUSCH) and second configuration information on a first sounding reference signal (SRS) resource set and a second SRS resource set, the first configuration information including information on a scheme of multi-panel simultaneous transmission, receiving, from the base station, first downlink control information (DCI) related to information on a first transmission configuration indicator (TCI) state and a second TCI state related to the PUSCH, receiving, from the base station, second DCI that schedules the PUSCH, the second DCI including an SRS resource set indicator field, and transmitting the PUSCH to the base station, based on the SRS resource set indicator field, wherein, in case that a codepoint of the SRS resource set indicator field indicates a first value, the first TCI state is applied to the transmission of the PUSCH, wherein, in case that the codepoint of the SRS resource set indicator field indicates a second value, the second TCI state is applied to the transmission of the PUSCH, and wherein, in case that the codepoint of the SRS resource set indicator field indicates a third value, the first TCI state and the second TCI state are applied to the transmission of the PUSCH.

A method performed by a base station in a wireless communication system may include transmitting, to a terminal, configuration information including first configuration information for a physical uplink shared channel (PUSCH) and second configuration information on a first sounding reference signal (SRS) resource set and a second SRS resource set, the first configuration information including information on a scheme of multi-panel simultaneous transmission, transmitting, to the terminal, first downlink control information (DCI) related to information on a first transmission configuration indicator (TCI) state and a second TCI state related to the PUSCH, transmitting, to the terminal, second DCI that schedules the PUSCH to the terminal, the second DCI including an SRS resource set indicator field, and receiving the PUSCH from the terminal, based on the SRS resource set indicator field, wherein, in case that a codepoint of the SRS resource set indicator field indicates a first value, the PUSCH is received based on the first TCI state, wherein, in case that the codepoint of the SRS resource set indicator field indicates a second value, the PUSCH is received based on the second TCI state, and wherein, in case that the codepoint of the SRS resource set indicator field indicates a third value, the PUSCH is received based on the first TCI state and the second TCI state.

A terminal (user equipment, UE) in a wireless communication system may include a transceiver, and a controller connected to the transceiver, wherein the controller is configured to receive, from a base station, configuration information including first configuration information for a physical uplink shared channel (PUSCH) and second configuration information on a first sounding reference signal (SRS) resource set and a second SRS resource set, the first configuration information including information on a scheme of multi-panel simultaneous transmission, receive, from the base station, first downlink control information (DCI) related to information on a first transmission configuration indicator (TCI) state and a second TCI state related to the PUSCH, receive, from the base station, second DCI that schedules the PUSCH, the second DCI including an SRS resource set indicator field, and transmit the PUSCH to the base station, based on the SRS resource set indicator field, wherein, in case that a codepoint of the SRS resource set indicator field indicates a first value, the first TCI state is applied to the transmission of the PUSCH, wherein, in case that the codepoint of the SRS resource set indicator field indicates a second value, the second TCI state is applied to the transmission of the PUSCH, and wherein, in case that the codepoint of the SRS resource set indicator field indicates a third value, the first TCI state and the second TCI state are applied to the transmission of the PUSCH.

A base station in a wireless communication system may include a transceiver, and a controller connected to the transceiver, wherein the controller is configured to transmit, to a terminal, configuration information including first configuration information for a physical uplink shared channel (PUSCH) and second configuration information on a first sounding reference signal (SRS) resource set and a second SRS resource set, the first configuration information including information on a scheme of multi-panel simultaneous transmission, transmit, to the terminal, first downlink control information (DCI) related to information on a first transmission configuration indicator (TCI) state and a second TCI state related to the PUSCH, transmit, to the terminal, second DCI that schedules the PUSCH, the second DCI including an SRS resource set indicator field, and receive the PUSCH from the terminal, based on the SRS resource set indicator field, wherein, in case that a codepoint of the SRS resource set indicator field indicates a first value, the PUSCH is received based on the first TCI state, wherein, in case that the codepoint of the SRS resource set indicator field indicates a second value, the PUSCH is received based on the second TCI state, and wherein, in case that the codepoint of the SRS resource set indicator field indicates a third value, the PUSCH is received based on the first TCI state and the second TCI state.

[Advantageous Effects of Invention]

Various embodiments of the disclosure can provide a device and a method capable of effectively providing services in a mobile communication system.

According to various embodiments of the disclosure, a method of simultaneously transmitting multiple uplink channels by using multiple panels in a wireless communication system, and a device for performing same may be provided.

[Brief Description of Drawings]

FIG. 1 illustrates a basic structure of a time-frequency domain in a wireless communication system according to an embodiment of the disclosure.

FIG. 2 illustrates a structure of a frame, a subframe, and a slot in a wireless communication system according to an embodiment of the disclosure.

FIG. 3 illustrates an example of a bandwidth part configuration in a wireless communication system according to an embodiment of the disclosure.

FIG. 4 illustrates an example of base station beam allocation according to TCI state configuration in a wireless communication system according to an embodiment of the disclosure.

FIG. 5 illustrates radio protocol structures of a base station and a UE in single cell, carrier aggregation, and dual connectivity situations according to an embodiment of the disclosure.

FIG. 6 illustrates an example of time domain resource allocation with regard to a physical downlink shared channel (PDSCH) in a wireless communication system according to an embodiment of the disclosure.

FIG. 7 illustrates an example of physical uplink shared channel (PUSCH) repetition type B transmission in a wireless communication system according to an embodiment of the disclosure.

FIG. 8 illustrates an example of an antenna port configuration and resource allocation for cooperative communication in a wireless communication system according to an embodiment of the disclosure.

FIG. 9 illustrates an example of a downlink control information (DCI) configuration for cooperative communication in a wireless communication system according to an embodiment of the disclosure.

FIG. 10 illustrates an enhanced PDSCH TCI state activation/deactivation medium access control (MAC)-control element (CE) structure.

FIG. 11 illustrates a beam application time (BAT) which may be considered in a case where a unified TCI scheme is used in a wireless communication system according to an embodiment of the disclosure.

FIG. 12 illustrates another MAC-CE structure for activation and indication of a joint TCI state or separate DL or UL TCI state in a wireless communication system according to an embodiment of the disclosure.

FIG. 13 illustrates another MAC-CE structure for activation and indication of multiple joint TCI states or separate DL or UL TCI states in a wireless communication system according to an embodiment of the disclosure.

FIG. 14 illustrates another MAC-CE structure for activation and indication of multiple joint TCI states or separate DL or UL TCI states in a wireless communication system according to an embodiment of the disclosure.

FIG. 15 illustrates an example of a case where each of two sounding reference signal (SRS) resource sets includes two SRS resources and a terminal is capable of supporting uplink simultaneous transmission by using two panels in a wireless communication system according to an embodiments of the disclosure.

FIG. 16 illustrates an example of a case where each of two resource sets includes two SRS resources and a terminal is capable of supporting uplink simultaneous transmission by using two panels in a wireless communication system according to an embodiments of the disclosure.

FIG. 17 illustrates an uplink channel repeated transmission method based on multi-transmission and reception point (mTRP) time division multiplexing (TDM) and an uplink channel simultaneous transmission method based on multiple panels (spatial division multiplexing (SDM) and SFN).

FIG. 18 illustrates an example for DCI indicating a TCI state and DCI scheduling an uplink channel.

FIG. 19 illustrates an operation example of a base station for supporting multiple uplink transmission methods.

FIG. 20 illustrates an operation example of a terminal for supporting multiple uplink transmission methods.

FIG. 21 illustrates a structure of a UE in a wireless communication system according to an embodiment of the disclosure.

FIG. 22 illustrates a structure of a base station in a wireless communication system according to an embodiment of the disclosure.

[Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or more, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

[NR time-frequency resources]

Hereinafter, a frame structure of a 5G system will be described in more detail with reference to the accompanying drawings.

FIG. 1 illustrates a basic structure of a time-frequency domain, which is a radio resource domain used to transmit data or control channels, in a 5G system.

The horizontal axis in FIG. 1 represents a time domain, and the vertical axis in FIG. 1 represents a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (for example, 12) consecutive REs may constitute one resource block (RB) 104. In the time domain, one subframe 110 may include multiple OFDM symbols 102. For example, the length of one subframe may be 1 ms.

FIG. 2 illustrates a structure of a frame, a subframe, and a slot in a wireless communication system according to an embodiment of the disclosure.

FIG. 2 illustrates an example of a structure of a frame 200, a subframe 201, and a slot 202. One frame 200 may be defined as 10ms. One subframe 201 may be defined as 1ms, and thus one frame 200 may include a total often subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203per one subframe 201 may vary depending on configuration values μ 204 or 205 for the subcarrier spacing. The example of FIG. 2 shows the case of μ=0 (204) and the case of μ=1 (205) as a configuration value for a subcarrier spacing. In the case of μ=0 (204), one subframe 201 may include one slot 202, and in the case of μ=1 (205), one subframe 201 may include two slots 203. That is, the number of slots per one subframe $N_{slot}^{subframe,\mu}$ may differ depending on the subcarrier spacing configuration value μ, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration μ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, bandwidth part (BWP) configuration in a 5G communication system will be described in detail with reference to the accompanying drawings.

FIG. 3 illustrates an example of a bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2(BWP#2) 302. A base station may configure one or multiple bandwidth parts for a UE, and may configure the following pieces of information with regard to each bandwidth part as given below.

[Table 2]

```
BWP ::=                 SEQUENCE {
    bwp-Id                      BWP-Id,
    (bandwidth part identifier)
    locationAndBandwidth        INTEGER (1..65536),
    (bandwidth part location)
    subcarrierSpacing           ENUMERATED {n0, n1, n2, n3, n4, n5},
    (subcarrier spacing)
    cyclicPrefix            ENUMERATED { extended }
    (cyclic prefix)
}
```

Obviously, the above example is not limiting, and various parameters related to the bandwidth part may be configured for the UE, in addition to the above configuration information. The base station may transfer the configuration information to the UE through higher layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to an embodiment, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource set #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (i.e., CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

[Bandwidth part (BWP) change]

If a UE has one or more bandwidth parts configured therefor, the base station may indicate, to the UE, to change (or switch or transition) the bandwidth parts by using a bandwidth part indicator field inside DCI. For example, if the currently activated bandwidth part of the UE is bandwidth part #1 301 in FIG.3, the base station may indicate bandwidth part #2 302 with a bandwidth part indicator inside DCI, and the UE may change the bandwidth part to bandwidth part #2 302 indicated by the bandwidth part indicator inside the received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined as given below, for example.

[Table 3]

| μ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability.<br>Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part change delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot n+$T_{BWP}$, and may transmit/receive a data channel scheduled by the corresponding DCI in the newly changed bandwidth part. According to an embodiment, if the base station wants to schedule a data channel by using the new bandwidth part, the base station may determine time domain resource allocation regarding the data channel, based on the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

[QCL, TCI state]

In a wireless communication system, one or more different antenna ports (which may be replaced with one or more channels, signals, and combinations thereof, but in the following description of the disclosure, will be referred to as different antenna ports, as a whole, for the sake of convenience) may be associated with each other by a quasi-co-location (QCL) configuration as in Table 4 below. A TCI state is for announcing the QCL relation between a PDCCH (or a PDCCH DRMS) and another RS or channel, and the description that a reference antenna port A (reference RS #A) and another target antenna port B (target RS #B) are QCLed with each other means that the UE is allowed to apply some or all of large-scale channel parameters estimated in the antenna port A to channel measurement form the antenna port B. The QCL needs to be associated with different parameters according to the situation such as 1) time tracking influenced by average delay and delay spread, 2) frequency tracking influenced by Doppler shift and Doppler spread, 3) radio resource management (RRM) influenced by average gain, or 4) beam management (BM) influenced by a spatial parameter. Accordingly, four types of QCL relations are supported in NR as in Table 10 below.

[Table 4]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to some or all of various parameters as a whole, such as angle of arrival (AoA), power angular spectrum (PAS) of AoA, angle of departure (AoD), PAS of AoD, transmit/receive channel correlation, transmit/receive beamforming, and spatial channel correlation.

The QCL relations may be configured for the UE through RRC parameter TCI-state and QCL-info as in Table 5 below. Referring to Table 5, the base station may configure one or more TCI states for the UE, thereby informing of a maximum of two kinds of QCL relations (qcl-Type1, qcl-Type2) regarding the RS that refers to the ID of the TCI state, that is, the target RS. Each piece of QCL information (QCL-Info) that each TCI state may include the serving cell index and the BWP index of the reference RS indicated by the corresponding QCL information, the type and ID of the reference BS, and a QCL type as in Table 4 above.

[Table 5]

```
TCI-State ::=            SEQUENCE {
  tci-StateId                TCI-StateId,
  (ID of corresponding TCI state)
  qcl-Type1                  QCL-Info,
  (QCL information of first refernece RS of RS (target RS) referring to corresponding TCI state ID)
  qcl-Type2             QCL-Info                      OPTIONAL,      -- Need R
  (QCL information of second refernece RS of RS (target RS) referring to corresponding TCI state ID)
  ...
}

QCL-Info ::=             SEQUENCE {
  cell                  ServCellIndex                 OPTIONAL,      -- Need R
  (serving cell index of reference RS indicated by corresponding QCL information)
  bwp-Id                BWP-Id              OPTIONAL, -- Cond CSI-RS-Indicated
  (BWP index of reference RS indicated by corresponding QCL information)
  referenceSignal                      CHOICE {
      csi-rs                                NZP-CSI-RS-ResourceId,
      ssb                                   SSB-Index
      (one of CSI-RS ID or SSB ID indicated by corresponding QCL information)
  },
  qcl-Type                   ENUMERATED {typeA, typeB, typeC, typeD},
  ...
}
```

FIG. 4 illustrates an example of base station beam allocation according to TCI state configuration.

Referring to FIG. 4, the base station may transfer information regarding N different beams to the UE through N different TCI states. For example, in the case of N=3 as in FIG. 4, the base station may configure qcl-Type2 parameters included in three TCI states 400, 405, and 410 in QCL type D while being associated with CSI-RSs or SSBs corresponding to different beams, thereby notifying that antenna ports referring to the different TCI states 400, 405, and 410 are associated with different spatial Rx parameters (that is, different beams).

Tables 6 to 10 below enumerate valid TCI state configurations according to the target antenna port type.

Table 6 enumerates valid TCI state configurations when the target antenna port is a CSI-RS for tracking (i.e., TRS). The TRS refers to an NZP CSI-RS which has no repetition parameter configured therefor, and trs-Info of which is configured as "true", among CRI-RSs. In Table 10, configuration no. 3 may be used for an aperiodic TRS.

[Table 6]

| Valid TCI state Configuration | DL RS 1 | qcl-Type1 | DL RS 2 (If configured) | qcl-Type2 (If configured) |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 7 enumerates valid TCI state configurations when the target antenna port is a CSI-RS for CSI. The CSI-RS for CSI refers to an NZP CSI-RS which has no parameter indicating repetition (for example, repetition parameter) configured therefor, and trs-Info of which is not configured as "true", among CRI-RSs.

[Table 7]

| Valid TCI state Configuration | DL RS 1 | qcl-Type1 | DL RS 2 (If configured) | qcl-Type2 (If configured) |
|---|---|---|---|---|
| 1 | TRS | QCL-TypeA | SSB | QCL-TypeD |

(continued)

| Valid TCI state Configuration | DL RS 1 | qcl-Type1 | DL RS 2 (If configured) | qcl-Type2 (If configured) |
|---|---|---|---|---|
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 8 enumerates valid TCI state configurations when the target antenna port is a CSI-RS for beam management (BM) (which has the same meaning as CSI-RS for L1 RSRP reporting). The CSI-RS for BM refers to an NZP CSI-RS which has a repetition parameter configured to have a value of "on" or "off", and trs-Info of which is not configured as "true", among CRI-RSs.

[Table 8]

| Valid TCI state Configuration | DL RS 1 | qcl-Type1 | DL RS 2 (If configured) | qcl-Type2 (If configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

Table 9 enumerates valid TCI state configurations when the target antenna port is a PDCCH DMRS.

[Table 9]

| Valid TCI state Configuration | DL RS 1 | qcl-Type1 | DL RS 2 (If configured) | qcl-Type2 (If configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 10 enumerates valid TCI state configurations when the target antenna port is a PDSCH DMRS.

[Table 10]

| Valid TCI state Configuration | DL RS 1 | qcl-Type1 | DL RS 2 (If configured) | qcl-Type2 (If configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

According to a representative QCL configuration method based on Tables 6 to 10 above, the target antenna port and reference antenna port for each step are configured and operated such as "SSB" -> "TRS" -> "CSI-RS for CSI, or CSI-RS for BM, or PDCCH DMRS, or PDSCH DMRS". Accordingly, it is possible to help the UE's receiving operation by associating statistical characteristics that can be measured from the SSB and TRS with respective antenna ports.

[Regarding CA/DC]

FIG. 5 illustrates radio protocol structures of a base station and a UE in single cell, carrier aggregation, and dual connectivity situations according to an embodiment of the disclosure.

Referring to FIG. 5, the radio protocol of a next-generation mobile communication system includes an NR service data adaptation protocol (SDAP) S25 or S70, an NR packet data convergence protocol (PDCP) S30 or S65, an NR radio link control (RLC) S35 or S60, and an NR medium access controls (MAC) S40 or S55, on each of UE and NR base station sides.

The main functions of the NR SDAP S25 or S70 may include some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP S30 or S65 may include some of functions below.

- Header compression and decompression: robust header compression (ROHC) only
- Transfer of user data
- In-sequence delivery of higher layer PDUs
- Out-of-sequence delivery of higher layer PDUs
- PDCP PDU reordering for reception
- Duplicate detection of lower layer SDUs
- Retransmission of PDCP SDUs
- Ciphering and deciphering
- Timer-based SDU discard in uplink

The above-mentioned reordering of the NR PDCP device refers to a function of reordering PDCP PDUs received from a lower layer in an order based on the PDCP sequence number (SN), and may include a function of transferring data to an higher layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC S35 or S60 may include some of functions below.

- Transfer of higher layer PDUs
- In-sequence delivery of higher layer PDUs
- Out-of-sequence delivery of higher layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The above-mentioned in-sequence delivery of the NR RLC device refers to a function of delivering RLC SDUs, received from the lower layer, to the higher layer in sequence. The in-sequence delivery of the NR RLC device may include a function of, if one original RLC SDU is segmented into multiple RLC SDUs and the segmented RLC SDUs are received, reassembling the RLC SDUs and delivering the reassembled RLC SDUs, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, and may include a function of requesting retransmission of the lost RLC PDUs. The in-sequence delivery of the NR RLC device may include a function of, if there is a lost RLC SDU, successively delivering only RLC SDUs before the lost RLC SDU to the higher layer, and may include a function of, if a predetermined timer has expired although there is a lost RLC SDU, successively delivering all RLC SDUs received before the timer was started to the higher layer. Alternatively, the in-sequence delivery of the NR RLC device may include a function of, if a predetermined timer has expired although there is a lost RLC SDU, successively delivering all RLC SDUs received until now to the higher layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The above-mentioned out-of-sequence delivery of the NR RLC device refers to a function of instantly delivering RLC SDUs received from the lower layer to the higher layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC S40 or S55 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer S45 or S50 may perform operations of channel-coding and modulating higher layer data, thereby obtaining OFDM symbols, and delivering the same through a radio channel, or demodulating OFDM symbols received through the radio channel, channel-decoding the same, and delivering the same to the higher layer.

The detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as S00. On the other hand, in case that the base station transmits data to the UE, based on carrier aggregation (CA) which uses multiple carriers in a single TRP, the base station and the UE may use a protocol structure which has a single structure up to the RLC, but multiplexes the PHY layer through a MAC layer, such as S10. As another example, in case that the base station transmits data to the UE, based on dual connectivity (DC) which uses multiple carriers in multiple TRPs, the base station and the UE may use a protocol structure which has a single structure up to the RLC, but multiplexes the PHY layer through a MAC layer, such as S20.

[PDCCH: regarding DCI]

Next, downlink control information (DCI) in a 5G communication system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 11 below, for example.

[Table 11]

| |
|---|
| - Identifier for DCI formats - [1] bit |
| - Frequency domain resource assignment $-[\left\lceil \log_2(N_{RB}^{UL,BWP}(N_{RB}^{UL,BWP}+1)/2) \right\rceil]$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - Transmit power control (TPC) command for scheduled PUSCH - [2] bits |
| - Uplink/supplementary uplink (UL/SUL) indicator - 0 or 1 bit |

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 12 below, for example.

[Table 12]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
| * For resource allocation type 0, $\left\lceil N_{RB}^{UL,BWP}/P \right\rceil$ bits |
| * For resource allocation type 1, $\left\lceil \log_2(N_{RB}^{UL,BWP}(N_{RB}^{UL,BWP}+1)/2) \right\rceil$ bits |
| - Time domain resource assignment -1, 2, 3, or 4 bits |
| - Virtual resource block (VRB)-to-physical resource block (PRB) mapping - 0 or 1 bit, only for resource allocation type 1. |
| * 0 bit if only resource allocation type 0 is configured; |
| * 1 bit otherwise. |
| - Frequency hopping flag - 0 or 1 bit, only for resource allocation type 1. |
| * 0 bit if only resource allocation type 0 is configured; |
| * 1 bit otherwise. |
| - Modulation and coding scheme - 5 bits |
| - New data indicator - 1 bit |
| - Redundancy version - 2 bits |
| - HARQ process number - 4 bits |
| - 1st downlink assignment index- 1 or 2 bits |
| * 1 bit for semi-static HARQ-ACK codebook; |
| * 2 bits for dynamic HARQ-ACK codebook with single HARQ-ACK codebook. |
| - 2nd downlink assignment index - 0 or 2 bits |
| * 2 bits for dynamic HARQ-ACK codebook with two HARQ-ACK sub-codebooks; |
| * 0 bit otherwise. |

(continued)

| |
|---|
| - TPC command for scheduled PUSCH - 2 bits |
| $\left\lceil \log_2\left(\sum_{k=1}^{L_{max}} \binom{N_{SRS}}{k}\right)\right\rceil$ |
| - SRS resource indicator – $\left\lceil \log_2\left(\sum_{k=1}^{L_{max}} \binom{N_{SRS}}{k}\right)\right\rceil$ or $\lceil \log_2(N_{SRS}) \rceil$ bits |
| $\left\lceil \log_2\left(\sum_{k=1}^{L_{max}} \binom{N_{SRS}}{k}\right)\right\rceil$ * bits for non-codebook based PUSCH transmission; |
| * $\lceil \log_2(N_{SRS}) \rceil$ bits for codebook based PUSCH transmission. |
| - Precoding information and number of layers - up to 6 bits |
| - Antenna ports - up to 5 bits |
| - SRS request - 2 bits |
| - Channel state information (CSI) request - 0, 1, 2, 3, 4, 5, or 6 bits |
| - Code block group (CBG) transmission information - 0, 2, 4, 6, or 8 bits |
| - Phase tracking reference signal (PTRS)-demodulation reference signal (DDMRS) association - 0 or 2 bits. |
| - beta_offset indicator - 0 or 2 bits |
| - DMRS sequence initialization - 0 or 1 bit |

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 13 below, for example.

[Table 13]

| |
|---|
| - Identifier for DCI formats - [1] bit |
| - Frequency domain resource assignment $-[\lceil \log_2(N_{RB}^{DL,BWP}(N_{RB}^{DL,BWP}+1)/2) \rceil]$ bits |
| - Time domain resource assignment - X bits |
| - VRB-to-PRB mapping - 1 bit. |
| - Modulation and coding scheme - 5 bits |
| - New data indicator - 1 bit |
| - Redundancy version - 2 bits |
| - HARQ process number - 4 bits |
| - Downlink assignment index - 2 bits |
| - TPC command for scheduled PUCCH - [2] bits |
| - Physical uplink control channel (PUCCH) resource indicator - 3 bits |
| - PDSCH-to-HARQ feedback timing indicator - [3] bits |

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 14 below, for example.

[Table 14]

| |
|---|
| - Carrier indicator - 0 or 3 bits |
| - Identifier for DCI formats - [1] bits |
| - Bandwidth part indicator - 0, 1 or 2 bits |
| - Frequency domain resource assignment |

(continued)

| |
|---|
| * For resource allocation type 0, $\lceil N_{RB}^{DL,BWP} / P \rceil$ bits<br>* For resource allocation type 1, $\lceil \log_2 (N_{RB}^{DL,BWP} (N_{RB}^{DL,BWP} + 1) / 2) \rceil$ bits<br>- Time domain resource assignment -1, 2, 3, or 4 bits<br>- VRB-to-PRB mapping - 0 or 1 bit, only for resource allocation type 1.<br>* 0 bit if only resource allocation type 0 is configured;<br>* 1 bit otherwise.<br>- Physical resource block (PRB) bundling size indicator - 0 or 1 bit<br>- Rate matching indicator - 0, 1, or 2 bits<br>- Zero power (ZP) channel state information (CSI)-reference signal (RS) trigger - 0, 1, or 2 bits<br>For transport block 1:<br>- Modulation and coding scheme - 5 bits<br>- New data indicator - 1 bit<br>- Redundancy version - 2 bits<br>For transport block 2:<br>- Modulation and coding scheme - 5 bits<br>- New data indicator - 1 bit<br>- Redundancy version - 2 bits<br>- HARQ process number - 4 bits<br>- Downlink assignment index - 0 or 2 or 4 bits<br>- TPC command for scheduled PUCCH - 2 bits<br>- PUCCH resource indicator - 3 bits<br>- PDSCH-to-HARQ_feedback timing indicator - 3 bits<br>- Antenna ports - 4, 5 or 6 bits<br>- Transmission configuration indication - 0 or 3 bits<br>- SRS request - 2 bits<br>- CBG transmission information - 0, 2, 4, 6, or 8 bits<br>- CBG flushing out information - 0 or 1 bit<br>- DMRS sequence initialization - 1 bit |

[PDSCH/PUSCH: regarding time resource allocation]

Hereinafter, a time domain resource allocation method regarding a data channel in a next-generation mobile communication system (5G or NR system) will be described.

A base station may configure a table for time domain resource allocation information regarding a physical downlink shared channel (PDSCH) and a physical uplink shared channel (PUSCH) for a UE through higher layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a timepoint at which a PDCCH is received and a timepoint at which a PDSCH scheduled by the received PDCCH is transmitted; labeled K0), PDCCH-to-PUSCH slot timing (for example, corresponding to a slot-unit time interval between a timepoint at which a PDCCH is received and a timepoint at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 15 or Table 16 below may be transmitted from the base station to the UE.

[Table 15]

***PDSCH-TimeDomainResourceAllocationList* information element**

```
PDSCH-TimeDomainResourceAllocationList ::= SEQUENCE (SIZE(1..maxNrofDL-Allocations)) OF
PDSCH-TimeDomainResourceAllocation

PDSCH-TimeDomainResourceAllocation ::= SEQUENCE {
    k0                                    INTEGER(0..32)
  OPTIONAL,    -- Need S
      (PDCCH-to-PDSCH timing, slot unit)
    mappingType                           ENUMERATED {typeA, typeB},
      (PDSCH mapping type)
    startSymbolAndLength                  INTEGER (0..127)
    (start symbol and length of PDSCH)
}
```

[Table 16]

***PUSCH-TimeDomainResourceAllocationList* information element**

```
PUSCH-TimeDomainResourceAllocationList ::= SEQUENCE (SIZE(1..maxNrofUL-Allocations)) OF
PUSCH-TimeDomainResourceAllocation

PUSCH-TimeDomainResourceAllocation ::= SEQUENCE {
      k2              INTEGER(0..32)              OPTIONAL,    -- Need S
    (PDCCH-to-PUSCH timing, slot unit)
        mappingType                           ENUMERATED {typeA, typeB},
          (PUSCH mapping type)
      startSymbolAndLength                    INTEGER (0..127)
          (start symbol and length of PUSCH)
}
```

The base station may notify the UF of one of the entries of the table regarding time domain resource allocation information described above through L1 signaling (for example, DCI)(for example, "time domain resource allocation" field in DCI may indicate the same). The UE may acquire time domain resource allocation information regarding a PDSCH or PUSCH, based on the DCI acquired from the base station.

FIG. 6 illustrates an example of time domain resource allocation with regard to a PDSCH in a wireless communication system according to an embodiment of the disclosure.

Referring to FIG. 6, the base station may indicate the time domain location of a PDSCH resource according to the subcarrier spacing (SCS) ($\mu_{PDSCH}$, $\mu_{PDCCH}$) of a data channel and a control channel configured by using an upper layer, the scheduling offset (K0) value, and the OFDM symbol start location 600 and length 605 within one slot dynamically indicated through DCI.

[PUSCH: regarding transmission scheme]

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 17 through higher signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 17 through higher signaling. If PUSCH transmission is operated by a configured grant, parameters applied to the PUSCH transmission are applied through configuredGrantConfig (higher signaling) in Table 17 except for dataScramblingIdentityPUSCH, txConfig, codebookSubset, maxRank, and scaling of UCI-OnPUSCH, which are provided by pusch-Config (higher signaling) in Table 18. If provided with transformPrecoder inside configuredGrantConfig (higher signaling) in Table 17, the UE applies tp-pi2BPSK inside pusch-Config in Table 18 to PUSCH transmission operated by a configured grant.

[Table 17]

```
ConfiguredGrantConfig ::=                SEQUENCE {
    frequencyHopping                         ENUMERATED    {intraSlot,    interSlot}
OPTIONAL,     -- Need S,
    cg-DMRS-Configuration                DMRS-UplinkConfig,
    mcs-Table                                ENUMERATED {qam256, qam64LowSE}
OPTIONAL,     -- Need S
    mcs-TableTransformPrecoder             ENUMERATED   {qam256,   qam64LowSE}
OPTIONAL,     -- Need S
    uci-OnPUSCH                                  SetupRelease  {  CG-UCI-OnPUSCH  }
OPTIONAL,     -- Need M
    resourceAllocation                    ENUMERATED  {  resourceAllocationType0,
resourceAllocationType1, dynamicSwitch },
    rbg-Size                                              ENUMERATED   {config2}
OPTIONAL,     -- Need S
    powerControlLoopToUse                  ENUMERATED {n0, n1},
    p0-PUSCH-Alpha                            P0-PUSCH-AlphaSetId,
    transformPrecoder                             ENUMERATED  {enabled,  disabled}
OPTIONAL,     -- Need S
    nrofHARQ-Processes                     INTEGER(1..16),
    repK                                   ENUMERATED {n1, n2, n4, n8},
    repK-RV                               ENUMERATED {s1-0231, s2-0303, s3-0000}
OPTIONAL,     -- Need R
    periodicity                  ENUMERATED { sym2, sym7, sym1x14, sym2x14, sym4x14,
sym5x14, sym8x14, sym10x14, sym16x14, sym20x14, sym32x14, sym40x14, sym64x14, sym80x14,
sym128x14,  sym160x14,  sym256x14,  sym320x14,  sym512x14,  sym640x14,  sym1024x14,
sym1280x14, sym2560x14, sym5120x14, sym6, sym1x12, sym2x12, sym4x12, sym5x12, sym8x12,
sym10x12,  sym16x12,  sym20x12,  sym32x12,  sym40x12,  sym64x12,  sym80x12,  sym128x12,
sym160x12, sym256x12, sym320x12, sym512x12, sym640x12, sym1280x12, sym2560x12
    },
    configuredGrantTimer                                          INTEGER    (1..64)
OPTIONAL,     -- Need R
    rrc-ConfiguredUplinkGrant                        SEQUENCE {
        timeDomainOffset                               INTEGER (0..5119),
        timeDomainAllocation                           INTEGER    (0..15),
        frequencyDomainAllocation                      BIT STRING (SIZE(18)),
        antennaPort                                    INTEGER (0..31),
        dmrs-SeqInitialization                                  INTEGER    (0..1)
OPTIONAL,     -- Need R
        precodingAndNumberOfLayers                       INTEGER (0..63),
        srs-ResourceIndicator                                   INTEGER   (0..15)
OPTIONAL,     -- Need R
        mcsAndTBS                                          INTEGER (0..31),
        frequencyHoppingOffset             INTEGER (1.. maxNrofPhysicalResourceBlocks-1)
OPTIONAL,     -- Need R
        pathlossReferenceIndex          INTEGER (0..maxNrofPUSCH-PathlossReferenceRSs-1),
        ...
    }
OPTIONAL,     -- Need R
    ...
}
```

Next, a PUSCH transmission method will be described. The DMRS antenna port for PUSCH transmission is identical to an antenna port for SRS transmission. PUSCH transmission may follow a codebook-based transmission method and anon-codebook-based transmission method according to whether the value oftxConfig inside pusch-Config in Table 18, which is higher signaling, is "codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 18, the UE does not expect scheduling through DCI format 0_1.

[Table 18]

```
PUSCH-Config ::=                         SEQUENCE {
    dataScramblingIdentityPUSCH                       INTEGER (0..1023)
OPTIONAL,   -- Need S
    txConfig                                          ENUMERATED
{codebook, nonCodebook}                         OPTIONAL,   -- Need S
    dmrs-UplinkForPUSCH-MappingTypeA      SetupRelease { DMRS-UplinkConfig }
OPTIONAL,   -- Need M
    dmrs-UplinkForPUSCH-MappingTypeB      SetupRelease { DMRS-UplinkConfig }
OPTIONAL,   -- Need M

    pusch-PowerControl
OPTIONAL,   -- Need M
    frequencyHopping                              ENUMERATED {intraSlot,
interSlot}                              OPTIONAL,   -- Need S
    frequencyHoppingOffsetLists          SEQUENCE (SIZE (1..4)) OF INTEGER
(1.. maxNrofPhysicalResourceBlocks-1)
OPTIONAL,   -- Need M
    resourceAllocation              ENUMERATED { resourceAllocationType0,
resourceAllocationType1, dynamicSwitch},
    pusch-TimeDomainAllocationList                 SetupRelease { PUSCH-
TimeDomainResourceAllocationList }      OPTIONAL,   -- Need M
    pusch-AggregationFactor                  ENUMERATED { n2, n4, n8 }
OPTIONAL,   -- Need S
    mcs-Table                                       ENUMERATED {qam256,
qam64LowSE}                                OPTIONAL,   -- Need S
    mcs-TableTransformPrecoder          ENUMERATED {qam256, qam64LowSE}
OPTIONAL,   -- Need S
    transformPrecoder                              ENUMERATED {enabled,
disabled}                                OPTIONAL,   -- Need S
    codebookSubset                                          ENUMERATED
{fullyAndPartialAndNonCoherent, partialAndNonCoherent,nonCoherent}
OPTIONAL, -- Cond codebookBased
    maxRank                                                 INTEGER (1..4)
OPTIONAL, -- Cond codebookBased
    rbg-Size                                                ENUMERATED
{ config2}                                    OPTIONAL, -- Need S

    uci-OnPUSCH                                       SetupRelease { UCI-
OnPUSCH}                                   OPTIONAL, -- Need M
    tp-pi2BPSK                                       ENUMERATED {enabled}
OPTIONAL, -- Need S
    ...
}
```

Next, codebook-based PUSCH transmission will be described. The codebook-based PUSCH transmission may be dynamically scheduled through DCI format 0_0 or 0_1, and may be operated semi-statically by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (higher signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. In addition, the TPMI and the transmission rank may be given through "precoding information and number of layers" (a field inside DCI) or configured through precodingAndNumberOfLayers (higher signaling). The TPMI is used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI is used to indicate a precoder to be applied in an SRS resource indicated through the SRI.

The precoder to be used for PUSCH transmission is selected from an uplink codebook having the same number of antenna ports as the value of nrofSRS-Ports inside SRS-Config (higher signaling). In connection with codebook-based PUSCH transmission, the UE determines a codebook subset, based on codebookSubset inside pusch-Config (higher signaling) and TPMI. The codebookSubset inside pusch-Config (higher signaling) may be configured to be one of "fullyAndPartialAndNonCoherent", "partialAndNonCoherent", or "noncoherent", based on UE capability reported by the UE to the base station. If the UE reported "partialAndNonCoherent'" as UE capability, the UE does not expect that the value of codebookSubset (higher signaling) will be configured as "fullyAndPartialAndNonCoherent". In addition, if the UE reported "nonCoherent" as UE capability, UE does not expect that the value of codebookSubset (higher signaling) will be configured as "fullyAndPartialAndNonCoherent" or "partialAndNonCoherent". If nrofSRS-Ports inside SRS-ResourceSet (higher signaling) indicates two SRS antenna ports, the UE does not expect that the value of codebookSubset (higher signaling) will be configured as "partialAndNonCoherent".

The UE may have one SRS resource set configured therefor, wherein the value of usage inside SRS-ResourceSet (higher signaling) is "codebook", and one SRS resource may be indicated through an SRI inside the corresponding SRS resource set. If multiple SRS resources are configured inside the SRS resource set wherein the value of usage inside SRS-ResourceSet (higher signaling) is "codebook", the UE expects that the value of nrofSRS-Ports inside SRS-Resource (higher signaling) is identical for all SRS resources.

The UE transmits, to the base station, one or multiple SRS resources included in the SRS resource set wherein the value of usage is configured as "codebook" according to higher signaling, and the base station selects one from the SRS resources transmitted by the UE and indicates the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be operated semi-statically by a configured grant. If at least one SRS resource is configured inside an SRS resource set wherein the value of usage inside SRS-ResourceSet (higher signaling) is "nonCodebook", non-codebook-based PUSCH transmission may be scheduled for the UE through DCI format 0_1.

With regard to the SRS resource set wherein the value of usage inside SRS-ResourceSet (higher signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (higher signaling) is "aperiodic", the connected NZP CSI-RS is indicated by an SRS request which is a field inside DCI format 0_1 or 1_1. If the connected NZP CSI-RS resource is an aperiodic NZP CSI-RS resource, the existence of the connected NZP CSI-RS is indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is located in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (higher signaling). With regard to non-codebook-based transmission, the UE does not expect that spatialRelationInfo which is higher signaling regarding the SRS resource and associatedCSI-RS inside SRS-ResourceSet (higher signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator(a field inside DCI) or configured through srs-ResourceIndicator (higher signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (higher signaling) is "nonCodebook", and a maximum of four SRS resources may be configured for non-codebook-based PUSCH transmission.

The base station transmits one NZP-CSI-RS connected to the SRS resource set to the UE, and the UE calculates the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is "nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE transmits the PUSCH by applying the precoder applied to SRS resource transmission to each layer.

[PUSCH: preparation procedure time]

Next, a PUSCH preparation procedure time will be described. If a base station schedules a UE so as to transmit a PUSCH by using DCI format 0_0, 0_1, or 0_2, the UE may require a PUSCH preparation procedure time such that a PUSCH is transmitted by applying a transmission method (SRS resource transmission precoding method, the number of transmission layers, spatial domain transmission filter) indicated through DCI. The PUSCH preparation procedure time is defined in NR in consideration thereof. The PUSCH preparation procedure time of the UE may follow Equation 2 given below.

[Equation 1]

$$T_{proc,2} = \max((N_2 + d_{2,1} + d_2)(2048 + 144)\kappa 2^{-\mu} T_c + T_{ext} + T_{switch}, d_{2,2})$$

Each parameter in $T_{proc,2}$ described above in Equation 1 may have the following meaning.

- $N_2$: the number of symbols determined according to UE processing capability 1 or 2, based on the UE's capability, and numerology $\mu$. $N_2$ may have a value in Table 40 if UE processing capability 1 is reported according to the UE's capability report, and may have a value in Table 41 if UE processing capability 2 is reported, and if availability of UE processing capability 2 is configured through upper layer signaling.

[Table 19]

| $\mu$ | PUSCH preparation time $N_2$ [symbols] |
|---|---|
| 0 | 10 |
| 1 | 12 |
| 2 | 23 |
| 3 | 36 |

[Table 20]

| $\mu$ | PUSCH preparation time $N_2$ [symbols] |
|---|---|
| 0 | 5 |
| 1 | 5.5 |
| 2 | 11 for frequency range 1 |

- $d_{2,1}$: the number of symbols determined to be 0 if all resource elements of the first OFDM symbol of PUSCH transmission include DM-RSs, and to be 1 otherwise.
- $\kappa$: 64

- μ: follows a value, among $\mu_{DL}$ and $\mu_{UL}$, which makes $T_{proc,2}$ larger. $\mu_{DL}$ refers to the numerology of a downlink used to transmit a PDCCH including DCI that schedules a PUSCH, and $\mu_{UL}$ refers to the numerology of an uplink used to transmit a PUSCH.
- $T_c$: has $1/(\Delta f_{max} \cdot N_f)$, $\Delta f_{max} = 480 \cdot 10^3$ *Hz*, $N_f = 4096$..
- $d_{2,2}$: follows a BWP switching time if DCI that schedules a PUSCH indicates BWP switching, and has 0 otherwise.
- $d_2$: if OFDM symbols overlap temporally between a PUSCH having a high priority index and a PUCCH having a low priority index, the $d_2$ value of the PUSCH having a high priority index is used. Otherwise, $d_2$ is 0.
- $T_{ext}$: if the UE uses a shared spectrum channel access scheme, the UE may calculate $T_{ext}$ and apply the same to a PUSCH preparation procedure time. Otherwise, $T_{ext}$ is assumed to be 0.
- $T_{switch}$: if an uplink switching spacing has been triggered, $T_{switch}$ is assumed to be the switching spacing time. Otherwise, $T_{switch}$ is assumed to be 0.

The base station and the UE determine that the PUSCH preparation procedure time is insufficient if the first symbol of a PUSCH starts earlier than the first uplink symbol in which a CP starts after Tproc,2 from the last symbol of a PDCCH including DCI that schedules the PUSCH, in view of the influence of timing advance between the uplink and the downlink and time domain resource mapping information of the PUSCH scheduled through the DCI. Otherwise, the base station and the UE determine that the PUSCH preparation procedure time is sufficient. The UE may transmit the PUSCH only if the PUSCH preparation procedure time is sufficient, and may ignore the DCI that schedules the PUSCH if the PUSCH preparation procedure time is insufficient.

[PUSCH: regarding repetition transmission]

Hereinafter, repetition transmission of an uplink data channel in a 5G system will be described in detail. A 5G system supports two types of uplink data channel repetition transmission methods, PUSCH repetition type A transmission and PUSCH repetition type B transmission. One of PUSCH repetition type A transmission and PUSCH repetition type B transmission may be configured for a UE through higher layer signaling.

1. PUSCH repetition type A transmission

As described above, the symbol length of an uplink data channel and the location of the start symbol may be determined by a time domain resource allocation method in one slot, and a base station may notify a UE of the number of repetition transmissions through higher layer signaling (for example, RRC signaling) or L1 signaling (for example, DCI).

- Based on the number of repetition transmissions received from the base station, the UE may repetitively transmit an uplink data channel having the same length and start symbol as the configured uplink data channel, in a continuous slot. If the base station configured a slot as a downlink for the UE, or if at least one of symbols of the uplink data channel configured for the UE is configured as a downlink, the UE omits uplink data channel transmission, but counts the number of repetition transmissions of the uplink data channel.

2. PUSCH repetition type B transmission

As described above, the symbol length of an uplink data channel and the location of the start symbol may be determined by a time domain resource allocation method in one slot, and a base station may notify a UE of the number of repetition transmissions through higher layer signaling (for example, RRC signaling) or L1 signaling (for example, DCI).

- The nominal repetition of the uplink data channel is determined as follows, based on the previously configured start symbol and length of the uplink data channel. The slot in which the $n^{th}$ nominal repetition starts is given by $K_s + \left\lfloor \frac{S+n\cdot L}{N_{symb}^{slot}} \right\rfloor$, and the symbol starting in that slot is given by $mod\left(S + n \cdot L, N_{symb}^{slot}\right)$. The slot in which the $n^{th}$ nominal repetition ends is given by $K_s + \left\lfloor \frac{S+(n+1)\cdot L-1}{N_{symb}^{slot}} \right\rfloor$, and the symbol ending in that slot is given by $mod\left(S + (n+1) \cdot L - 1, N_{symb}^{slot}\right)$. In this regard, n=0,..., numberofrepetitions-1, S refers to the start symbol of the configured uplink data channel, and L refers to the symbol length of the configured uplink data channel.

$K_S$ refers to the slot in which PUSCH transmission starts, and $N_{symb}^{slot}$ refers to the number of symbols per slot.

- The UE determines an invalid symbol for PUSCH repetition type B transmission. A symbol configured as a downlink by tdd-UL-DL-ConfigurationCommon or tdd-UL-DL-ConfigurationDedicated is determined as the invalid symbol for PUSCH repetition type B transmission. Additionally, the invalid symbol may be configured in an higher layer parameter (for example, InvalidSymbolPattern). The higher layer parameter (for example, InvalidSymbolPattern) may provide a symbol level bitmap across one or two slots, thereby configuring the invalid symbol. In the bitmap, 1 represents the invalid symbol. Additionally, the periodicity and pattern of the bitmap may be configured through the higher layer parameter (for example, InvalidSymbolPattern). If a higher layer parameter (for example, InvalidSymbolPattern) is configured, and if parameter InvalidSymbolPatternIndicator-ForDCIFormat0_1 or InvalidSymbolPatternIndicator-ForDCIFormat0_2 indicates 1, the UE applies an invalid symbol pattern, and if the above parameter indicates 0, the UE does not apply the invalid symbol pattern. If a higher layer parameter (for example, InvalidSymbolPattern) is configured, and if parameter InvalidSymbolPatternIndicator-ForDCIFormat0_1 or InvalidSymbolPatternIndicator-ForDCIFormat0_2 is not configured, the UE applies the invalid symbol pattern.

After an invalid symbol is determined, the UE may consider, with regard to each nominal repetition, that symbols other than the invalid symbol are valid symbols. If one or more valid symbols are included in each nominal repetition, the nominal repetition may include one or more actual repetitions. Each actual repetition includes a set of consecutive valid symbols available for PUSCH repetition type B transmission in one slot.

FIG. 7 illustrates an example of PUSCH repetition type B transmission in a wireless communication system according to an embodiment of the disclosure.

The UE may receive the following configurations: the start symbol S of an uplink data channel is 0, the length L of the uplink data channel is 14, and the number of repetition transmissions is 16. In this case, nominal repetitions appear in 16 consecutive slots (701). Thereafter, the UE may determine that the symbol configured as a downlink symbol in each nominal repetition 701 is an invalid symbol. The UE determines that symbols configured as 1 in the invalid symbol pattern 702 are invalid symbols. If valid symbols other than invalid symbols in respective nominal repetitions constitute one or more consecutive symbols in one slot, they are configured and transmitted as actual repetitions (703).

In addition, with regard to PUSCH repeated transmission, additional methods may be defined in NR Release 16 with regard to UL grant-based PUSCH transmission and configured grant-based PUSCH transmission, across slot boundaries, as follows:

- Method 1 (mini-slot level repetition): through one UL grant, two or more PUSCH repetition transmissions are scheduled inside one slot or across the boundary of consecutive slots. In connection with method 1, time domain resource allocation information inside DCI indicates resources of the first repetition transmission. In addition, time domain resource information of remaining repetition transmissions may be determined according to time domain resource information of the first repetition transmission, and the uplink or downlink direction determined with regard to each symbol of each slot. Each repetition transmission occupies consecutive symbols.
- Method 2 (multi-segment transmission): through one UL grant, two or more PUSCH repetition transmissions are scheduled in consecutive slots. Transmission no. 1 is designated for each slot, and the start point or repetition length differs between respective transmissions. In method 2, time domain resource allocation information inside DCI indicates the start point and repetition length of all repetition transmissions. In the case of performing repetition transmissions inside a single slot through method 2, if there are multiple bundles of consecutive uplink symbols in the corresponding slot, respective repetition transmissions may be performed with regard to respective uplink symbol bundles. If there is a single bundle of consecutive uplink symbols in the corresponding slot, PUSCH repetition transmission is performed once according to the method of NR Release 15.
- Method 3: two or more PUSCH repetition transmissions are scheduled in consecutive slots through two or more UL grants. Transmission no. 1 may be designated with regard to each slot, and the nth UL grant may be received before PUSCH transmission scheduled by the (n-1)th UL grant is over.
- Method 4: through one UL grant or one configured grant, one or multiple PUSCH repetition transmissions inside a single slot, or two or more PUSCH repetition transmissions across the boundary of consecutive slots may be supported. The number of repetitions indicated to the UE by the base station is only a nominal value, and the UE may actually perform a larger number of PUSCH repetition transmissions than the nominal number of repetitions. Time domain resource allocation information inside DCI or configured grant refers to resources of the first repetition transmission indicated by the base station. Time domain resource information of remaining repetition transmissions may be determined with reference to resource information of the first repetition transmission and the uplink or downlink direction of symbols. If time domain resource information of repetition transmission indicated by the base station spans a slot boundary or includes an uplink/downlink switching point, the corresponding repetition transmission may be divided into multiple repeated transmissions. One repetition transmission may be included in one slot with regard to each uplink period.

[PUSCH: frequency hopping process]

Hereinafter, frequency hopping of a physical uplink shared channel (PUSCH) in a 5G system will be described in detail.

5G supports two kinds of PUSCH frequency hopping methods with regard to each PUSCH repeated transmission type. First of all, in PUSCH repeated transmission type A, intra-slot frequency hopping and inter-slot frequency hopping are supported, and in PUSCH repeated transmission type B, inter-repetition frequency hopping and inter-slot frequency hopping are supported.

The intra-slot frequency hopping method supported in PUSCH repetition type A transmission may include a method in which a UE transmits allocated resources in the frequency domain, after changing the same by a configured frequency offset, by two hops in one slot. The start RB of each hop in connection with intra-slot frequency hopping may be expressed by Equation 2 below.

[Equation 2]

$$RB_{start} = \begin{cases} RB_{start} & i = 0 \\ \left(RB_{start} + RB_{offset}\right) mod N_{BWP}^{size} & i = 1 \end{cases}$$

In Equation 2, i=0 and i=1 may denote the first and second hops, respectively, and $RB_{start}$ may denote the start RB in a UL BWP and may be calculated from a frequency resource allocation method. $RB_{offset}$ denotes a frequency offset between two hops through an upper layer parameter. The number of symbols of the first hop may be represented by $\lfloor N_{symb}^{PUSCH,s} / 2 \rfloor$, and number of symbols of the second hop may be represented by $N_{symb}^{PUSCH,s} - \lfloor N_{symb}^{PUSCH,s} / 2 \rfloor$. $N_{symb}^{PUSCH,s}$ is the length of PUSCH transmission in one slot and is expressed by the number of OFDM symbols.

Next, the inter-slot frequency hopping method supported in PUSCH repetition type A and type B transmissions is a method in which the UE transmits allocated resources in the frequency domain, after changing the same by a configured frequency offset, in each slot. The start RB during a slot in connection with inter-slot frequency hopping may be expressed by Equation 3 below.

[Equation 3]

$$RB_{start}(n_s^{\mu}) = \begin{cases} RB_{start} & n_s^{\mu} mod 2 = 0 \\ \left(RB_{start} + RB_{offset}\right) mod N_{BWP}^{size} & n_s^{\mu} mod 2 = 1 \end{cases}$$

In Equation 3, $n_s^{\mu}$ denotes the current slot number during multi-slot PUSCH transmission, and $RB_{start}$ denotes the start RB inside a UL BWP and is calculated from a frequency resource allocation method. $RB_{offset}$ denotes a frequency offset between two hops through an upper layer parameter.

The inter-repetition frequency hopping method supported in PUSCH repeated transmission type B is a method in which resources allocated in the frequency domain regarding one or multiple actual repetitions in each nominal repetition are moved by a configured frequency offset and then transmitted. The index $RB_{start(n)}$ of the start RB in the frequency domain regarding one or multiple actual repetitions in the nth nominal repetition may follow Equation 4 given below.

[Equation 4]

$$RB_{start}(n) = \begin{cases} RB_{start} & n mod 2 = 0 \\ \left(RB_{start} + RB_{offset}\right) mod N_{BWP}^{size} & n mod 2 = 1 \end{cases}$$

In Equation 4, n denotes the index of nominal repetition, and $RB_{offset}$ denotes an RB offset between two hops through an upper layer parameter.

[Related to PUSCH transmission power]

Hereinafter, a method of determining the transmission power of an uplink data channel in a 5G system will be described in detail.

In a 5G system, the transmission power of an uplink data channel may be determined through [Equation 5] as follows.

[Equation 5]

$$P_{\mathrm{PUSCH},b,f,c}(i,j,q_d,l) = \min\left\{\begin{matrix} P_{\mathrm{CMAX},f,c}(i), \\ P_{\mathrm{O_PUSCH},b,f,c}(j) + 10log_{10}\left(2^{\mu} * M_{\mathrm{RB},b,f,c}^{\mathrm{PUSCH}}(i)\right) + \alpha_{b,f,c}(j)\cdot PL_{b,f,c}(q_d) + \Delta_{\mathrm{TF},b,f,c}(i) + f_{b,f,c}(i,l) \end{matrix}\right\} \text{[dBm]}$$

In [Equation 5], j denotes the grant type of a PUSCH. Specifically, j=0 indicates a PUSCH grant for a random access response, j=1 indicates a configured grant, and j ∈ {2,3,...J-1} indicates a dynamic grant. $P_{CMAX,f,c}(i)$ denotes a maximum output power configured for a UE at a carrier f of a supported cell c for PUSCH transmission occasion i. $P_{0_PUSCH,b,f,c}(j)$ is a parameter configured by the sum of $P_{0_NOMINAL_PUSCH,f,c}(j)$ configured as a higher layer parameter and $P_{0_UE_PUSCH,b,f,c}(j)$ which may be determined through a higher layer configuration and an SRI (in a case of a dynamic grant PUSCH). $M_{\mathrm{RB},b,f,c}^{\mathrm{PUSCH}}(i)$ denotes a bandwidth for resource allocation represented by the number of resource blocks for PUSCH transmission occasion i, and $\Delta_{TF,b,f,c}(i)$ denotes a value determined according to a modulation coding scheme (MCS) and the type (e.g., whether UL-SCH is included or CSI is included) of information transmitted through a PUSCH. $\alpha_{b,f,c}(j)$ is a value for compensating for a pathloss, and indicates a value that may be determined through a higher layer configuration and an SRS resource indicator (SRI) (in a case of a dynamic grant PUSCH). $PL_{b,f,c}(q_d)$ denotes a downlink path loss estimation estimated by a UE through a reference signal having a reference signal index of $q_d$, and the reference signal index $q_d$ may be determined by a UE through a higher layer configuration and an SRI (in a case of a dynamic grant PUSCH or a configured grant PUSCH (type 2 configured grant PUSCH) based on ConfiguredGrantConfig not including the higher layer configuration rrc-ConfiguredUplinkGrant) or through a higher layer configuration. $f_{b,f,c}(i, l)$ is a closed loop power control value and may be supported in an accumulation scheme and an absolute scheme. If the higher layer parameter tpc-Accumulation is not configured for a UE, a closed loop power control value may be determined in the accumulation scheme. $f_{b,f,c}(i, l)$ is determined by $f_{b,f,c}(i - i_0, l) + \sum_{m=0}^{c(D_i)-1} \delta_{\mathrm{PUSCH},b,f,c}(m,l)$ that indicates a sum of a closed loop power control value of the previous PUSCH transmission occasion $i-i_0$ and TPC command values for closed loop index l received through DCI between a symbol located $K_{PUSCH}(i-i_0)-1$ symbols before transmission of PUSCH transmission occasion $i-i_0$ and a symbol located $K_{PUSCH}(i)$ symbols before transmission of PUSCH transmission occasion i. If the higher layer parameter tpc-Accumulation is configured for a UE, $f_{b,f,c}(i, l)$ is determined as $\delta_{PUSCH,b,f,c}(i, l)$ that indicates a TPC command value for closed loop index l received through DCI. Closed loop index 1 may be configured to be 0 or 1 if the higher layer parameter twoPUSCH-PC-AdjustmentStates is configured for a UE, and the value thereof may be determined through a higher layer configuration and an SRI (in a case of a dynamic grant PUSCH). The mapping relation between a TPC command field in DCI and a TPC value $\delta_{PUSCH,b,f,c}$ according to the accumulation scheme and the absolute scheme may be defined as shown in [Table 21] as below.

[Table 21]

| TPC command field | Accumulated $\delta_{PUSCH,b,f,c}$[dB] | Absolute $\delta_{PUSCH,b,f,c}$[dB] |
|---|---|---|
| 0 | -1 | -4 |
| 1 | 0 | -1 |
| 2 | 1 | 1 |
| 3 | 3 | 4 |

[Regarding SRS]

Next, an uplink channel estimation method using sounding reference signal (SRS) transmission of a UE will be described. The base station may configure at least one SRS configuration with regard to each uplink BWP in order to transfer configuration information for SRS transmission to the UE, and may also configure as least one SRS resource set with regard to each SRS configuration. As an example, the base station and the UE may exchange higher signaling information as follows, in order to transfer information regarding the SRS resource set.

- srs-ResourceSetId: an SRS resource set index
- srs-ResourceIdList: a set of SRS resource indices referred to by SRS resource sets
- resourceType: time domain transmission configuration of SRS resources referred to by SRS resource sets, and may be configured as one of "periodic", "semi-persistent", and "aperiodic". If configured as "periodic" or "semi-persistent", associated CSI-RS information may be provided according to the place of use of SRS resource sets. If configured as "aperiodic", an aperiodic SRS resource trigger list/slot offset information may be provided, and associated CSI-RS information may be provided according to the place of use of SRS resource sets.
- usage: a configuration regarding the place of use of SRS resources referred to by SRS resource sets, and may be configured as one of "beamManagement", "codebook", "nonCodebook", and "antennaSwitching".
- alpha, p0, pathlossReferenceRS, srs-PowerControlAdjustmentStates: provides a parameter configuration for adjusting the transmission power of SRS resources referred to by SRS resource sets.

The UE may understand that an SRS resource included in a set of SRS resource indices referred to by an SRS resource set follows the information configured for the SRS resource set.

In addition, the base station and the UE may transmit/receive higher layer signaling information in order to transfer individual configuration information regarding SRS resources. As an example, the individual configuration information regarding SRS resources may include time-frequency domain mapping information inside slots of the SRS resources, and this may include information regarding intra-slot or inter-slot frequency hopping of the SRS resources. The individual configuration information regarding SRS resources may include time domain transmission configuration of SRS resources, and may be configured as one of "periodic", "semi-persistent", and "aperiodic". The time domain transmission configuration of SRS resources may be limited to have the same time domain transmission configuration as the SRS resource set including the SRS resources. If the time domain transmission configuration of SRS resources is configured as "periodic" or "semi-persistent", the time domain transmission configuration may further include an SRS resource transmission cycle and a slot offset (for example, periodicityAndOffset).

The base station may activate or deactivate SRS transmission for the UE through higher layer signaling including RRC signaling or MAC CE signaling, or L1 signaling (for example, DCI). For example, the base station may activate or deactivate periodic SRS transmission for the UE through higher layer signaling. The base station may indicate activation of an SRS resource set having resourceType configured as "periodic" through higher layer signaling, and the UE may transmit the SRS resource referred to by the activated SRS resource set. Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the periodic SRS resource activated through higher layer signaling.

For example, the base station may activate or deactivate semi-persistent SRS transmission for the UE through higher layer signaling. The base station may indicate activation of an SRS resource set through MAC CE signaling, and the UE may transmit the SRS resource referred to by the activated SRS resource set. The SRS resource set activated through MAC CE signaling may be limited to an SRS resource set having resourceType configured as "semi-persistent". Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. If the SRS resource has spatial relation info configured therefor, the spatial domain transmission filter may be determined, without following the same, by referring to configuration information regarding spatial relation info transferred through MAC CE signaling that activates semi-persistent SRS transmission. The UE may transmit the SRS resource inside the uplink BWP activated with regard to the semi-persistent SRS resource activated through higher layer signaling.

For example, the base station may trigger aperiodic SRS transmission by the UE through DCI. The base station may indicate one of aperiodic SRS triggers (aperiodicSRS-ResourceTrigger) through the SRS request field of DCI. The UE may understand that the SRS resource set including the aperiodic SRS resource trigger indicated through DCI in the aperiodic SRS resource trigger list, among configuration information of the SRS resource set, has been triggered. The UE may transmit the SRS resource referred to by the triggered SRS resource set. Intra-slot time-frequency domain resource mapping of the transmitted SRS resource follows resource mapping information configured for the SRS resource. In addition, slot mapping of the transmitted SRS resource may be determined by the slot offset between the SRS resource and a PDCCH including DCI, and this may refer to value(s) included in the slot offset set configured for the SRS resource set. Specifically, as the slot offset between the SRS resource and the PDCCH including DCI, a value indicated in the time domain resource assignment field of DCI, among offset value(s) included in the slot offset set configured for the SRS resource set, may be applied. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the aperiodic SRS resource triggered through DCI.

If the base station triggers aperiodic SRS transmission by the UE through DCI, a minimum time interval may be necessary between the transmitted SRS and the PDCCH including the DCI that triggers aperiodic SRS transmission, in order for the UE to transmit the SRS by applying configuration information regarding the SRS resource. The time interval for SRS transmission by the UE may be defined as the number of symbols between the last symbol of the PDCCH including the DCI that triggers aperiodic SRS transmission and the first symbol mapped to the first transmitted SRS resource among transmitted SRS resource(s). The minimum time interval may be determined with reference to the PUSCH preparation procedure time needed by the UE to prepare PUSCH transmission. The minimum time interval may have a different value depending on the place of use of the SRS resource set including the transmitted SRS resource. For example, the minimum time interval may be determined as N2 symbols defined in consideration of UE processing capability that follows the UE's capability with reference to the UE's PUSCH preparation procedure time. In addition, if the place of use of the SRS resource set is configured as "codebook" or "antennaSwitching" in view of the place of use of the SRS resource set including the transmitted SRS resource, the minimum time interval may be determined as N2 symbols, and if the place of use of the SRS resource set is configured as "nonCodebook" or "'beamManagement", the minimum time interval may be determined as N2+14 symbols. The UE may transmit an aperiodic SRS if the time interval for aperiodic SRS transmission is larger than or equal to the minimum time interval, and may ignore the DCI that triggers the aperiodic SRS if the time interval for aperiodic SRS transmission is smaller than the minimum time interval.

[Table 22]

```
SRS-Resource ::=                          SEQUENCE {
    srs-ResourceId                          ,
    nrofSRS-Ports                           ENUMERATED {port1, ports2, ports4},
    ptrs-PortIndex                          ENUMERATED {n0, n1 }
 OPTIONAL,    -- Need R
    transmissionComb                        CHOICE {
        n2                                      SEQUENCE {
            combOffset-n2                           INTEGER (0..1),
            cyclicShift-n2                          INTEGER (0..7)
        },
        n4                                      SEQUENCE {
            combOffset-n4                           INTEGER (0..3),
            cyclicShift-n4                          INTEGER (0..11)
        }
    },
    resourceMapping                         SEQUENCE {
        startPosition                           INTEGER (0..5),
        nrofSymbols                             ENUMERATED {n1, n2, n4},
        repetitionFactor                        ENUMERATED {n1, n2, n4}
    },
    freqDomainPosition                      INTEGER (0..67),
    freqDomainShift                         INTEGER (0..268),
    freqHopping                             SEQUENCE {
        c-SRS                                   INTEGER (0..63),
        b-SRS                                   INTEGER (0..3),
        b-hop                                   INTEGER (0..3)
    },
    groupOrSequenceHopping          ENUMERATED { neither, groupHopping, quenceHopping },
    resourceType                            CHOICE {
        aperiodic                               SEQUENCE {
            ...
        },
        semi-persistent                         SEQUENCE {
            periodicityAndOffset-sp                 SRS-PeriodicityAndOffset,
            ...
        },
        periodic                                SEQUENCE {
            periodicityAndOffset-p                  SRS-PeriodicityAndOffset,
            ...
        }
    },
    sequenceId                              INTEGER (0..1023),
    spatialRelationInfo                     SRS-SpatialRelationInfo
 OPTIONAL,    -- Need R
    ...
}
```

Configuration information spatialRelationInfo in Table 22 above is applied, with reference to one reference signal, to a beam used for SRS transmission corresponding to beam information of the corresponding reference signal. For example, configuration of spatialRelationInfo may include information as in Table 23 below.

[Table 23]

```
SRS-SpatialRelationInfo ::=      SEQUENCE {
    servingCellId               ServCellIndex           OPTIONAL,    -- Need S
    referenceSignal                     CHOICE {
        ssb-Index                               SSB-Index,
        csi-RS-Index                            NZP-CSI-RS-ResourceId,
```

```
        srs                                         SEQUENCE {
            resourceId                                  SRS-ResourceId,
            uplinkBWP                                     BWP-Id
        }
    }
}
```

Referring to the spatialRelationInfo configuration, an SS/PBCH block index, CSI-RS index, or SRS index may be configured as the index of a reference signal to be referred to in order to use beam information of a specific reference signal. Higher signaling referenceSignal corresponds to configuration information indicating which reference signal's beam information is to be referred to for corresponding SRS transmission, ssb-Index refers to the index of an SS/PBCH block, csi-RS-Index refers to the index of a CSI-RS, and srs refers to the index of an SRS. If higher signaling referenceSignal has a configured value of "ssb-Index", the UE may apply the reception beam which was used to receive the SS/PBCH block corresponding to ssb-Index as the transmission beam for the corresponding SRS transmission. If higher signaling referenceSignal has a configured value of "'csi-RS-Index", the UE may apply the reception beam which was used to receive the CSI-RS corresponding to csi-RS-Index as the transmission beam for the corresponding SRS transmission. If higher signaling referenceSignal has a configured value of "'srs", the UE may apply the reception beam which was used to transmit the SRS corresponding to srs as the transmission beam for the corresponding SRS transmission.

[Related to uplink PTRS]

The higher layer parameter phaseTrackingRS for a PTRS may be configured for a UE on the higher layer parameter DMRS-UplinkConfig. When the UE transmits a PUSCH to a base station, the UE may transmit a phase tracking reference signal (PTRS) for phase tracking for an uplink channel. A procedure of transmitting a UL PTRS by the UE may be determined according to whether transform precoding is performed at the time of PUSCH transmission. In a case where transform precoding is performed and a transformPrecoderEnabled area is configured in the higher layer parameter PTRS-UplinkConfig, sampleDensity in the transformPrecoderEnabled area may indicate a sample density threshold represented by NRB0 to NRB4 in the following table. In a case where transform precoding is performed and a transformPrecoderEnabled area is configured in the higher layer parameter PTRS-UplinkConfig, the UE may determine a PT-RS group pattern for a scheduled resource NRB according to [Table 24]. If a transform precoder is additionally applied to PUSCH transmission, the number of bits of a PTRS-DMRS association area for indicating the association between a PTRS and a DMRS in DCI format 0_1 or 0_2 may be 0.

[Table 24]

| Scheduled bandwidth | Number of PT-RS groups | Number of samples per PT-RS group |
|---|---|---|
| $N_{RB0} \leq N_{RB} < N_{RB1}$ | 2 | 2 |
| $N_{RB1} \leq N_{RB} < N_{RB2}$ | 2 | 4 |
| $N_{RB2} \leq N_{RB} < N_{RB3}$ | 4 | 2 |
| $N_{RB3} \leq N_{RB} < N_{RB4}$ | 4 | 4 |
| $N_{RB4} \leq N_{RB}$ | 8 | 4 |

In a case where transform precoding is not applied to PUSCH transmission and the higher layer parameter phaseTrackingRS is configured, the UE may identify that frequencyDensity in a transformPrecoderDisabled area in the higher layer parameter PTRS-UplinkConfig indicates NRB0 to NRB1 and timeDensity indicates ptrs-MCS1 to ptrs-MCS3. The UE may determine a PT-RS density of a time domain (LPT-RS) and a PT-RS density (KPT-RS) of a frequency domain, as shown in [Table 25] and [Table 26] according to an MCS (IMCS) and an RB (NRB) of a scheduled PUSCH. In [Table 25], ptrs-MCS4 is not specified by a higher layer parameter, but the base station and the UE may know that ptrs-MCS4 is 29 or 28 according to a configured MCS table.

[Table 25]

| Scheduled MCS | Time Density ($L_{PT-RS}$) |
|---|---|
| $I_{MCS}$ < ptrs-$MCS_1$ | PT-RS is not present |
| ptrs-$MCS_1 \leq I_{MCS}$ < ptrs-$MCS_2$ | 4 |
| ptrs-$MCS_2 \leq I_{MCS}$ < ptrs-$MCS_3$ | 2 |
| ptrs-$MCS_3 \leq I_{MCS}$ < ptrs-$MCS_4$ | 1 |

[Table 26]

| Scheduled bandwidth | Frequency density ($K_{PT-RS}$) |
|---|---|
| $N_{RB} < N_{RB0}$ | PT-RS is not present |
| $N_{RB0} \leq NRB < N_{RB1}$ | 2 |
| $N_{RB1} \leq NRB$ | 4 |

In a case where a transform precoder is not applied to PUSCH transmission and PTRS-UplinkConfig is configured, the base station may indicate, to the UE, an "PTRS-DMRS association" area of 2 bits to indicate a PTRS-DMRS association in DCI format 0_1 or 0_2. The indicated PTRS-DMRS association area of 2 bits may be applied to [Table 27] or [Table 28] below according to a maximum number of ports of a PTRS configured by maxNrofPorts in the higher layer parameter PTRS-UplinkConfig. If the maximum number of PTRS ports is 1, the UE may determine a PTRS-DMRS association through [Table 27] and 2 bits indicated as the PTRS-DMRS association area, and transmit a PTRS according to the determined association. If the maximum number of PTRS ports is 2, the UE may determine a PTRS-DMRS association through [Table 28] and 2 bits indicated as the PTRS-DMRS association area, and transmit a PTRS according to the determined association.

[Table 27]

| Value | DMRS port |
|---|---|
| 0 | 1st scheduled DMRS port |
| 1 | 2nd scheduled DMRS port |
| 2 | 3rd scheduled DMRS port |
| 3 | 4th scheduled DMRS port |

[Table 28]

| Value of MSB | DMRS port | Value of LSB | DMRS port |
|---|---|---|---|
| 0 | 1st DMRS port which shares PTRS port 0 | 0 | 1st DMRS port which shares PTRS port 1 |
| 1 | 2nd DMRS port which shares PTRS port 0 | 1 | 2nd DMRS port which shares PTRS port 1 |

A DMRS port shown in [Table 27] and [Table 28] may be determined through a table determined by a higher layer parameter configuration and an "antenna ports" area indicated by the same DCI as DCI indicating a PTRS-DMRS association. In a case where a transform precoder is not configured by a higher configuration of a PUSCH, dmrs-Type and maxLength are configured to be 1 and 2 for a DMRS, respectively, and the rank of the PUSCH is 2, the UE may determine a DMRS port through a bit indicated as an antenna ports area and a table for "antenna port(s)" as shown in [Table 29]. In a case where a noncodebook-based PUSCH is supported, the UE may determine a rank value by referring to an SRI area indicated by the same DCI as DCI including an "antenna ports" area (i.e., if there is no SRI area, the rank may be considered as 1). In a case where a codebook-based PUSCH is supported, the UE may determine a rank value by referring to a TPMI area indicated by the same DCI as DCI including an "antenna ports" area. [Table 29] is an example of an antenna port table referred at the time of PUSCH configuration described above, and if a PUSCH is configured by a different parameter, a DMRS port may be determined according to an antenna port table corresponding to the configuration and the bits of an antenna ports area indicated by DCI.

[Table 29]

| Value | Number of DMRS CDM group(s) without data | DMRS port(s) | Number of front-load symbols |
|---|---|---|---|
| 0 | 1 | 0,1 | 1 |
| 1 | 2 | 0,1 | 1 |
| 2 | 2 | 2,3 | 1 |
| 3 | 2 | 0,2 | 1 |
| 4 | 2 | 0,1 | 2 |
| 5 | 2 | 2,3 | 2 |
| 6 | 2 | 4,5 | 2 |
| 7 | 2 | 6,7 | 2 |
| 8 | 2 | 0,4 | 2 |
| 9 | 2 | 2,6 | 2 |
| 10-15 | Reserved | Reserved | Reserved |

The 1st scheduled DMRS to 4th scheduled DMRS in [Table 27] may be defined as values obtained by sequentially mapping DMRS ports indicated by the bits of an antenna ports area of DCI and an antenna port table corresponding to a higher layer configuration. For example, if the bits of an antenna ports area of DCI is 0001 and a DMRS port is determined referring to [Table 29] above, scheduled DMRS ports may be 0 and 1, DMRS port 0 may be defined as the 1st scheduled DMRS, and DMRS port 1 may be defined as the 2nd scheduled DMRS. A DMRS port determined by the bits of another antenna ports area and an antenna port table corresponding to another higher layer configuration may also be similarly applied. The UE may determine one DMRS port to be associated with a PTRS port by referring to a bit indicated as a PTRS-DMRS association in DCI among DMRS ports defined as described above, and transmits a PTRS according to the determined DMRS port.

In [Table 28], a DMRS port sharing PTRS port 0 and a DMRS port sharing PTRS port 1 may be defined according to codebook-based PUSCH transmission or non-codebook-based PUSCH transmission. If the UE transmits a PUSCH, based on a partial-coherent or non-coherent codebook, an uplink layer transmitted through PUSCH antenna ports 1000 and 1002 is associated with PTRS port 0, and an uplink layer transmitted through PUSCH antenna ports 1001 and 1003 is associated with PTRS port 1. In a more specific example, if layer-3: TPMI = 2 is selected for codebook-based PUSCH transmission, the first layer is associated with PTRS port 0 because the first layer is transmitted through PUSCH antenna ports 1000 and 1002, and the second layer and the third layer are associated with PTRS port 1 because the second layer is transmitted through PUSCH antenna port 1001 and the third layer is transmitted through PUSCH antenna port 1002. The three layers indicate DMRS ports, respectively, a DMRS port for the first layer corresponds to "1st DMRS port which shares PTRS port 0" in [Table 28], a DMRS port for the second layer corresponds to "1st DMRS port which shares PTRS port 1" in [Table 28], and a DMRS port for the third layer corresponds to "2nd DMRS port which shares PTRS port 1" in [Table 28]. Similarly, a DMRS port associated with PTRS port 0 and a DMRS port associated with PTRS port 1 may be determined according to a different number of layers and a different TPMI. If the UE transmits a PUSCH, based on a non-codebook, a DMRS port associated with PTRS port 0 and a DMRS port associated with PTRS port 1 may be distinguished according to antenna ports and an SRI indicated by DCI. More specifically, an SRS resource included in an SRS resource set having "nonCodebook" as usage may be configured to be associated with PTRS port 0 or PTRS port 1, through the higher layer parameter ptrs-PortIndex. The base station indicates SRS resources for transmitting a non-codebook-based PUSCH, by using an SRI. Ports of the indicated SRS resources are mapped to PUSCH DMRS ports in one-to-one correspondence, respectively. An association between a PUSCH DMRS port and a PTRS port is determined according to ptrs-PortIndex that is a higher layer parameter of an SRS resource mapped to the DMRS port. In a more specific example, it is assumed that n0, n0, n1, and n1 have been configured as ptrs-PortIndex for SRS resources 1 to 4 included in an SRS resource set having nonCodebook as usage. In addition, it is assumed that a PUSCH has been indicated through an SRI to be transmitted through SRS resources 1, 2, and 4, and DMRS ports 0, 1, and 2 have been indicated as an antenna ports area. The ports of SRS resources 1, 2, and 4 are mapped to DMRS ports 0, 1, and 2, respectively. DMRS ports 0 and 1 are associated with PTRS port 0 and DMRS port 2 is associated with PTRS port 1 according to ptrs-PortIndex in an SRS resource. Therefore, in [Table 28], DMRS port 0 corresponds to "1st DMRS port which shares PTRS port 0," DMRS port 1 corresponds to "2nd DMRS port which shares PTRS port 0," and DMRS port 2 corresponds to "1st DMRS port which shares PTRS port 1." Similarly, a DMRS port associated with PTRS port 0 and a DMRS port associated with PTRS port 1 may be determined according to a different pattern of method of configuring ptrs-PortIndex in an SRS resource and a different SRI value. The UE may determine, for two PTRS ports, an association between a DMRS port and a PTRS port as described above. Thereafter, the UE determines a DMRS port, among multiple DMRS ports associated with each PTRS port, to be associated with PTRS port 0 by referring to an MSB bit of a PTRS-DMRS association and determines a DMRS port to be associated with PTRS port 1 by referring to an LSB bit, to transmit a PTRS.

[Regarding UE capability report]

In LTE and NR, a UE may perform a procedure in which, while being connected to a serving base station, the UE may report capability supported by the UE to the corresponding base station. In the following description, the above-described procedure will be referred to as a UE capability report.

The base station may transfer a UE capability enquiry message to the UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times. In next-generation mobile communication systems, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

Upon receiving the UE capability report request from the base station in the above step, the UE configures UE capability according to band information and RAT type requested by the base station. The method in which the UE configures UE capability in an NR system is summarized below.

1. If the UE receives a list regarding LTE and/or NR bands from the base station at a UE capability request, the UE constructs band combinations (BCs) regarding EN-DC and NR standalone (SA). That is, the UE configures a candidate list of BCs regarding EN-DC and NR SA, based on bands received from the base station at a request through FreqBandList. Bands have priority in the order described in FreqBandList.
2. If the base station sets "eutra-nr-only" flag or "eutra" flag and requests a UE capability report, the UE removes everything related to NR SA BCs from the configured BC candidate list. Such an operation may occur only if an LTE base station (eNB) requests "eutra" capability.
3. The UE then removes fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same may be omitted. This step is applied in MR-DC as well, that is, LTE bands are also applied. BCs remaining after the above step constitute the final "candidate BC list".
4. The UE may select BCs appropriate for the requested RAT type from the final "candidate BC list" and select BCs to report. In this step, the UE configures supportedBandCombinationList in a determined order. That is, the UE configures BCs and UE capability to report according to a preconfigured rat-Type order. (nr -> eutra-nr -> eutra). In addition, the UE configures featureSetCombination regarding the configured supportedBandCombinationList and configures a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be acquired from feature set combinations of containers of UE-NR-Capabilities and UE-MRDC-Capabilities.
5. If the requested RAT type is eutra-nr and has an influence, featureSetCombinations is included on both containers of UE-MRDC-Capabilities and UE-NR-Capabilities. However, the feature set of NR is included only in UE-NR-Capabilities.

After the UE capability is configured, the UE transfers a UE capability information message including the UE capability to the base station. The base station performs scheduling and transmission/reception management appropriate for the UE, based on the UE capability received from the UE.

[Regarding NC-JT]

According to an embodiment of the disclosure, in order to receive a PDSCH from a plurality of TRPs, the UE may use non-coherent joint transmission (NC-JT).

Unlike the conventional system, the 5G wireless communication system may support not only a service requiring a high transmission rate, but also a service having a very short transmission delay and a service requiring a high connection density. In a wireless communication network including multiple cells, transmission and reception points (TRPs), or beams, cooperative communication (coordinated transmission) between the respective cells, TRPs, or/and beams may satisfy various service requirements by enhancing the strength of a signal received by a UE or efficiently performing interference control between the respective cells, TRPs, or/and beams.

Joint transmission (JT) is a representative transmission scheme for the aforementioned cooperative communication, and is a scheme for increasing the strength or throughput of a signal received by a UE, by transmitting the signal to one UE via multiple different cells, TRPs, and/or beams. In this case, channels between the UE and the respective cells, TRPs, and/or beams may have significantly different characteristics, and in particular, non-coherent joint transmission (NC-JT) supporting non-coherent precoding between the respective cells, TRPs, and/or beams may require individual precoding, MCS, resource allocation, TCI indication, etc. according to a channel characteristic for each link between the UE and the respective cells, TRPs, and/or beams.

The above-described NC-JT transmission may be applied to at least one of a downlink data channel (PDSCH), a downlink control channel (PDCCH), an uplink data channel (PUSCH), and an uplink control channel (PUCCH). During PDSCH transmission, transmission information such as precoding, MCS, resource allocation, and TCI may be indicated through DL DCI, and should be independently indicated for each cell, TRP, and/or beam for the NC-JT. This is a significant factor that increases payload required for DL DCI transmission, which may have a bad influence on reception performance of a PDCCH for transmitting the DCI. Accordingly, in order to support JT of the PDSCH, carefully designing a tradeoff between an amount of DCI information and reception performance of control information is required.

FIG. 8 illustrates an example of an antenna port configuration and resource allocation for PDSCH transmission using cooperative communication in the wireless communication system according to an embodiment of the disclosure.

Referring to FIG. 8, an example for PDSCH transmission is described for each joint transmission (JT) technique, and an example for radio resource allocation is illustrated for each TRP.

Referring to FIG. 8, an example 800 of coherent joint transmission (C-JT) supporting coherent precoding between respective cells, TRPs, and/or beams is illustrated.

In the case of C-JT, TRP A 805 and TRP B 810 may transmit single data (PDSCH) to a UE 815 and multiple TRPs may perform joint precoding. This may mean that DMRSs are transmitted via the same DMRS ports in order for TRP A 805 and TRP B 810 to transmit the same PDSCH. For example, TRP A 805 and TRP B 810 each may transmit DMRSs to the UE via DMRS port A and DMRS port B. In this case, the UE may receive one piece of DCI information for receiving one PDSCH demodulated based on the DMRSs transmitted through the DMRS port A and the DMRS port B.

FIG. 8 illustrates an example 820 of non-coherent joint transmission (NC-JT) supporting non-coherent precoding between respective cells, TRPs, or/and beams for PDSCH transmission.

In the case of NC-JT, for respective cells, TPRs, and/or beams, PDSCHs may be transmitted to a UE 835, and individual precoding may be applied to the respective PDSCHs. The respective cells, TRPs, and/or beams may transmit different PDSCHs or different PDSCH layers to the UE, thereby improving throughput as compared to single cell, TRP, and/or beam transmission. Furthermore, the respective cells, TRPs, and/or beams may repeatedly transmit the same PDSCH to the UE, thereby improving reliability as compared to single cell, TRP, and/or beam transmission. For the sake of descriptive convenience, a cell, a TRP, and/or a beam may be collectively referred to as a TRP.

In this case, various wireless resource allocations such as the case 840 in which frequency and time resources used by a plurality of TRPs for PDSCH transmission are all the same, the case 845 in which frequency and time resources used by a plurality of TRPs do not overlap at all, and the case 850 in which some of the frequency and time resources used by a plurality of TRPs overlap each other may be considered.

In order to support NC-JT, DCIs in various forms, structures, and relations may be considered to simultaneously allocate a plurality of PDSCHs to one UE.

FIG. 9 illustrates an example of a downlink control information (DCI) configuration for NC-JT in which respective TRPs transmit different PDSCHs or different PDSCH layers to a UE in a wireless communication system according to an embodiment of the disclosure.

Referring to FIG. 9, case #1 900 is an example in which control information for PDSCHs transmitted from (N-1) additional TRPs is transmitted independently from control information for a PDSCH transmitted from a serving TRP in a situation in which (N-1) different PDSCHs are transmitted from the (N-1) additional TRPs (TRP #1 to TRP # (N-1)) other than the serving TRP (TRP #0) used for single PDSCH transmission. That is, the UE may acquire control information for PDSCHs transmitted from different TRPs (TRP#0 to TRP#N-1) via independent pieces of DCI (DCI#0 to DCI#N-1). Formats between the independent pieces of DCI may be the same or different from each other, and payloads between the pieces of DCI may also be the same or different from each other. In case #1 described above, a degree of freedom of PDSCH control or allocation may be completely guaranteed, but when respective pieces of the DCI are transmitted by different TRPs, a difference between DCI coverages may be generated and reception performance may deteriorate.

Case #2 905 is an example in which pieces of control information (DCI) for PDSCHs of (N-1) additional TRPs are transmitted and each piece of the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, DCI#0, which is control information for the PDSCH transmitted from the serving TRP (TRP#0), includes all information elements of DCI format 1_0, DCI format 1_1, and DCI format 1_2, but shortened DCI (hereinafter, sDCI) (sDCI#0 to sDCI#N-2), which is control information for the PDSCHs transmitted from the cooperative TRPs (TRP#1 to TRP#N-1), may include only some of the information elements of DCI format 1_0, DCI format 1_1, and DCI format 1_2. Accordingly, in the case of sDCI for transmission of the control information for the PDSCHs transmitted from the cooperative TRPs, a payload is small compared to normal DCI (nDCI) for transmission of the control information related to the PDSCH transmitted from the serving TRP, so that reserved bits may be included in comparison with nDCI.

In case #2 described above, a degree of freedom of each PDSCH control or allocation may be limited according to content of information elements included in the sDC1, but reception capability of the sDCI is better than the nDCI, and thus a probability of the generation of difference between DCI coverages may become lower.

Case #3 910 is an example in which one piece of control information for PDSCHs of (N-1) additional TRPs is transmitted and the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, in the case of DCI #0 that is control information for the PDSCH transmitted from the serving TRP (TRP #0), all information elements of DCI format 1_0, DCI format 1_1, and DCI format 1_2 may be included, and in the case of control information for PDSCHs transmitted from cooperative TRPs (TRP #1 to TRP #(N-1)), only some of the information elements of DCI format 1_0, DCI format 1_1, and DCI format 1_2 may be gathered in one "secondary" DCI (sDCI) and transmitted. For example, the sDCI may include at least one piece of HARQ-related information, such as frequency domain resource assignment, time domain resource assignment, and MCS of cooperative TRPs. In addition, information that is not included in the sDCI, such as a bandwidth part (BWP) indicator or a carrier indicator, may follow the DCI (DCI #0, normal DCI, or nDCI) of the serving TRP.

In case #3 910, a degree of freedom of PDSCH control or allocation may be limited according to content of the information elements included in the sDCI but reception performance of the sDCI can be controlled, and case #3 910 may have smaller complexity of DCI blind decoding of the UE compared to case #1 900 or case #2 905.

Case #4 915 is an example in which control information for PDSCHs transmitted from (N-1) additional TRPs is transmitted in the DCI (long DCI) that is the same as that of control information for the PDSCH transmitted from the serving TRP in a situation in which different (N-1) PDSCHs are transmitted from the (N-1) additional TRPs (TRP #1 to TRP # (N-1)) other than the serving TRP (TRP #0) used for single PDSCH transmission. That is, the UE may acquire the control information for the PDSCHs transmitted from different TRPs (TRP#0 to TRP#N-1) via a single piece of DCI. In case #4 915, complexity of DCI blind decoding of the UE may not be increased, but a degree of freedom of PDSCH control or allocation may be low since the number of cooperative TRPs is limited according to long DCI payload restriction.

In the following description and embodiments, sDCI may refer to various pieces of supplementary DCI such as shortened DCI, secondary DCI, or normal DCI (DCI formats 1_0 and 1_1 described above) including PDSCH control information transmitted in the cooperative TRP, and unless specific restriction is mentioned, the corresponding description may be similarly applied to the various pieces of supplementary DCI.

In the following description and embodiments, case #1 900, case #2 905, and case #3 910 in which one or more pieces of DCI (or PDCCHs) are used to support NC-JT may be classified as multiple PDCCH-based NC-JT, and case #4 915 in which single DCI (or PDCCH) is used to support NC-JT may be classified as single PDCCH-based NC-JT. In multiple-PDCCH-based PDSCH transmission, a CORESET in which DCI of the serving TRP (TRP#0) is scheduled and a CORESET in which DCI of the cooperative TRPs (TRP#1 to TRP#N-1) are scheduled may be distinguished. A method of distinguishing the CORESETs may include a distinguishing method through a higher-layer indicator for each CORESET and a distinguishing method through a beam configuration for each CORESET. In addition, in the single-PDCCH-based NC-JT, a single piece of DCI is used for scheduling of a single PDSCH having multiple layers, instead of scheduling of multiple PDSCHs, and the aforementioned multiple layers may be transmitted from multiple TRPs. In this case, a connection relationship between a layer and a TRP for transmitting the layer may be indicated via a transmission configuration indicator (TCI) indication for the layer.

In embodiments of the disclosure, "cooperative TRP" may be replaced with various terms, such as "cooperative panel" or "cooperative beam" when actually applied.

In embodiments of the disclosure, "when NC-JT is applied" may be interpreted in various ways depending on a situation, such as "when a UE receives one or more PDSCHs at the same time in one BWP", "when a UE receives PDSCH based on two or more transmission configuration indicator (TCI) indications at the same time in one BWP", "when a PDSCH received by a UE is associated with one or more DMRS port groups", etc., but one expression is used for convenience of description.

In the disclosure, a radio protocol structure for NC-JT may be used in various ways according to a TRP deployment scenario. For example, if there is a small backhaul delay or no backhaul delay between cooperative TRPs, a method (CA-like method) using a structure based on MAC layer multiplexing is possible in a similar manner to reference numeral 1510 of FIG. 15. On the other hand, if a backhaul delay between cooperative TRPs is so large that the backhaul delay cannot be ignored (e.g., when a time of 2 ms or longer is required for exchange of information, such as CSI, scheduling, and HARQ-ACK, between the cooperative TRPs), a method (DC-like method) of securing characteristics robust to a delay by using an independent structure for each TRP starting from the RLC layer is possible in a similar manner to reference numeral 1520 of FIG. 15.

The UE supporting C-JT/NC-JT may receive a C-JT/NC-JT-related parameter, setting value, or the like from a higher-layer configuration, and may set an RRC parameter of the UE, based on the parameter, the setting value, or the like. For the higher-layer configuration, the UE may use a UE capability parameter, for example, tci-StatePDSCH. The UE capability parameter, for example, tci-StatePDSCH may define TCI states for the purpose of PDSCH transmission, the number of the TCI states may be configured to be 4, 8, 16, 32, 64, and 128 in FR1 and configured to be 64 and 128 in FR2, and among the configured numbers, up to 8 states that may be indicated by 3 bits of a TCI field in the DCI may be configured via a MAC CE message. A maximum value 128 refers to a value indicated by maxNumberConfiguredTCIstatesPerCC within the parameter tci-StatePDSCH which is included in capability signaling of the UE. In this way, a series of configuration procedures from the higher-layer configuration to the MAC CE configuration may be applied to a beamforming change command or a beamforming indication for at least one PDSCH in one TRP.

[Multi-DCI based Multi-TRP]

As an embodiment of the disclosure, a multi-DCI-based multi-TRP transmission method will be described. According to multi-DCI based multi-TRP transmission method, a downlink control channel for NC-JT may be configured based on multi-PDCCHs.

In the multiple-PDCCH-based NC-JT, when DCI for PDSCH scheduling of each TRP is transmitted, a CORERSET or a search space distinguished for each TRP may be provided. The CORESET or search space for each TRP may be configured as at least one of the following cases.

* Higher-layer index configuration for each CORESET: CORESET configuration information configured via a higher layer may include an index value, and a TRP for PDCCH transmission in a corresponding CORESET may be distinguished by a configured index value for each CORESET. That is, in a set of CORESETs having the same higher-layer index value, it may be considered that the same TRP transmits the PDCCH or that the PDCCH for scheduling the PDSCH of the same TRP is transmitted. The aforementioned index for each CORESET may be named CORESETPoolIndex, and for CORESETs for which the same CORESETPoolIndex value has been configured, it may be considered or determined that PDCCHs are transmitted from the same TRP. For a CORESET for which no CORESETPoolIndex value has been configured, it may be considered that a default value has been configured for CORESETPoolIndex, and the default value may be 0.

  ** In the disclosure, when the number of types of CORESETPoolIndex of each of a plurality of CORESETs included in higher-layer signaling PDCCH-Config is larger than 1, that is, when respective CORESETs have different CORESETPoolIndex, the UE may consider that the base station can use a multi-DCI-based multi-TRP transmission method.

  ** Unlike this, in the disclosure, when the number of types of CORESETPoolIndex of each of a plurality of CORESETs included in higher-layer signaling PDCCH-Config is 1, that is, when all CORESETs have the same CORESETPoolIndex of 0 or 1, the UE may consider that the base station performs transmission using a single-TRP instead of using the multi-DCI-based multi-TRP transmission method.

* Multiple-PDCCH-Config configuration: Multiple values of PDCCH-Config may be configured in one BWP, and each PDCCH-Config may include a PDCCH configuration for each TRP. That is, a list of CORESETs for each TRP and/or a list of search spaces for each TRP may be configured in one PDCCH-Config, and one or more CORESETs and one or more search spaces included in one PDCCH-Config may be considered or determined to correspond to a specific TRP.

* CORESET beam/beam group configuration: A TRP corresponding to a corresponding CORESET may be distinguished via a beam or beam group configured for each CORESET. For example, if the same TCI state is configured for multiple CORESETs, it may be considered or determined that the CORESETs are transmitted via the same TRP, or that a PDCCH for scheduling of a PDSCH of the same TRP is transmitted in the corresponding CORESET.

* Search space beam/beam group configuration: A beam or beam group may be configured for each search space, and a TRP for each search space may be distinguished based on the configured beam or beam group. For example, if the same beam/beam group or TCI state is configured in a plurality of search spaces, the same TRP may transmit the PDCCH in the corresponding search space or a PDCCH for scheduling a PDSCH of the same TRP may be transmitted in the corresponding search space.

As described above, by distinguishing the CORESETs or search spaces according to TRPs, it may be possible to classify PDSCH and HARQ-ACK information for each TRP, and based on this, it may be possible to independently generate an HARQ-ACK codebook and independently use a PUCCH resource for each TRP.
The configuration may be independent for each cell or BWP. For example, while two different CORESETPoolIndex values may be configured for a PCell, no CORESETPoolIndex value may be configured for a specific SCell. In this case, it may be considered or determined that NC-JT transmission has been configured for the PCell, whereas NC-JT transmission has not been configured for the SCell for which no CORESETPoolIndex value has been configured.
A PDSCH TCI state activation/deactivation MAC-CE which can be applied to the multi-DCI-based multi-TRP transmission method may follow FIG. 9. A list of TCI states regarding a PDSCH may be indicated through an higher layer list such as RRC. The list of TCI states may be indicated by tci-StatesToAddModList and/or tci-StatesToReleaseList inside a BWP-specific PDSCH-Config IE, for example. Next, a part of the list of TCI states may be activated through a MAC-CE. Among the TCI states activated through the MAC-CE, a TCI state for the PDSCH may be indicated by DCI. The maximum number of activated TCI states may be determined by the capability reported by the UE.
If the UE does not receive a configuration of CORESETPoolIndex for each of all CORESETs within higher-layer signaling PDCCH-Config, the UE may ignore a CORESET Pool ID field 955 within a corresponding MAC-CE 950. If the UE can support the multi-DCI-based multi-TRP transmission method, that is, if respective CORESETs within higher-layer signaling PDCCH-Config have different CORESETPoolIndex, the UE may activate a TCI state within the DCI included in PDCCHs transmitted in CORESETs having a CORESETPoolIndex value which is the same as a value of a CORESET Pool ID field within the corresponding MAC-CE. For example, if the CORESET Pool ID field within the corresponding MAC-CE has a value of 0, a TCI state within the DCI included in PDCCHs transmitted by the CORESETs having CORSETPoolIndex of 0 may follow activation information of the corresponding MAC-CE.
If the UE receives, from the base station, a configuration such that the multi-DCI-based multi-TRP transmission method can be used, that is, the number of types of CORESETPoolIndex of a plurality of CORESETs included in higher-layer signaling PDCCH-Config is larger than 1 or respective CORESETs have different CORESETPoolIndex, the UE is able to know that there are the following restrictions on PDSCHs scheduled by PDCCHs within respective CORESETs having different two CORESETPoolIndex.

1) If PDSCH indicated by PDCCHs within respective CORESETs having different two CORESETPoolIndex completely or partially overlap, the UE may apply TCI states indicated by the respective PDCCHs to different CDM groups. That is, two or more TCI states may not be applied to one CDM group
2) If PDSCH indicated by PDCCHs within respective CORESETs having different two CORESETPoolIndex completely or partially overlap, the UE may expect that the numbers of actual front loaded DMRS symbols of respective PDSCHs, the numbers of actual additional DMRS symbols, locations of actual DMRS symbols, and DMRS types are not different.
3) The UE may expect that bandwidth parts indicated by PDCCHs within respective CORESETs having different two CORESETPoolIndexs are the same and subcarrier spacings are also the same.
4) The UE may expect that information on PDSCH scheduled by PDCCHs within respective CORESETs having different two CORESETPoolIndex are completely included in respective PDCCHs.

[Single-DCI-based multi-TRP]

As an embodiment of the disclosure, a single-DCI-based multi-TRP transmission method is described. In the single-DCI-based multi-TRP transmission method, a downlink control channel for NC-JT may be configured based on a single PDCCH.
In the single-DCI-based multi-TRP transmission method, a PDSCH transmitted by multiple TRPs may be scheduled by one DCI. As a method of indicating the number of TRPs transmitting the PDSCH, the number of TCI states may be used. That is, if the number of TCI states indicated in DCI scheduling a PDSCH is 2, transmission may be considered to be single PDCCH-based NC-JT, and if the number of TCI states is 1, transmission may be considered to be single-TRP transmission. The TCI states indicated in the DCI may correspond to one or two TCI states among TCI states activated by a MAC-CE. If TCI states of DCI correspond to two TCI states activated by a MAC-CE, a TCI codepoint indicated in the DCI and the TCI states activated by the MAC-CE may have a correspondence relation, and this may correspond to a case where the number of the TCI states activated by the MAC-CE and corresponding to the TCI codepoint is 2.
As another example, if at least one codepoint among all codepoints of a TCI state field in DCI indicates two TCI states, a UE may consider that a base station is able to perform transmission based on a single-DCI-based multi-TRP method. The at least one codepoint indicating two TCI states in the TCI state field may be activated through an enhanced PDSCH TCI state activation/deactivation MAC-CE.

FIG. 10 is a diagram illustrating an enhanced PDSCH TCI state activation/deactivation MAC-CE structure. The meaning of each field in the MAC CE and a value available in each field may be shown as in [Table 30] below.

[Table 30]

| |
|---|
| - **Serving Cell ID:** This field indicates the identity of the Serving Cell for which the MAC CE applies. The length of the field is 5 bits. If the indicated Serving Cell is configured as part of a *simultaneousTCI-UpdateList1* or *simultaneousTCI-UpdateList2* as specified in TS 38.331 [5], this MAC CE applies to all the Serving Cells configured in the set *simultaneousTCI-UpdateList1* or *simultaneousTCI-UpdateList2,* respectively; |
| - **BWP ID:** This field indicates a DL BWP for which the MAC CE applies as the codepoint of the DCI bandwidth part indicator field as specified in TS 38.212 [9]. The length of the BWP ID field is 2 bits; |
| - **$C_i$:** This field indicates whether the octet containing TCI state $ID_{i,2}$ is present. If this field is set to "1," the octet containing TCI state $ID_{i,2}$ is present. If this field is set to "0," the octet containing TCI state $ID_{i,2}$ is not present; |
| - **TCI state $ID_{i,j}$:** This field indicates the TCI state identified by TCI-StateId as specified in TS 38.331 [5], where i is the index of the codepoint of the DCI Transmission configuration indication field as specified in TS 38.212 [9] and TCI state $ID_{i,j}$ denotes the j-th TCI state indicated for the i-th codepoint in the DCI Transmission Configuration Indication field. The TCI codepoint to which the TCI States are mapped is determined by its ordinal position among all the TCI codepoints with sets of TCI state $ID_{i,j}$ fields, i.e., the first TCI codepoint with TCI state $ID_{0,1}$ and TCI state $ID_{0,2}$ shall be mapped to the codepoint value 0, the second TCI codepoint with TCI state $ID_{1,1}$ and TCI state $ID_{1,2}$ shall be mapped to the codepoint value 1 and so on. The TCI state $ID_{i,2}$ is optional based on the indication of the Ci field. The maximum number of activated TCI codepoint is 8 and the maximum number of TCI states mapped to a TCI codepoint is 2. |
| - **R:** Reserved bit, set to "0." |

In FIG. 10, if the value of a $C_0$ field 1005 is 1, the MAC-CE may include a TCI state $ID_{0,2}$ field 1015 in addition to a TCI state $ID_{0,1}$ field 1010. This implies that TCI state $ID_{0,1}$ and TCI state $ID_{0,2}$ are activated for the 0-th codepoint of a TCI state field included in DCI, and if a base station indicates the codepoint to a UE, two TCI states may be indicated to the UE. If a value of the $C_0$ field 1005 is 0, the MAC-CE is unable to include the TCI state $ID_{0,2}$ field 1015, and this implies that one TCI state corresponding to TCI state $ID_{0,1}$ is activated for a 0-th codepoint of a TCI state field included in DCI.

This configuration may be independent for each cell or each BWP. For example, the number of activated TCI states corresponding to one TCI codepoint is a maximum of 2 in a PCell, but the number of activated TCI states corresponding to one TCI codepoint may be a maximum of 1 in a particular SCell. In this case, it may be considered that NC-JT is configured in the PCell, but NC-JT is not configured in the SCell.

[Single-DCI-based multi-TRP PDSCH repeated transmission technique (TDM/FDM/SDM) distinguishment method]

Next, a method of distinguishing a single-DCI-based multi-TRP PDSCH repeated transmission technique is described. Different single-DCI-based multi-TRP PDSCH repetition techniques (e.g., TDM, FDM, and SDM) may be indicated to a UE by a base station according to a value indicated by a DCI field and a higher layer signaling configuration. [Table 31] below shows a method of distinguishing between single or multi-TRP-based techniques indicated to a UE according to a value of a particular DCI field and a higher layer signaling configuration.

[Table 31]

| Combi nation | TCI state Numb er | CDM group Numb er | repetitionNum ber configuration and indication condition | Related to repetitionScheme configuration | Transmission technique indicated to UE |
|---|---|---|---|---|---|
| 1 | 1 | ≥1 | Condition 2 | Not configured | Single-TRP |
| 2 | 1 | ≥1 | Condition 2 | Configured | Single-TRP |
| 3 | 1 | ≥1 | Condition 3 | Configured | Single-TRP |
| 4 | 1 | 1 | Condition 1 | Configured or not configured | Single-TRP TDM scheme B |
| 5 | 2 | 2 | Condition 2 | Not configured | Multi-TRP SDM |

(continued)

| Combination | TCI state Number | CDM group Number | repetitionNum ber configuration and indication condition | Related to repetitionScheme configuration | Transmission technique indicated to UE |
|---|---|---|---|---|---|
| 6 | 2 | 2 | Condition 3 | Not configured | Multi-TRP SDM |
| 7 | 2 | 2 | Condition 3 | Configured | Multi-TRP SDM |
| 8 | 2 | 2 | Condition 3 | Configured | Multi-TRP FDM scheme A/FDM scheme B/TDM scheme A |
| 9 | 2 | 2 | Condition 1 | Not configured | Multi-TRP TDM scheme B |

In [Table 31] above, each column may be described as follows.

- Number of TCI states (second column): This indicates the number of TCI states indicated by a TCI state field in DCI, and may be 1 or 2.
- Number of CDM groups (third column): This indicates the number of different CDM groups of DMRS ports indicated by an antenna port field in DCI. The number may be 1, 2, or 3.
- repetitionNumber configuration and indication condition (fourth column): There may be three conditions according to whether repetitionNumber is configured for all TDRA entries indicable by a time domain resource allocation field in DCI, and whether an actually indicated TDRA entry has a repetitionNumber configuration.

  * Condition 1: At least one of all TDRA entries indicable by a time domain resource allocation field includes a configuration on repetitionNumber, and a TDRA entry indicated by a time domain resource allocation field in DCI includes a configuration on repetitionNumber greater than 1
  * Condition 2: At least one of all TDRA entries indicable by a time domain resource allocation field includes a configuration on repetitionNumber, and a TDRA entry indicated by a time domain resource allocation field in DCI does not include a configuration on repetitionNumber
  * Condition 3: All TDRA entries indicable by a time domain resource allocation field do not include a configuration on repetitionNumber

- Related to repetitionScheme configuration (fifth column): This indicates whether the higher layer signaling repetitionScheme is configured. As the higher layer signaling repetitionScheme, one of "tdmSchemeA," "fdmSchemeA," and "fdmSchemeB" may be configured.
- Transmission technique indicated to UE (sixth column): This indicates single or multi-TRP techniques indicated by combinations (first column) represented in [Table 31] above.

  * Single-TRP: This indicates single-TRP-based PDSCH transmission. If pdsch-AggegationFactor in the higher layer signaling PDSCH-config is configured for the UE, single-TRP-based PDSCH repeated transmission performed a configured number of times may be scheduled for the UE. Otherwise, single-TRP-based PDSCH single transmission may be scheduled for the UE.
  * Single-TRP TDM scheme B: This indicates single-TRP-based inter-slot time resource division-based PDSCH repeated transmission. According to condition 1 related to repetitionNumber described above, the UE repeats PDSCH transmission on the time domain in a number of slots equal to the count of repetitionNumber greater than 1 configured in a TDRA entry indicated by a time domain resource allocation field. The UE applies the same start symbol and the same symbol length of a PDSCH indicated by the TDRA entry for each of the slots, the number of which is equal to the count of repetitionNumber, and applies the same TCI state to every PDSCH repetitive transmission. This technique is similar to a slot aggregation scheme in that inter-slot PDSCH repetitive transmission is performed in the time resources, but differs from slot aggregation in that whether repetitive transmission is indicated may be dynamically determined based on a time domain resource allocation field in DCI.
  * Multi-TRP SDM: This means a multi-TRP-based spatial resource division PDSCH transmission scheme. This is a method of receiving distributed layers from TRPs, and is not a repeated transmission scheme, but may increase the reliability of PDSCH transmission in that the number of layers is increased to enable transmission at a lowered code rate. The UE may apply two TCI states indicated through a TCI state field in DCI to two CDM groups indicated by the base station, respectively, so as to receive a PDSCH.

* Multi-TRP FDM scheme A: This means a multi-TRP-based frequency resource division PDSCH transmission scheme. This technique provides one PDSCH transmission occasion and thus is not repeated transmission like multi-TRP SDM. However, the amount of frequency resources is increased to lower a code rate and thus enable transmission with high reliability. Multi-TRP FDM scheme A may apply two TCI states indicated through a TCI state field in DCI to frequency resources not overlapping each other, respectively. In a case where a PRB bundling size is determined to be a wideband, if the number of RBs indicated by a frequency domain resource allocation field is N, a UE applies a first TCI state to a first ceil(N/2) number of RBs, and applies a second TCI state to the remaining floor(N/2) number of RBs so as to perform reception. Here, ceil(.) and floor(.) are operators indicating rounding up and down for one decimal place. If a PRB bundling size is determined to be 2 or 4, the UE applies the first TCI state to even-numbered PRGs, and applies the second TCI state to odd-numbered PRGs to perform reception.

* Multi-TRP FDM scheme B: This means a multi-TRP-based frequency resource division PDSCH repeated transmission scheme, and provides two PDSCH transmission occasions to repeat PDSCH transmission in the respective occasions. In the same way as multi-TRP FDM scheme A, multi-TRP FDM scheme B may also apply two TCI states indicated through a TCI state field in DCI to frequency resources not overlapping each other, respectively. In a case where a PRB bundling size is determined to be a wideband, if the number of RBs indicated by a frequency domain resource allocation field is N, a UE applies a first TCI state to a first ceil(N/2) number of RBs, and applies a second TCI state to the remaining floor(N/2) number of RBs so as to perform reception. Here, ceil(.) and floor(.) are operators indicating rounding up and down for one decimal place. If a PRB bundling size is determined to be 2 or 4, the UE applies the first TCI state to even-numbered PRGs, and applies the second TCI state to odd-numbered PRGs to perform reception.

* Multi-TRP TDM scheme A: This means a multi-TRP-based time resource division intra-slot PDSCH repetitive transmission scheme. The UE may have two PDSCH transmission occasions in one slot, and a first reception occasion may be determined based on the starting symbol and the symbol length of a PDSCH indicated through a time domain resource allocation field in DCI. A starting symbol of a second reception occasion of the PDSCH may be a position obtained by applying a symbol offset of the higher layer signaling StartingSymbolOffsetK to a last symbol of the first transmission occasion, and the transmission occasion may be determined to be as long as the indicated symbol length from the position. If the higher layer signaling StartingSymbolOffsetK is not configured, a symbol offset may be considered as 0.

* Multi-TRP TDM scheme B: This means a multi-TRP-based time resource division inter-slot PDSCH repeated transmission scheme. The UE may have one PDSCH transmission occasion in one slot, and receive repeated transmission, based on the same starting symbol and the same symbol length of a PDSCH during a number of slots corresponding to the count of repetitionNumber indicated through a time domain resource allocation field in DCI. If repetitionNumber is 2, the UE may receive PDSCH repeated transmission in first and second slots by applying first and second TCI states thereto, respectively. If repetitionNumber is greater than 2, the UE may use different TCI state application schemes according to which value the higher layer signaling tciMapping is configured to be. If tciMapping is configured to be cyclicMapping, the UE applies first and second TCI states to first and second PDSCH transmission occasions, respectively, and also applies this TCI state application method to the remaining PDSCH transmission occasions in the same way. If tciMapping is configured to be sequenticalMapping, the UE applies a first TCI state to first and second PDSCH transmission occasions, applies a second TCI state to third and fourth PDSCH transmission occasions, respectively, and also applies this TCI state application method to the remaining PDSCH transmission occasions in the same way.

[Unified TCI state]

Hereinafter, a single TCI state indication and activation method based on a unified TCI scheme is described. The unified TCI scheme may mean a scheme of integrating and managing, through a TCI state, a transmission/reception beam management scheme, which has been classified as a TCI state scheme used in downlink reception of a UE and a spatial relation info scheme used in uplink transmission in conventional Rel-15 and 16. Therefore, in a case where a UE receives an indication from a base station, based on the unified TCI scheme, the UE may perform beam management even for uplink transmission by using a TCI state. If the higher layer signaling TCI-State having the higher layer signaling tci-stateId-r17 is configured for a UE by a base station, the UE may perform an operation based on the unified TCI scheme by using the TCI-State. TCI-State may exist in two types including a joint TCI state and a separate TCI state.

The first type is a joint TCI state, and all TCI states to be applied to uplink transmission and downlink reception may be indicated to a UE by a base station through one value of TCI-State. If joint TCI state-based TCI-state is indicated to the UE, a parameter to be used in downlink channel estimation may be indicated to the UE by using an RS corresponding to qcl-Typel in the joint TCI state-based TCI-state, and a parameter to be used as a downlink reception beam or reception filter may be indicated thereto by using an RS corresponding to qcl-Type2. If joint TCI state-based TCI-state is indicated to the UE, a parameter to be used as an uplink transmission beam or transmission filter may be indicated to the UE by using an RS corresponding to qcl-Type2 in a corresponding joint DL/UL TCI state-based TCI-state. If a joint TCI state is indicated to the UE, the UE may apply the same beam to uplink transmission and downlink reception.

The second type is a separate TCI state, and a UL TCI state to be applied to uplink transmission and a DL TCI state to be applied to downlink reception may be individually indicated to a UE by a base station. If a UL TCI state is indicated to the UE, a parameter to be used as an uplink transmission beam or transmission filter may be indicated to the UE by using a reference RS or a source RS configured in the UL TCI state. If a DL TCI state is indicated to the UE, a parameter to be used in downlink channel estimation may be indicated to the UE by using an RS corresponding to qcl-Type1 configured in the DL TCI state, and a parameter to be used as a downlink reception beam or reception filter may be indicated thereto by using an RS corresponding to qcl-Type2.

If a DL TCI state and a UL TCI state are indicated to the UE together, a parameter to be used as an uplink transmission beam or transmission filter may be indicated to the UE by using a reference RS or a source RS configured in the UL TCI state, a parameter to be used in downlink channel estimation may be indicated to the UE by using an RS corresponding to qcl-Type1 configured in the DL TCI state, and a parameter to be used as a downlink reception beam or reception filter may be indicated thereto using an RS corresponding to qcl-Type2. If the reference RSs or source RSs configured in the DL TCI state and UL TCI state indicated to the UE are different from each other, the UE may apply individual beams to uplink transmission and downlink reception, based on the indicated UL TCI state and DL TCI state.

A maximum of 128 joint TCI states may be configured for a particular bandwidth part in a particular cell for the UE by the base station through higher layer signaling, a maximum of 64 or 128 DL TCI states among separate TCI states may be configured for a particular bandwidth part in a particular cell through higher layer signaling, based on a UE capability report, and a DL TCI state among separate TCI states and a joint TCI state may use the same higher layer signaling structure. For example, if 128 joint TCI states are configured and 64 DL TCI states among separate TCI states are configured, the 64 DL TCI states may be included in the 128 joint TCI states.

A maximum of 32 or 64 UL TCI states among separate TCI states may be configured for a particular bandwidth part in a particular cell through higher layer signaling, based on a UE capability report, and a UL TCI state among separate TCI states and a joint TCI state may also use the same higher layer signaling structure like the relation between a DL TCI state among separate TCI states and a joint TCI state, or a UL TCI state among separate TCI states may also use a higher layer signaling structure different from that of a joint TCI state and a DL TCI state among separate TCI states.

As described above, using different or identical higher layer signaling structures may be defined in a specification, or may be distinguished through another higher layer signaling configured by a base station, based on a UE capability report including information on a usage scheme which a UE is able to support among two types of usage schemes.

A transmission/reception beam-related indication may be received by a UE in a unified TCI scheme by using one scheme among a joint TCI state and a separate TCI state configured by a base station. Whether to use one of a joint TCI state and a separate TCI state may be configured for the UE by the base station through higher layer signaling.

The UE may receive a transmission/reception beam-related indication through higher layer signaling by using one scheme selected from among a joint TCI state and a separate TCI state, and a method of indicating a transmission/reception beam by the base station may be classified as two types of methods including a MAC-CE-based indication method and a MAC-CE-based activation and DCI-based indication method.

In a case where a UE receives a transmission/reception beam-related indication through higher layer signaling by using a joint TCI state scheme, the UE may receive a MAC-CE indicating a joint TCI state from a base station to perform a transmission/reception beam application operation, and the base station may schedule reception of a PDSCH including the MAC-CE for the UE through a PDCCH. If there is one joint TCI state included in a MAC-CE, the UE may determine an uplink transmission beam or transmission filter and a downlink reception beam or reception filter by using the indicated joint TCI state starting from 3 ms after PUCCH transmission including HARQ-ACK information meaning whether a PDSCH including the MAC-CE has been successfully received. If there are two or more joint TCI states included in a MAC-CE, the UE may identify that multiple joint TCI states indicated by the MAC-CE correspond to respective codepoints of a TCI state field of DCI format 1_1 or 1_2, starting from 3 ms after PUCCH transmission including HARQ-ACK information meaning whether a PDSCH including the MAC-CE has been successfully received, and activate the indicated joint TCI states. Thereafter, the UE may receive DCI format 1_1 or 1_2 to apply one joint TCI state indicated by a TCI state field in the DCI to uplink transmission and downlink reception beams. DCI format 1_1 or 1_2 may include downlink data channel scheduling information (with DL assignment) or not include same (without DL assignment).

In a case where a UE receives a transmission/reception beam-related indication through higher layer signaling by using a separate TCI state scheme, the UE may receive a MAC-CE indicating a separate TCI state from a base station to perform a transmission/reception beam application operation, and the base station may schedule reception of a PDSCH including the MAC-CE for the UE through a PDCCH. If a MAC-CE includes one separate TCI state set, the UE may determine an uplink transmission beam or transmission filter and a downlink reception beam or reception filter by using separate TCI states included in the indicated separate TCI state set starting from 3 ms after PUCCH transmission including HARQ-ACK information meaning whether a corresponding PDSCH has been successfully received. A separate TCI state set may indicate a single or multiple separate TCI states which one codepoint of a TCI state field in DCI format 1_1 or 1_2 may have, and one separate TCI state set may include one DL TCI state, include one UL TCI state, or include one DL TCI state and one UL TCI state. If a MAC-CE includes two or more separate TCI state sets, the UE may identify that multiple separate TCI state sets indicated by the MAC-CE correspond to respective codepoints of a TCI state field of DCI format 1_1 or 1_2, starting from 3 ms after PUCCH transmission including HARQ-ACK information meaning whether a corresponding PDSCH has been successfully received, and may activate the indicated separate TCI state sets. Each codepoint of the TCI state field of DCI format 1_1 or 1_2 may indicate one DL TCI state, indicate one UL TCI state, or indicate one DL TCI state and one UL TCI state. The UE may receive DCI format 1_1 or 1_2 to apply a separate TCI state set indicated by a TCI state field in the DCI to uplink transmission and downlink reception beams. DCI format 1_1 or 1_2 may include downlink data channel scheduling information (with DL assignment) or not include same (without DL assignment).

FIG. 11 is a diagram illustrating a beam application time which may be considered when a unified TCI scheme is used in a wireless communication system according to an embodiment of the disclosure. As described above, a UE may receive, from a base station, DCI format 1_1 or 1_2 including or not including downlink data channel scheduling information (with DL assignment or without DL assignment), and apply one joint TCI state or one separate TCI state set indicated by a TCI state field in the DCI to uplink transmission and downlink reception beams.

- DCI format 1_1 or 1_2 with DL assignment (11-00): If a UE receives, from a base station, DCI format 1_1 or 1_2 including downlink data channel scheduling information (11-01) so that one joint TCI state or one separate TCI state set based on a unified TCI scheme is indicated, the UE may receive a PDSCH scheduled based on the received DCI (11-05), and transmit a PUCCH including a HARQ-ACK indicating whether reception of the DCI and the PDSCH is successful (11-10). The HARQ-ACK may include whether reception has been successful, for both the DCI and the PDSCH, if the UE fails to receive at least one of the DCI and the PDSCH, the UE may transmit a NACK, and if the UE succeeds in receiving both of them, the UE may transmit an ACK.
- DCI format 1_1 or 1_2 without DL assignment (11-50): If a UE receives, from a base station, DCI format 1_1 or 1_2 not including downlink data channel scheduling information (11-55) so that one joint TCI state or one separate TCI state set based on a unified TCI scheme is indicated, the UE may assume at least one combination of the following items for the DCI.

    * The DCI includes a CRC scrambled using a CS-RNTI.
    * The values of all bits assigned to all fields used as redundancy version (RV) fields are 1.
    * The values of all bits assigned to all fields used as modulation and coding scheme (MCS) fields are 1.
    * The values of all bits assigned to all fields used as new data indication (NDI) fields are 0.
    * In a case of frequency domain resource allocation (FDRA) type 0, the values of all bits assigned to an FDRA field are 0, in a case of FDRA type 1, the values of all bits assigned to an FDRA field are 1, and in a case of an FDRA scheme being dynamicSwitch, the values of all bits assigned to an FDRA field are 0.

The UE may transmit a PUCCH including a HARQ-ACK indicating whether DCI format 1_1 or 1_2 for which the items described above are assumed has been successfully received (11-60).

- With respect to both DCI format 1_1 or 1_2 with DL assignment (11-00) and without DL assignment (11-50), if the new TCI state indicated through DCI 11-01 or 11-55 is the same as a TCI state that has previously been indicated and thus been being applied to uplink transmission and downlink reception beams, the UE may maintain the previously applied TCI state. If the new TCI state is different from the previously indicated TCI state, the UE may determine, as a time point for application of the joint TCI state or separate TCI state set, which is indicable by a TCI state field included in the DCI, a time point 11-30 or 11-80 after the first slot 11-20 or 11-70 after passage of a time interval as long as a beam application time (BAT) 11-15 or 11-65 after PUCCH transmission, and may use the previously indicated TCI state at a time point 11-25 or 11-75 before the slot 11-20 or 11-70.
- With respect to both DCI format 1_1 or 1_2 with DL assignment (11-00) and without DL assignment (11-50), the BAT is a particular number of OFDM symbols and may be configured through higher layer signaling, based on UE capability report information, and numerologies of the BAT and the first slot after the BAT may be determined based on the smallest numerology among all cells to which a joint TCI state or separate TCI state set indicated through DCI is applied.

The UE may apply one joint TCI state indicated through a MAC-CE or DCI to reception for control resource sets connected to all UE-specific search spaces, reception of a PDSCH scheduled by a PDCCH transmitted from the control resource sets and transmission of a PUSCH, and transmission of all PUCCH resources.

If one separate TCI state set indicated through a MAC-CE or DCI includes one DL TCI state, a UE may apply the one separate TCI state set to reception for control resource sets connected to all UE-specific search spaces and to reception of a PDSCH scheduled by a PDCCH transmitted from the control resource sets, and apply a previously indicated UL TCI state to all PUSCH and PUCCH resources.

If one separate TCI state set indicated through a MAC-CE or DCI includes one UL TCI state, a UE may apply the one separate TCI state set to all PUSCH and PUCCH resources, and apply a previously indicated DL TCI state to reception for control resource sets connected to all UE-specific search spaces and reception of a PDSCH scheduled by a PDCCH transmitted from the control resource sets.

If one separate TCI state set indicated through a MAC-CE or DCI includes one DL TCI state and one UL TCI state, a UE may apply the DL TCI state to reception for control resource sets connected to all UE-specific search spaces and reception of a PDSCH scheduled by a PDCCH transmitted from the control resource sets, and apply the UL TCI state to all PUSCH and PUCCH resources.

[Unified TCI state MAC-CE]

Hereinafter, a single TCI state indication and activation method based on a unified TCI scheme is described. A PDSCH including a MAC-CE described below may be scheduled to a UE by a base station, and the UE may interpret each codepoint of a TCI state field in DCI format 1_1 or 1_2, based on information in the MAC-CE received from the base station, after 3 slots from transmission of a HARQ-ACK for the PDSCH to the base station. That is, the UE may activate each entry of the MAC-CE received from the base station in each codepoint of the TCI state field in DCI format 1_1 or 1_2.

FIG. 12 is a diagram illustrating another MAC-CE structure for activation and indication of a joint TCI state or a separate DL or UL TCI state in a wireless communication system according to an embodiment of the disclosure. Each field in the MAC-CE structure may have the following meaning.

- Serving Cell ID 12-00: This field may indicate a serving cell to which a corresponding MAC-CE is to be applied. The length of this field may be 5 bits. If a serving cell indicated by this field is included in at least one of the higher layer signaling simultaneousU-TCI-UpdateList1, simultaneousU-TCI-UpdateList2, simultaneousU-TCI-UpdateList3, or simultaneousU-TCI-UpdateList4, the MAC-CE may be applied to all serving cells included in one or more lists among simultaneousU-TCI-UpdateList1, simultaneousU-TCI-UpdateList2, simultaneousU-TCI-UpdateList3, or simultaneousU-TCI-UpdateList4, in which the serving cell indicated by the field is included.
- DL BWP ID 12-05: This field may indicate a DL BWP to which the MAC-CE is to be applied, and the meanings of codepoints in the field may correspond to codepoints of a bandwidth part indicator in DCI, respectively. The length of this field may be 2 bits.
- UL BWP ID 12-10: This field may indicate a UL BWP to which the MAC-CE is to be applied, and the meanings of codepoints in the field may correspond to codepoints of a bandwidth part indicator in DCI, respectively. The length of this field may be 2 bits.
- $P_i$ 12-15: This field may indicate whether each codepoint of a TCI state field in DCI format 1_1 or 1_2 has multiple TCI states or one TCI state. If a value of $P_i$ is 1, this indicates that a corresponding i-th codepoint has multiple TCI states, and may imply that the codepoint may include a separate DL TCI state and a separate UL TCI state. If a value of $P_i$ is 0, this indicates that a corresponding i-th codepoint has a single TCI state, and may imply that the codepoint may include one of a joint TCI state, a separate DCI TCI state, or a separate UL TCI state.
- D/U 12-20: This field may indicate whether a TCI state ID field in the same octet is a joint TCI state, a separate DL TCI state, or a separate UL TCI state. If the field is 1, a TCI state ID field in the same octet may be a joint TCI state or a separate DL TCI state, and If the field is 0, a TCI state ID field in the same octet may be a separate UL TCI state.
- TCI state ID 12-25: This field may indicate a TCI state identifiable by the higher layer signaling TCI-StateId. If the D/U field is configured to be 1, the TCI state ID field may be used to represent TCI-StateId expressible by 7 bits. If the D/U field is configured to be 0, a most significant bit (MSB) of the TCI state ID field may be considered as a reserved bit, and the remaining 6 bits may be used to represent the higher layer signaling UL-TCIState-Id. The number of maximally activatable TCI states may be 8 in a case of joint TCI states, and may be 16 in a case of separate DL or UL TCI states.
- R: This indicates a reserved bit and may be configured to be 0.

With respect to the MAC-CE structure of FIG. 12, a UE may include, in the MAC-CE structure, a third octet including P1, P2, ..., and P8 fields in FIG. 12 regardless of unifiedTCI-StateType-r17 in MIMOparam-r17 in the higher layer signaling ServingCellConfig being configured to be joint or separate. In this case, the UE may perform TCI state activation by using a fixed MAC-CE structure regardless of higher layer signaling configured by a base station. As another example, with respect to the MAC-CE structure of FIG. 12, the UE may omit the third octet including P1, P2, ..., and P8 fields in FIG. 12, in a case where unifiedTCI-StateType-r17 in MIMOparam-r17 in the higher layer signaling ServingCellConfig is configured to be joint. In this case, the UE may save the payload of the MAC-CE by a maximum of 8 bits according to higher layer signaling configured by a base station. In addition, all D/U fields positioned on the first bits in octets starting from a fourth octet in FIG. 12 may be considered as R fields, and all the R fields may be configured to be 0 bits.

[Additional single and multi-TCI state indication and activation method based on unified TCI scheme]

As an embodiment of the disclosure, an additional single and multi-TCI state indication and activation method based on a unified TCI scheme is described. A PDSCH including a MAC-CE which may be configured by a combination of at least one of various MAC-CE structures described below may be scheduled for a UE by a base station, and the UE may interpret each codepoint of a TCI state field in DCI format 1_1 or 1_2, based on information in the MAC-CE received from the base station, after 3 slots from transmission of a HARQ-ACK for the PDSCH to the base station. That is, the UE may activate each entry of the MAC-CE received from the base station in each codepoint of the TCI state field in DCI format 1_1 or 1_2.

If two different values of CORESETPoolIndex are configured for the UE through higher layer signaling, and the higher layer signaling DLorJointTCIState or UL-TCIState is configured, the base station and the UE may expect that an R field 12-30 present in the first octet in FIG. 12 showing one of MAC-CE structures indicating activation of a unified TCI state is interpreted as a field indicating a CORESET pool ID. If a corresponding CORESET pool ID is configured to be 0, the UE may consider that a corresponding MAC-CE is applicable to each codepoint of a TCI state field in a PDCCH transmitted in a CORESET corresponding to CORESETPoolIndex 0. If a corresponding CORESET pool ID is configured to be 1, the UE may consider that a corresponding MAC-CE is applicable to each codepoint of a TCI state field in a PDCCH transmitted in a CORESET corresponding to CORESETPoolIndex 1.

FIG. 13 is a diagram illustrating another MAC-CE structure for activation and indication of multiple joint TCI states or multiple separate DL or UL TCI states in a wireless communication system according to an embodiment of the disclosure. Each field in the MAC-CE structure may have the following meaning.

- Serving Cell ID 13-00: This field may indicate a serving cell to which a corresponding MAC-CE is to be applied. The length of this field may be 5 bits. If a serving cell indicated by this field is included in at least one of the higher layer signaling simultaneousU-TCI-UpdateList1, simultaneousU-TCI-UpdateList2, simultaneousU-TCI-UpdateList3, or simultaneousU-TCI-UpdateList4, the MAC-CE may be applied to all serving cells included in one or more lists among simultaneousU-TCI-UpdateList1, simultaneousU-TCI-UpdateList2, simultaneousU-TCI-UpdateList3, or simultaneousU-TCI-UpdateList4, in which the serving cell indicated by the field is included.
- DL BWP ID 13-05: This field may indicate a DL BWP to which the MAC-CE is to be applied, and the meanings of codepoints in the field may correspond to codepoints of a bandwidth part indicator in DCI, respectively. The length of this field may be 2 bits.
- UL BWP ID 13-10: This field may indicate a UL BWP to which the MAC-CE is to be applied, and the meanings of codepoints in the field may correspond to codepoints of a bandwidth part indicator in DCI, respectively. The length of this field may be 2 bits.
- $P_i$ 13-15: This field may indicate whether each codepoint of a TCI state field in DCI format 1_1 or 1_2 has multiple TCI states or one TCI state.

  * If the UE is able to configure one of joint and separate as unifiedTCI-StateType-r17 in MIMOparam-r17 in the higher layer signaling ServingCellConfig, this field may be interpreted as follow regardless of which piece of configuration information among the two pieces of configuration information is configured.

    ** If a value of $P_i$ is "00," this indicates that a corresponding i-th codepoint has a single TCI state, and may imply that the codepoint may include one of a joint TCI state, a separate DCI TCI state, or a separate UL TCI state.
    ** If a value of $P_i$ is "01," this indicates that a corresponding i-th codepoint has two TCI states, and may imply that the codepoint may include one of two joint TCI states, one separate DL TCI state and one separate UL TCI state, two separate DL TCI states, or two separate UL TCI states.
    ** If a value of $P_i$ is "10," this indicates that a corresponding i-th codepoint has three TCI states, and may imply that the codepoint may include one separate DL TCI state and two separate UL TCI states, or two separate DL TCI states and one separate UL TCI states.
    ** If a value of $P_i$ is "11," this indicates that a corresponding i-th codepoint has four TCI states, and may imply that the codepoint may include two separate DL TCI states and two separate UL TCI states.

  * If the UE is able to configure one of joint, separate, and mixed mode as unifiedTCI-StateType-r17 in MIMOparam-r17 in the higher layer signaling ServingCellConfig, this field may be interpreted as follow regardless of which configuration value among the possible configuration values is configured. The mixed mode may be represented as a single configuration value indicating that a general mixed mode of a joint TCI state and a separate DL or UL TCI state is possible, or may be configured to indicate a specific combination of a certain number of joint TCI states and a certain number of separate DL or UL TCI states by being represented as multiple configuration values such as "1 joint + 1 DL" or "1 joint + 1 UL."

** If a value of $P_i$ is "00," this indicates that a corresponding i-th codepoint has a single TCI state, and may imply that the codepoint may include one of a joint TCI state, a separate DCI TCI state, or a separate UL TCI state.
** If a value of $P_i$ is "01," this indicates that a corresponding i-th codepoint has two TCI states, and may imply that the codepoint may include one of two joint TCI states, one joint TCI state and one separate DL TCI state, one joint TCI state and one separate UL TCI state, one separate DL TCI state and one separate UL TCI state, two separate DL TCI states, or two separate UL TCI states. If a value, such as mixed mode, indicating that a general mixed mode of a joint TCI state and a separate DL or UL TCI state is possible, is configured for the UE as unifiedTCI-StateType-r17 in MIMOparam-r17 in the higher layer signaling ServingCellConfig, both types including one joint TCI state and one separate DL TCI state, and one joint TCI state and one separate UL TCI state described above may be possible. If one of "1joint+1DL" and "1joint+1UL" is configured for the UE as unifiedTCI-StateType-r17 in MIMOparam-r17 in the higher layer signaling ServingCellConfig, only a case corresponding to a configuration value of unifiedTCI-StateType-r17 among one joint TCI state and one separate DL TCI state, and one joint TCI state and one separate UL TCI state described above may be possible.
** If a value of $P_i$ is "10," this indicates that a corresponding i-th codepoint has three TCI states, and may imply that the codepoint may include one separate DL TCI state and two separate UL TCI states, or two separate DL TCI states and one separate UL TCI states.
** If a value of $P_i$ is "11," this indicates that a corresponding i-th codepoint has four TCI states, and may imply that the codepoint may include two separate DL TCI states and two separate UL TCI states.

* The corresponding field may be 2 bits.

- D/U 13-20: This field may indicate whether a TCI state ID field in the same octet is a joint TCI state, a separate DL TCI state, or a separate UL TCI state. If the field is 1, a TCI state ID field in the same octet may be a joint TCI state or a separate DL TCI state, and if the field is 0, a TCI state ID field in the same octet may be a separate UL TCI state.
- TCI state ID 13-25: This field may indicate a TCI state identifiable by the higher layer signaling TCI-StateId. If the D/U field is configured to be 1, the TCI state ID field may be used to represent TCI-StateId expressible by 7 bits. If the D/U field is configured to be 0, a most significant bit (MSB) of the TCI state ID field may be considered as a reserved bit, and the remaining 6 bits may be used to represent the higher layer signaling UL-TCIState-Id. The number of maximally activatable TCI states may be 8 in a case of joint TCI states, and may be 16 in a case of separate DL or UL TCI states.
- R: This indicates a reserved bit and may be configured to be 0.

FIG. 14 is a diagram illustrating another MAC-CE structure for activation and indication of multiple joint TCI states or multiple separate DL or UL TCI states in a wireless communication system according to an embodiment of the disclosure. Each field in the MAC-CE structure may have the following meaning.

- Serving Cell ID 14-00: This field may indicate a serving cell to which a corresponding MAC-CE is to be applied. The length of this field may be 5 bits. If a serving cell indicated by this field is included in at least one of the higher layer signaling simultaneousU-TCI-UpdateList1, simultaneousU-TCI-UpdateList2, simultaneousU-TCI-UpdateList3, or simultaneousU-TCI-UpdateList4, the MAC-CE may be applied to all serving cells included in one or more lists among simultaneousU-TCI-UpdateList1, simultaneousU-TCI-UpdateList2, simultaneousU-TCI-UpdateList3, or simultaneousU-TCI-UpdateList4, in which the serving cell indicated by the field is included.
- DL BWP ID 14-05: This field may indicate a DL BWP to which the MAC-CE is to be applied, and the meanings of codepoints in the field may correspond to codepoints of a bandwidth part indicator in DCI, respectively. The length of this field may be 2 bits.
- UL BWP ID 14-10: This field may indicate a UL BWP to which the MAC-CE is to be applied, and the meanings of codepoints in the field may correspond to codepoints of a bandwidth part indicator in DCI, respectively. The length of this field may be 2 bits.
- $P_{i,1}$ 14-15 and $P_{i,2}$ 14-20: These two fields may indicate whether each codepoint of a TCI state field in DCI format 1_1 or 1_2 has multiple TCI states or one TCI state.

* In a case where the UE is able to configure one of joint and separate or configure one of joint, separate, and mixed mode as unifiedTCI-StateType-r17 in MIMOparam-r17 in the higher layer signaling ServingCellConfig, if the higher layer signaling unifiedTCI-StateType-r17 is configured to be joint, the UE may omit the fourth octet including $P_{1,2}$, $P_{2,2}$, ..., and $P_{8,2}$ fields in FIG. 38, and interpret only $P_{i,1}$ as follows. The mixed mode may be represented as a single configuration value indicating that a general mixed mode of a joint TCI state and a separate DL or UL TCI state is possible, or may be configured to indicate a specific combination of a certain number of joint TCI states and a certain number of separate DL or UL TCI states by being represented as multiple configuration values such as "1 joint + 1 DL" or "1 joint + 1 UL."

** If a value of $P_{i,1}$ is "0," this indicates that a corresponding i-th codepoint has one TCI state, and may imply that the codepoint may include one joint TCI state.
** If a value of $P_{i,1}$ is "1," this indicates that a corresponding i-th codepoint has two TCI states, and may imply that the codepoint may include two joint TCI states.

* In a case where the UE is able to configure one of joint and separate or configure one of joint, separate, and mixed mode as unifiedTCI-StateType-r17 in MIMOparam-r17 in the higher layer signaling ServingCellConfig, if the higher layer signaling unifiedTCI-StateType-r17 is configured to be separate, the UE may consider $P_{i,1}$ of the third octet and $P_{i,2}$ of the fourth octet as a single field having two bits, and interpret the fields as follows. The mixed mode may be represented as a single configuration value indicating that a general mixed mode of a joint TCI state and a separate DL or UL TCI state is possible, or may be configured to indicate a specific combination of a certain number of joint TCI states and a certain number of separate DL or UL TCI states by being represented as multiple configuration values such as "1 joint + 1 DL" or "1 joint + 1 UL."

** If a value of $P_{i,1}$ and a value of $P_{i,2}$ are "0" and "0," respectively, this indicates that a corresponding i-th codepoint has a single TCI state, and may imply that the codepoint may include one of a separate DL TCI state or a separate UL TCI state.
** If a value of $P_{i,1}$ and a value of $P_{i,2}$ are "0" and "1," respectively, this indicates that a corresponding i-th codepoint has two TCI states, and may imply that the codepoint may include one of one separate DL TCI state and one separate UL TCI state, two separate DL TCI states, or two separate UL TCI states.
** If a value of $P_{i,1}$ and a value of $P_{i,2}$ are "1" and "0," respectively, this indicates that a corresponding i-th codepoint has three TCI states, and may imply that the codepoint may include one separate DL TCI state and two separate UL TCI states, or two separate DL TCI states and one separate UL TCI state.
** If a value of $P_{i,1}$ and a value of $P_{i,2}$ are "1" and "1," respectively, this indicates that a corresponding i-th codepoint has four TCI states, and may imply that the codepoint may include two separate DL TCI states and two separate UL TCI states.

* In a case where the UE is able to configure one of joint, separate, and mixed mode as unifiedTCI-StateType-r17 in MIMOparam-r17 in the higher layer signaling ServingCellConfig, if the higher layer signaling unifiedTCI-StateType-r17 is configured to be mixed mode, the UE may interpret $P_{i,1}$ of the third octet as follows and may not transmit the fourth octet. The mixed mode may be represented as a single configuration value indicating that a general mixed mode of a joint TCI state and a separate DL or UL TCI state is possible.

** If a value of $P_{i,1}$ is "0," this indicates that a corresponding i-th codepoint includes one joint TCI state and one separate DL TCI state.
** If a value of $P_{i,1}$ is "1," this indicates that a corresponding i-th codepoint includes one joint TCI state and one separate UL TCI state.

* In a case where the UE is able to configure one of joint, separate, and mixed mode as unifiedTCI-StateType-r17 in MIMOparam-r17 in the higher layer signaling ServingCellConfig, if the higher layer signaling unifiedTCI-StateType-r17 is configured to be mixed mode, the UE may interpret $P_{i,1}$ of the third octet and $P_{i,2}$ of the fourth octet as follows. The mixed mode may be represented as a single configuration value indicating that a general mixed mode of a joint TCI state and a separate DL or UL TCI state is possible.

** If a value of $P_{i,1}$ is "0," this indicates that a corresponding i-th codepoint includes only one joint TCI state. That is, mixed mode is not used, and thus a value of $P_{i,2}$ may be disregarded.
** If a value of $P_{i,1}$ is "1," this indicates that a corresponding i-th codepoint includes one of one separate UL TCI state and one separate DL TCI state in addition to one joint TCI state. That is, mixed mode may be used for the codepoint, if a value of $P_{i,2}$ is "0," one separate UL TCI state may be additionally used, and if a value of $P_{i,2}$ is "1," one separate UL TCI state may be additionally used.

- D/U 14-25: This field may indicate whether a TCI state ID field in the same octet is a joint TCI state, a separate DL TCI state, or a separate UL TCI state. If the field is 1, a TCI state ID field in the same octet may be a joint TCI state or a separate DL TCI state, and If the field is 0, a TCI state ID field in the same octet may be a separate UL TCI state.
- TCI state ID 14-30: This field may indicate a TCI state identifiable by the higher layer signaling TCI-StateId. If the D/U field is configured to be 1, the TCI state ID field may be used to represent TCI-StateId expressible by 7 bits. If the D/U field is configured to be 0, a most significant bit (MSB) of the TCI state ID field may be considered as a reserved bit, and the remaining 6 bits may be used to represent the higher layer signaling UL-TCIState-Id. The number of maximally activatable TCI states may be 8 in a case of joint TCI states, and may be 16 in a case of separate DL or UL TCI states.
- R: This indicates a reserved bit and may be configured to be 0.

The above unifiedTCI-StateType-r17 in MIMOparam-r17 in the higher layer signaling ServingCellConfig may be defined as a new parameter such as unifiedTCI-StateType-r18 in the higher layer signaling MIMOparam-r18 in Serving-CellConfig, or a conventional parameter may be reused.

<First embodiment: Beam reporting method for simultaneous transmission using multiple panels>

Hereinafter, according to an embodiment of the disclosure, methods of performing beam reporting by a UE to a base station to simultaneously transmit an uplink channel by using multiple panels are described in detail.

In NR Release 17, techniques have been enhanced and newly introduced to support beams, which have been managed separately for uplink and downlink in earlier releases, using a single unified TCI framework. Based on a unified TCI, as previously described, not only a reception beam for receiving a downlink signal but also a transmission beam for transmitting an uplink signal may be indicated through a TCI. More specifically, the UE may determine a transmission beam or a reception beam, based on a transmission filter or a reception filter having been used to transmit or receive a reference signal indicated by a TCI state.

In order for the UE to transmit uplink signals simultaneously using multiple panels, an uplink transmission filter for each panel may be required. If the UE selects two panels among multiple panels and transmits uplink signals by using respective transmission beams, the UE needs to determine two transmission beams. Extending this, if the UE selects N panels among multiple panels and transmits uplink signals by using respective transmission beams, the UE needs to determine N transmission beams. To support uplink simultaneous transmission using multiple panels, a method of reporting and determining N transmission beams and the transmission beams determined in the same method may be applied for uplink simultaneous transmission commonly to a system supporting multi-panel simultaneous transmission based on single DCI (sDCI) and a system supporting multi-panel simultaneous transmission based on multiple DCIs (multi DCI, mDCI). Alternatively, N transmission beams may be commonly reported and determined for both the sDCI-based system and the mDCI-based system, but a separate application method suitable for each system may be considered. Alternatively, a method of reporting and determining N transmission beams suitable for the sDCI-based system and a method of reporting and determining N transmission beams suitable for the mDCI-based system may be distinguished and applied separately.

The UE may perform, for the base station, beam reporting for determining transmission beams. The UE may use a beam reporting method supported up to NR Release 17 to perform beam reporting. Alternatively, the UE may use a method obtained by enhancing the beam reporting method supported up to NR Release 17, or introduce a new beam reporting method different from the beam reporting method supported up to Release 17. For example, to support uplink simultaneous transmission using multiple panels, the UE may additionally report group-based beam reporting enhanced in NR Release 17 to perform beam reporting. In a detailed description of the enhanced group-based beam reporting, CSI information reported by the UE to the base station may include the following information (Here, a group-based beam reporting method supported in NR Release 17 may be assumed to correspond to a case where N is equal to 2 (N=2) with respect to the aforementioned N transmission beams. That is, a transmission beam reporting and determination method for supporting simultaneous transmission using multiple panels, based on NR Release 17 described later assumes the case where N is equal to 2. However, this merely corresponds to an example, and N may be extended to an integer greater than 2.):

- Resource set indicator
- First and second CSI-RS resource indicators (CRIs) or SSB resource indicators (SSBRIs) for each reported resource group (or for convenience of explanation, "reported resource group" may be defined as "beam group." a maximum of four groups may be defined, and the number of groups configured for the corresponding UE is determined based on a higher layer parameter (e.g., "nrofReportedGroups") configured by the base station.)
- RSRP or differential RSRP for reported CRI or SSBRI. RSRP is reported as 7 bits only for the first resource of the first resource group, and differential RSRP is reported as 4 bits for other resource groups and resources of the resource groups.

- CORESETPoolIndex (the corresponding information may be implicitly omitted, and if the information is omitted, first beam information of each resource group may be associated with a case where COPRESETPoolIndex is "0" or CORESETSETPoolIndex is not configured, and second beam information of each resource group may be assumed to be associated with a case where COPRESETPoolIndex is "1." CORESETPoolIndex and beam information may have mapping information therebetween different from the example described above.)
- Associated SRS resource set (the corresponding information may be implicitly omitted or not reported. If the information is not reported, an association may be previously defined between each resource group and each SRS resource set. For example, first beam information in a resource group may be associated with the first SRS resource set (e.g., an SRS resource set having a small Id value among multiple SRS resource sets having "codebook" or "nonCodebook" as usage), and second beam information in a resource group may be associated with the second SRS resource set (e.g., an SRS resource set having a large Id value among multiple SRS resource sets having "codebook" or "nonCodebook" as usage).

Here, information on a first reported resource (or first reported beam) in a reported resource group (or beam group) and information on a second reported resource (or second reported beam) may be selected from multiple resource sets (e.g., two sets in NR Release 17) for group-based beam reporting introduced in NR Release 17, respectively. That is, the UE may select one of CSI-RS resources in the first resource set or one of SSB resources in the first resource set to indicate the first beam of a beam group. That is, the UE may select one of CSI-RS resources in the second resource set or one of SSB resources in the second resource set to indicate the second beam of a beam group. In this case, the UE needs to be able to simultaneously transmit/receive an uplink/downlink channel using multiple panels, based on the reception beams for receiving two selected CSI-RS resources or SSB resources in each beam group. Alternatively, CRIs or SSBRIs may be selected from two different CSI-RS resources or two different SSB resources which the UE may simultaneously transmit or receive by using one or multiple spatial domain reception (receive) filters in the same manner as the support of groupBasedBeamReporting introduced before NR Release 17. In a beam reporting method based on Release before NR Release 17, separate two resource sets may not be configured unlike group-based beam reporting based on NR Release 17, and two different CSI-RS or SSB resources, which the UE is able to simultaneously transmit or receive by using multiple panels, among multiple resources may be configured.

The CSI information reported by the UE to the base station as described above corresponds to a CSI reporting method supported in NR Release 17, and the UE may report, to the base station, additional CSI information for multi-panel simultaneous transmission by additionally reporting the following information:

- Report CapabilityIndex for a capability value indication for a reported CRI or SSBRI (or any named indicator, such as a UE capability set index, which enables execution of an operation capable of indicating the number of SRS ports maximally supportable by the UE for the reported CRI or SSBRI may be reported) with respect to each resource group and a resource of the resource group by using 2 bits, respectively. Alternatively, the number of bits for reporting CapabilityIndex may be greater than 2 according to the maximum number of supportable SRS ports. As another example of CapabilityIndex reporting, instead of a method of reporting CapabilityIndex with respect to each beam group and a resource in the group, CapabilityIndex may be reported only for each beam group, and it may be understood that multiple resources in the reported beam group are supportable by the maximum number of SRS ports according to the same CapabilityIndex.

That is, the UE additionally reports the maximum number of supportable SRS ports with respect to each beam group and a resource in the beam group, thereby supporting the base station to use the SRS ports to configure two TCI states so as to perform simultaneous support using multiple panels. For example, the base station may expect that two resources included in the same beam group are received through different panels. As described above, if a beam group and a CSI resource set corresponding to same are configured, the base station may use a reported beam group pair to activate two TCI states. Alternatively, two TCI states may be activated by using a beam pair in a beam group reported from two different CSI-RS resources or two different SSB resources, which the UE may simultaneously receive by using one or multiple spatial domain reception (receive) filters, as described above, among multiple CSI-RS resources or multiple SSB resources in the same manner as groupBasedBeamReporting before NR Release 17. That is, with respect to a MAC CE for activating/deactivating a unified TCI state enhanced in NR Release 17, a conventional operation capable of indicating only one TCI state for one codepoint may be extended to enable indication of a maximum of two TCI states for one codepoint, and two TCI states for supporting simultaneous transmission using multiple panels for one codepoint may refer to a beam group pair of a beam group report reported from the UE. In the above description, for convenience of explanation, a case where two TCI states are indicated has been described. However, in a case of simultaneous transmission using a number of $N_{UL,panel}$ panels greater than 2, two TCI states are not indicated by one codepoint, and $N_{UL,panel}$ TCI states may be indicated by one codepoint. As another example, the base station may configure the same CSI resource in each CSI resource set in the same group through a higher layer configuration, and consider an operation of receiving the same CSI resource by using different panels. This may be used as a method capable of considering simultaneous transmission or reception using multiple panels for a single TRP.

As another method, when the UE reports a beam to the base station, the UE may configure and report panel information on the reported beam as additional CSI information. For example, when a maximum number of panels supportable by the UE is defined as $N_{panel}$, the UE may add $\log_2 N_{panel}$ bits for each reported CRI or SSBRI and notify the base station of information on a panel. The information may be defined as "panel index," or may be configured as another form of CSI reporting information capable of implicit indication rather than being explicitly indicated as information on a panel. In a specific example, if the number of resources in a CSI resource set associated with a CSI report is 8, and a CSI-RS resource corresponding to a CRI of 0, 1, 2, or 3 is received through a first panel of two panels operable by the UE, the UE may configure an additional one bit as "0" and report same together with the CRI and a corresponding RSRP (or may correspond to an SINR or a kind of channel measurement information). That is, the UE may report, to the base station, that the resource has been received through the first panel among the two panels. Similarly, if a CSI-RS resource corresponding to a CRI of 4, 5, 6, or 7 is received through a second panel of two panels operable by the UE, the UE may configure an additional one bit as "1" and report same together with the CRI and a corresponding RSRP (or may correspond to an SINR or a kind of channel measurement information). When additional information is added to a CSI report as described above, the base station may configure a beam combination that is simultaneously transmittible by using multiple panels, based on reported beam information and corresponding panel information, and may transmit, to the UE through the beam combination, a MAC CE that configures multiple TCI states in one codepoint.

The UE may receive the MAC CE from the base station and activate the TCI states, finally, one codepoint is indicated through DCI format 1_1 or DCI format 1_2, and the UE may apply the one codepoint to transmit an uplink signal after a BAR time. Even when panel information is added as described above, the base station may configure the same CSI resource in each CSI resource set in the same group through a higher layer configuration, and consider an operation of receiving the same CSI resource by using different panels. Similarly, if the same CSI resource is configured in different resource sets in a group, the UE may report a corresponding CRI, a relevant RSRP (or may correspond to an SINR or a kind of channel measurement information), and panel information (e.g., this is configured by $\log_2 N_{panel}$ bits as described above) to the base station.

As described above, in the first embodiment, the UE may report beam information to the base station and, based on the beam information, the base station may configure a higher layer parameter for supporting simultaneous transmission using multiple panels, and transmit a MAC CE to the UE to activate a TCI state. The MAC CE transmitted by the base station to the UE may be a MAC CE for indicating multiple TCI states based on unified TCI as shown in FIG. 12 as in a TCI state indication method based on a unified TCI scheme described above. Alternatively, a MAC CE as shown in FIG. 13 or 14 may be configured to indicate multiple TCI states through one codepoint, thereby activating, in one codepoint, multiple TCI states for supporting multi-panel simultaneous transmission. The multiple TCI states activated in one codepoint through such a MAC CE (FIG. 12, FIG. 13, or FIG. 14) may be multiple TCI states simultaneous transmittable by using multiple panels, or may be multiple TCI states not supporting simultaneous transmission using multiple panels. The former and latter may be configured by the base station by identifying same through a group-based beam report transmitted by the UE to the base station, and the UE and the base station may implicitly identify, through the group-based beam report reported by the UE (reported to the base station), whether a TCI state combination is a TCI state combination capable of simultaneous transmission using multiple panels or a TCI state combination incapable of simultaneous transmission using multiple panels. Alternatively, an indicator indicating multi-panel simultaneous transmission may be added for each codepoint by using an unused field of a reserved area (R area). Alternatively, if it is not possible to secure a reserved area for the entire number of codepoints, an indicator area for indicating multi-panel simultaneous transmission may be newly added using a new octet (8 bits). For example, if there are a total of 8 codepoints, additional bits for indicating multi-panel simultaneous transmission may be configured by a total of 8 bits, and a MAC CE may be configured by using a reserved area or adding a new octet. When the first bit (most significant bit, MSB) is configured to be 1, and multiple (e.g., two) TCI states are indicated for the first codepoint, the UE and the base station may activate the TCI states so that uplink simultaneous transmission using multiple panels is performed based on multiple TCI states. Alternatively, when the first bit (MSB) is configured to be 0, and multiple (e.g., two) TCI states are indicated for the first codepoint, the UE and the base station may indicate that it is not possible to perform uplink simultaneous transmission using multiple panels, based on multiple TCI states. When simultaneous transmission using multiple panels is not performed as described above, the multiple TCI states indicated by the corresponding codepoint may support multi-TRP transmission based on time division multiplexing (TDM).

Multiple TCI states may be activated/configured/indicated by one codepoint as described above, and a method of indicating one codepoint indicating multiple TCI states through one field in single DCI is a method suitable for simultaneous transmission using multiple panels, based on sDCI. For a method of simultaneous transmission using multiple panels, based on mDCI, in which uplink transmission is performed through multiple DCIs toward a TRP which may correspond to each CORESETPoolIndex, beam reporting is performed by the UE by determining multiple (e.g., N=2) transmission beam pairs as a beam group and reporting the determined beam group to the base station through a procedure identical or similar to the above procedure. The base station and the UE may define an explicit rule in a 3GPP specification to define first transmission beam information in a beam group (here, if a group-based beam reporting (groupBasedBeamReporting) method is considered, the information may refer to first reported beam information in a beam group in CSI information included in UCI, and the beam information is a CRI or SSBRI) to be associated with CORESETPoolIndex = 0, and to define second reported beam information in the CSI information included in the UCI (here, if a group-based beam reporting (groupBasedBeamReporting) method is considered, the information may refer to second reported beam information in the beam group, including the first transmission beam information, in the CSI information included in the UCI, and the beam information is a CRI or SSBRI) to be associated with CORESETPoolIndex = 1. Alternatively, the base station and the UE may define an association between a reported beam group and CORESETPoolIndex according to an implicit method. The relation between first beam information and second beam information in a reported beam group and values of CORESETPoolIndex having different indexes is defined, as in the case where the explicit rule described above is followed, such that the first beam information in the beam group may be associated with CORESETPoolIndex = 0, and the second beam information in the beam group may be associated with CORESETPoolIndex = 1. When the implicit method is followed, such an association may not be specified in a 3GPP specification. However, the base station may consider an implicit relation to indicate beam information (e.g., a CRI or SSBRI) associated with a corresponding CORESETPoolIndex in a beam group through a reference signal (referenceSigal) of a TCI state (DLorJoint-TCIstate-r17 or UL-TCIstate) for scheduled uplink channel transmission by means of DCI associated with the CORESETPoolIndex (i.e., a PDCCH received through a CORESET having CORSETPoolIndex of 0 (or same may not be configured) or 1). DCI indicating the TCI state may, similarly in the conventional unified TCI framework, be indicated through a DL DCI format (e.g., DCI format 1_1 or 1_2) for downlink scheduling or indicating a TCI state, and be applied to uplink transmission after a beam application time (BAT), or may be indicated through a UL DCI format (e.g., DCI format 0_1 or 0_2) for scheduling an uplink PUSCH and be applied after a BAT or be applied immediately at a time point of transmitting the PUSCH scheduled by the DCI.

<Second embodiment: SRS configuration method for simultaneously transmitting a codebook-based PUSCH by using multiple panels>

This embodiment specifically describes a method of configuring an SRS resource set and an SRS resource to support simultaneous transmission of a codebook-based PUSCH by using multiple panels.

If uplink simultaneous transmission using multiple panels is possible according to a capability of the UE, the UE may configure, for the base station, that the UE is able to support the UE capability and report same to the base station. For example, a UE capability reporting parameter reported by the UE to the base station may be "simulTx-PUCCH-PUSCH," and the UE may configure a value for the parameter to be "supported" or "enable" to report that the UE is able to simultaneously transmit a PUCCH or PUSCH using multiple panels. The UE may simultaneously transmit multiple PUCCHs or PUCCH repeated transmissions or simultaneously transmit multiple PUSCHs or PUSCH repeated transmissions by using multiple panels. On the contrary, the UE may not support an operation of simultaneously transmitting a PUCCH and a PUSCH by using multiple panels. The UE capability reporting parameter "simulTx-PUCCH-PUSCH" reported by the UE to the base station merely corresponds to an example, and the UE may report that the UE is able to perform uplink simultaneous transmission using multiple panels, to the base station through a different name of parameter capable of similar or identical UE capability reporting.

Thereafter, the base station may configure higher layer parameters for supporting the UE, and the configured higher layer parameters may include a higher layer parameter for uplink simultaneous transmission using multiple panels. If the base station configures, for the UE, a higher layer parameter for uplink simultaneous transmission using multiple panels, the base station may configure an SRS resource set for PUSCH transmission. If a codebook-based PUSCH is supported using multiple panels, the base station may configure an SRS resource set having "usage" configured to be "codebook" for the UE. One or multiple (e.g., two) SRS resource sets having "usage" of "codebook" for simultaneously transmitting a codebook-based PUSCH using multiple panels may be configured. Configuring multiple SRS resource sets having "usage" of "codebook" may mean that uplink signals may be transmitted to multiple TRPs according to the relation between as many TCI states, described later, as the number of the configured SRS resource sets. For example, if two SRS resource sets having "usage" of "codebook" are configured for the UE by the base station, this may indicate that the UE is able to transmit uplink signals to up to two TRPs. In the disclosure, a method of simultaneously transmitting uplink signals to two TRPs is mainly described for convenience of explanation. However, the disclosure may be expanded to enable simultaneous transmission of uplink signals to more than two TRPs, based on the described method.

When configuring multiple SRS resource sets having "usage" of "codebook," the base station may configure one or more SRS resources in each SRS resource set. When configuring a higher layer parameter for an SRS resource set for the UE, the base station may additionally configure "followUnifiedTCTstate-r17." If "followUnifiedTCTstate-r17" is configured in an SRS resource set, the UE may transmit an SRS resource in the SRS resource set according to a spatial relation referring to an RS (e.g., SRS) or an RS (e.g., CSI-RS or SSB) having been used to determine an uplink transmission spatial filter having "qcl-Type" in "QCL-Info" configured to be typeD, such as indicated "DLorJoint-TCIstate-r17" (or "DLorJointTCIState," or if the higher layer parameter "unifiedTCI-StatType" is configured to be "joint," "TCI-State" added according to AddModList of "dl-OrJoint-TCIStateList") or "UL-TCIstate" (or if the higher layer parameter "unifiedTCI-StatType" is configured to be "separate," "TCI-UL-State"). A reference signal indicated by DLorJoint-TCIstate-r17 may be a CSI-RS in NZP-CSI-RS-ResourceSet for which the higher layer parameter repetition is configured, or a CSI-RS in NZP-CSI-RS-ResourceSet for which the higher layer parameter trs-Info is configured. Alternatively, a reference signal indicated by "UL-TCIstate" may be a CSI-RS in NZP-CSI-RS-ResourceSet for which the higher layer parameter repetition is configured, a CSI-RS in NZP-CSI-RS-ResourceSet for which the higher layer parameter trs-Info is configured, an SRS resource having "usage" configured to be "beamManagement," or an SSB associated with a PCI identical to or different from the PCI of a serving cell.

In the disclosure, for convenience of explanation, it is assumed that the higher layer parameter "followUnifiedTCTstate-r17" is configured in multiple SRS resource sets, and an SRS resource is transmitted according to a spatial relation determined by referring to a TCI state (e.g., TCI-State, DLorJoint-TCIstate-r17, or UL-TCIstate) indicated by DCI.

As described in the first embodiment, if a MAC CE that activates multiple TCI states is received by the UE from the base station to support uplink simultaneous transmission using multiple panels, and one codepoint including multiple (e.g., N) TCI states is indicated by DCI, a first SRS resource set among multiple SRS resource sets is associated with a first TCI state among the indicated N TCI states. That is, according to a spatial relation determined by referring to the first TCI state among the indicated N TCI states, the UE may transmit all SRS resources in the first SRS resource set. The first SRS resource set indicates an SRS resource set having the smallest SRS-ResourceSetId value among multiple SRS resource sets (for convenience of description, an SRS resource set described in the second embodiment and the third embodiment indicates an SRS resource set having "usage" of "codebook") having "usage" configured to be "codebook." Similarly, a second SRS resource set among the multiple SRS resource sets is associated with a second TCI state among the indicated N TCI states. That is, according to a spatial relation determined by referring to the second TCI state among the indicated N TCI states, the UE may transmit all SRS resources in the second SRS resource set. Through similar application to more than two SRS resource sets and TCI states, the UE may transmit all SRS resources included in an n-th SRS resource set according to a spatial relation determined by referring to an n-th TCI state. If multiple SRS resources are included in one SRS resource set, each SRS resource may be associated with a panel according to different methods as follows. If the UE has reported, through a UE capability report, that the UE is able to perform uplink simultaneous transmission using multiple panels, and the base station configures a higher layer parameter for uplink simultaneous transmission using multiple panels by considering the report, an association between an SRS resource and a panel as described below may be established.

- [Association 1] Each SRS resource included in an SRS resource set may be associated with one panel supported by a UE. For example, a first SRS resource in a first SRS resource set may be associated with a first panel among panels supported by the UE (The panel order of the multiple panels may be determined by implementation of the UE if information on a panel is implicitly configured and indicated. Alternatively, if information on a panel is explicitly configured and indicated, the panel order may be determined by a lowest panel indicator. Subsequent second and third panels may also be defined similarly.). A second SRS resource in the first SRS resource set may be associated with a second panel among the panels supported by the UE. A described configuration method merely corresponds to an example, the number of SRS resources in one SRS resource set may be configured to be a number other than 2, and each SRS resource may be associated with any panel supported by the UE. However, such an association needs to be configured to ensure that the base station and the UE share a common understanding. As in the example above, a method of defining the association between SRS resources and panels supported by the UE in order may be considered. Additionally, to ensure a common understanding between the base station and the UE regarding the association between SRS resources and panels, group-based beam reporting information described earlier may be utilized. Alternatively, information on a panel supported by the UE may be explicitly added and configured in SRS-resource configured as a higher layer parameter. For example, a higher layer parameter such as "panel_Index" is added in the higher layer parameter SRS-Resource, and the parameter may be indicated as one value among 0 to $N_{panel}$ - 1.

FIG. 15 illustrates an example of a case where each of two resource sets includes two SRS resources and a UE is capable of supporting uplink simultaneous transmission by using two panels in a wireless communication system according to an embodiments of the disclosure. A codepoint indicated by a TCI area of DCI 1501 received by a UE from a base station indicates two TCI states 1502 and 1502 for simultaneous transmission using multiple panels. The first TCI state 1502 may be used for determining a spatial relation for transmitting SRS resources 1511 and 1512 in a first SRS resource set 1510. The second TCI state 1503 may be used for determining a spatial relation for transmitting SRS resources 1521 and 1522 in a second SRS resource set 1520. A first panel 1531 of the UE may be implicitly or explicitly associated with the first SRS resource 1511 in the first SRS resource set 1510. If the first TCI state includes, as a reference RS, an RS transmitted from a first TRP among multiple TRPs, the UE may understand that the first SRS resource 1511 in the first SRS resource set 1510 has been configured to be transmitted to the first TRP by using the first panel 1531 of the UE. In addition, the first panel 1531 may also be implicitly or explicitly associated with the first SRS resource 1521 in the second SRS resource set 1520. If the second TCI state includes, as a reference RS, an RS transmitted from a second TRP among multiple TRPs, the UE may understand that the first SRS resource 1511 in the second SRS resource set 1510 has been configured to be transmitted to the second TRP by using the first panel 1531 of the UE. A second panel 1532 of the UE may be implicitly or explicitly associated with the second SRS resource 1512 in the first SRS resource set 1520. If the first TCI state includes, as a reference RS, an RS transmitted from the first TRP among multiple TRPs, the UE may understand that the first SRS resource 1511 in the first SRS resource set 1510 has been configured to be transmitted to the first TRP by using the second panel 1532 of the UE. In addition, the second panel 1532 may also be implicitly or explicitly associated with the second SRS resource 1522 in the second SRS resource set 1520. If the second TCI state includes, as a reference RS, an RS transmitted from the second TRP among multiple TRPs, the UE may understand that the second SRS resource 1522 in the second SRS resource set 1520 has been configured to be transmitted to the second TRP by using the second panel 1532 of the UE. FIG. 15 illustrates a case where the number of SRS ports of each SRS resource included in each SRS resource set is 2.

- [Association 2] An SRS resource included in an SRS resource set may be associated with one panel or multiple panels. For example, a first SRS resource in a first SRS resource set may be associated with a first panel (or second panel) among panels supported by the UE, and a second SRS resource in the first SRS resource set may be associated with the first panel and the second panel among the panels supported by the UE. Similarly, a first SRS resource in a second SRS resource set may be associated with the second panel (or first panel) among the panels supported by the UE, and a second SRS resource in the second SRS resource set may be associated with the first panel and the second panel among the panels supported by the UE. A described configuration method merely corresponds to an example, the number of SRS resources in one SRS resource set may also be configured to be a number other than 2, and each SRS resource may be associated with any panels supported by the UE. In addition, unlike the described example, a first SRS resource in an SRS resource set may be associated with multiple panels. However, similar to [Association 1], [Association 2] also needs to be configured to ensure that the base station and the UE share a common understanding. The described example may be considered as a method of defining the association between SRS resources and panels supported by the UE. Additionally, to ensure a common understanding between the base station and the UE regarding the association between SRS resources and panels, group-based beam reporting information described earlier may be utilized. Alternatively, information on a panel supported by the UE may be explicitly added and configured in SRS-resource configured as a higher layer parameter. For example, a higher layer parameter such as "panel_Index" is added in the higher layer parameter SRS-Resource, and the parameter may be indicated as one value or multiple values among 0 to $N_{panel}$ - 1. Alternatively, "panel_Index" may be configured as a higher layer parameter by using a bitmap format by configuring a panel associated with the corresponding SRS resource as 1 and indicating an unassociated panel by 0. In this case, "panel_Index" may be configured by $N_{panel}$ bits. Alternatively, "panel_Index" may be configured by $\left\lceil \log_2\left(\sum_{k=1}^{N_{panel}} \binom{N_{panel}}{k}\right)\right\rceil$ bits to consider all combinations of supported panels.

FIG. 16 illustrates an example of a case where each of two resource sets includes two SRS resources and a UE is capable of supporting uplink simultaneous transmission by using two panels in a wireless communication system according to an embodiments of the disclosure. A codepoint indicated by a TCI area of DCI 1601 received by a UE from a base station indicates two TCI states 1602 and 1602 for simultaneous transmission using multiple panels. The first TCI state 1602 may be used for determining a spatial relation for transmitting SRS resources 1611 and 1612 in a first SRS resource set 1610. The second TCI state 1603 may be used for determining a spatial relation for transmitting SRS resources 1621 and 1622 in a second SRS resource set 1620. A first panel 1631 of the UE may be implicitly or explicitly associated with the first SRS resource 1611 in the first SRS resource set 1610. If the first TCI state includes, as a reference RS, an RS transmitted from a first TRP among multiple TRPs, the UE may understand that the first SRS resource 1611 in the first SRS resource set 1610 has been configured to be transmitted to the first TRP by using the first panel 1631 of the UE. The number of SRS ports configured in the first SRS resource 1611 in the first SRS resource set 1610 may be equal to 2. A second panel 1632 of the UE may be implicitly or explicitly associated with the first SRS resource 1621 in the second SRS resource set 1620. If the second TCI state includes, as a reference RS, an RS transmitted from the second TRP among multiple TRPs, it may be understood that the first SRS resource 1621 in the second SRS resource set 1620 has been configured to be transmitted to the second TRP by using the second panel 1632 of the UE. The number of SRS ports configured in the first SRS resource 1621 in the second SRS resource set 1620 may be equal to 2. The second SRS resource 1612 configured in the first SRS resource set 1610 may be implicitly or explicitly associated with the first panel 1631 and the second panel 1632 that are all the panels supported by the UE. If the first TCI state includes, as a reference RS, an RS transmitted from the first TRP among the multiple TRPs, it may be understood that the second SRS resource 1612 in the first SRS resource set 1610 has been configured to be transmitted to the first TRP by using the first panel 1631 and the second panel 1632 that are all the panels of the UE. The number of SRS ports configured in the second SRS resource 1612 in the first SRS resource set 1610 may be equal to 4 that is a number enabling a support using both of the two panels. Here, first two SRS ports may be associated with the first panel 1631 and remaining two SRS ports may be associated with the second panel 1632. This relation between SRS ports and multiple panels may be an implicit sequential association or may be explicitly indicated by a new higher layer parameter. For example, as many values of panel_Index as the number of SRS ports for an SRS resource may be configured in a sequence form. The second SRS resource 1622 configured in the second SRS resource set 1620 may be implicitly or explicitly associated with the first panel 1631 and the second panel 1632 that are all the panels supported by the UE. If the second TCI state includes, as a reference RS, an RS transmitted from the second TRP among the multiple TRPs, it may be understood that the second SRS resource 1622 in the second SRS resource set 1620 has been configured to be transmitted to the second TRP by using the first panel 1631 and the second panel 1632 that are all the panels of the UE. The number of SRS ports configured in the second SRS resource 1622 in the second SRS resource set 1620 may be equal to 4 that is a number enabling a support using both of the two panels. Similar to the second SRS resource 1612 in the first SRS resource set 1610 described above, an implicit or explicit association between the panels supported by the UE and the SRS ports may be configured.

The above description has been described in detail under the assumption of a case where an SRS resource is transmitted based on an indicated TCI state. However, even when "followUnifiedTCTstate-r17" is not configured, the above method may be applied based on spatial relation info configured in an SRS resource in each SRS resource set to support simultaneous transmission using multiple panels. In this case, the first TCI state described above may be replaced with spatialRelationInfo configured by a higher layer parameter for an SRS resource in the first SRS resource set, and the second TCI state described above may be replaced with spatialRelationInfo configured by a higher layer parameter for an SRS resource in the second SRS resource set.

The methods described above indicate multiple TCI states through sDCI, and each of the indicated TCI states may be associated with each SRS resource set and an SRS resource(s) included in each SRS resource set. That is, if each TCI state is associated with an SRS resource set, an SRS resource may be transmitted by referring to a reference signal (referenceSignal) indicated by the TCI state, a PUSCH transmission port may be configured to be identical to an SRS port of an SRS resource indicated through an SRI so as to transmit a PUSCH (e.g., when a noncodebook-based PUSCH is supported), or a precoder indicated by a transmission precoding matrix indicator (TPMI) (e.g., when a codebook-based PUSCH is supported) may be applied to a PUSCH transmission port configured to be identical to an SRS port of an SRS resource indicated through an SRI so as to transmit a PUSCH.

Respective PUSCHs may be scheduled using multiple DCIs through mDCI, and the scheduled PUSCHs may be fully/partially/non-overlapping in the time/frequency domain. Each DCI is associated with a different value of CORESETPoolIndex, and each scheduled PUSCH is also associated with a different value of CORESETPoolIndex. In order to transmit PUSCHs scheduled by respective DCIs, two different SRS resource sets may be configured through a higher layer parameter, and according to an explicit rule in a 3GPP technology specification or an implicit rule between the base station and the UE, a first SRS resource set (this may refer to an SRS resource set configured to have a low (small) value of SRS-ResourceSetId among two different SRS resource sets having "codebook" or "nonCodebook" as usage) may be associated with a CORESET having CORESETPoolIndex = 0 (or having no CORESETPoolIndex configured) and a PUSCH scheduled by DCI in the CORESET. A second SRS resource set (this may refer to an SRS resource set configured to have a high (great) value of SRS-ResourceSetId among two different SRS resource sets having "codebook" or "nonCodebook" as usage) may be associated with a CORESET having CORESETPoolIndex = 1 and a PUSCH scheduled by DCI in the CORESET. The DCI associated with each CORESETPoolIndex may indicate a TCI state based on beam information in a beam group associable with each CORESETPoolIndex, as described in the first embodiment, so as to schedule corresponding PUSCH transmission. For example, a TCI state (DLorJoint-TCIstate-r17 or UL-TCIstate) in DCI received in a CORESET having CORESETPoolIndex = 0 (or having no CORESETPoolIndex configured) may be indicated through first beam information in a beam group. The DCI may indicate the TCI state through a DL DCI format (e.g., DCI format 1_1 or 1_2) and apply beam information indicated by the TCI state to uplink transmission after a BAT as described in the first embodiment. Alternatively, as described in the first embodiment, the DCI may indicate the TCI state through a UL DCI format (e.g., DCI format 0_1 or 0_2) and apply beam information indicated by the TCI state to uplink transmission after a BAT, or apply same immediately at a time point of transmitting an uplink PUSCH scheduled by the DCI.

<Third embodiment: When single DCI-based multi-panel simultaneous transmission is performed, association between SRS port and PUSCH port and configuration method>

In the third embodiment, with respect to a UE supporting simultaneous transmission using multiple panels based on single DCI (sDCI), an association between an SRS port and a PUSCH port and a configuration method are described in detail.

In the second embodiment, two methods (association 1 and association 2) for configuring an SRS resource set for supporting multi-panel simultaneous transmission have been described in detail. If the UE is able to simultaneously transmit a PUSCH to two TRPs by using two panels, based on sDCI, the base station may indicate an SRS resource for PUSCH transmission through an SRI by using an SRS resource set (or a higher layer parameter may be configured to follow beam information configured in the SRS resource set or beam information configured in an SRS resource in the SRS resource set rather than following a unified TCI state, but for convenience of explanation, it is assumed that the UE transmits the SRS resource set according to multiple TCI states indicated by a unified TCI state) associated with each TRP (each TRP may be indirectly indicated to the UE through multiple TCI states determined through group-based beam reporting). Similar to two SRI fields for supporting NR Release 17 sDCI TDM mTRP PUSCH repeated transmission, the base station may indicate two SRI areas in sDCI to the UE. Unlike NR Release 17, when a noncodebook PUSCH is supported, bits may be configured to enable even a second SRI area among the two SRI fields to indicate the number of layers (or ranks) of a PUSCH transmitted to a second TRP. In addition, the number of SRS resources configurable in each SRS resource set may be identical to or different from each other. If a first SRS resource set and a second SRS resource set include different numbers of SRS resources, both of the two SRI areas need to be able to indicate ranks unlike NR Release 17. Therefore, the number of bits of a first SRI area and the number of bits of the second SRI area may be different, and the number of bits of the second SRI area may be greater than that of the first SRI area according to a configuration. Similarly, when a codebook PUSCH is supported, a second TPMI area needs to be able to indicate the number of ranks of a transmitted second PUSCH, and the number of bits in each TPMI area may be selected differently depending on the number of SRS ports of an SRS resource indicated by each SRI area. Alternatively, if a constraint is imposed such that the numbers of SRS ports of the SRS resources within respective SRS resource sets indicated by the SRI areas are equal to each other, since the second TPMI area also needs to be able to indicate the number of ranks unlike NR Release 17, the numbers of bits in two TPMI areas may be selected to be the same.

If the base station schedules the UE to simultaneously transmit two PUSCHs towards respective TRPs via respective panels through mTRP multi-panel simultaneous transmission, the base station may include information for mTRP multi-panel simultaneous transmission in DCI for PUSCH scheduling. For example, the base station may use an SRS resource set indicator to indicate multi-panel simultaneous transmission to the UE. In NR Release 17, an SRS resource set indicator indicates one of single TRP TDM PUSCH repeated transmission or multi-TRP TDM PUSCH repeated transmission. However, in NR Release 18, the indicator may be used to indicate single TRP transmission or multi-TRP transmission. In this case, in single TRP transmission, single TRP panel selection-based transmission using a single panel is performed, or single TRP multi-panel simultaneous transmission using multiple panels may be performed. After single TRP transmission is indicated through an SRS resource set indicator, one SRS resource associated with one panel (for single TRP panel selection-based transmission) or two SRS resources associated with two panels (for single TRP multi-panel simultaneous transmission) may be selected from among SRS resources having association between a panel and an SRS resource similar to Association 1 of the second embodiment through an SRI area (when two SRS resource sets are configured, two SRI areas are included in DCI. Therefore, only a first SRI area or a second SRI area is used by the UE and the remaining area is disregarded, or all bits for the first SRI area or the second SRI area may be used to configure a single SRI area so as to use more codepoints).

That is, the base station may schedule one of single TRP panel selection-based transmission or single TRP multi-panel simultaneous transmission for the UE through an SRS resource set indicator indication for single TRP transmission and a combination of SRI areas according to the indication. In this case, single TRP panel selection-based transmission may be the same as single TRP transmission in Release before NR Release 18, and accordingly, an association between an SRS port and a PUSCH port may be determined identically. That is, in a case of a codebook PUSCH, PUSCH ports may be configured to be identical to indicated SRS ports of an SRS resource, and the number of PUSCH ports may be configured to be the same as that of SRS ports determined according to a higher layer parameter configuration for the SRS resource. For example, if the number of SRS ports of an SRS resource selected by an SRI to schedule a PUSCH transmission is 4, four PUSCH ports may be used for the PUSCH transmission, and the PUSCH ports may be configured to be identical to the SRS ports, respectively. A first SRS port may be mapped to PUSCH port 0, a second SRS port may be mapped to PUSCH port 1, a third SRS port may be mapped to PUSCH port 2, and a fourth SRS port may be mapped to PUSCH port 3. In a case of a noncodebook PUSCH, each SRS resource is configured by only one SRS port, and an SRS port of an (i+1)th SRS resource in an SRS resource set may be mapped to PUSCH port i. For example, if four SRS resources are configured in an SRS resource set, an SRS port of a first SRS resource may be mapped to PUSCH port 0, an SRS port of a second SRS resource may be mapped to PUSCH port 1, an SRS port of a third SRS resource may be mapped to PUSCH port 2, and an SRS port of a fourth SRS resource may be mapped to PUSCH port 3. In a case of supporting single TRP multi-panel simultaneous transmission, if two SRS resources are indicated by an SRI (this may be one area or two SRI areas), a mapping relation between SRS ports and PUSCH ports in two SRS resources needs to be determined. The following two mapping methods may be considered:

- Mapping method 1) Method of mapping each SRS resource selected by an SRI and a PUSCH transmission of each panel and individually indexing PUSCH ports: In Mapping method 1, indexing of PUSCH ports may be performed individually for a PUSCH transmitted through each panel. In a case of a codebook PUSCH, with respect to a PUSCH transmitted through a first SRS resource, identically to the SRS ports of the first SRS resource, SRS ports 0 to 3 (if the number of the SRS ports of the first SRS resource is 4) are mapped to PUSCH ports 0 to 3 transmitted by being configured to be identical to the first SRS resource, and with respect to a PUSCH transmitted through a second SRS resource, identically to the SRS ports of the second SRS resource, SRS ports 0 to 3 (if the number of the SRS ports of the second SRS resource is 4) are mapped to PUSCH ports 0 to 3 transmitted by being configured to be identical to the second SRS resource. In a case of a noncodebook PUSCH, with respect to a PUSCH transmitted through a first panel, among SRS resources (a relation between an SRS resource and a panel may be defined through an implicit or explicit higher layer parameter) associated with the first panel, a port of a first SRS resource may be mapped to PUSCH port 0 transmitted through the first panel, a port of a second SRS resource may be mapped to PUSCH port 1 transmitted through the first panel, a port of a third SRS resource may be mapped to PUSCH port 2 transmitted through the first panel, and a port of a fourth SRS resource may be mapped to PUSCH port 3 transmitted through the first panel. In addition, with respect to a PUSCH transmitted through a second panel, among SRS resources (a relation between an SRS resource and a panel may be defined through an implicit or explicit higher layer parameter) associated with the second panel, a port of a first SRS resource may be mapped to PUSCH port 0 transmitted through the second panel, a port of a second SRS resource may be mapped to PUSCH port 1 transmitted through the second panel, a port of a third SRS resource may be mapped to PUSCH port 2 transmitted through the second panel, and a port of a fourth SRS resource may be mapped to PUSCH port 3 transmitted through the second panel. This is an example, the number of ports of an SRS resource or the number of SRS resources associated with each panel may be a value other than 4 like the example. In this case, mapping between SRS ports and PUSCH ports may be performed in the same manner as the above method.

- Mapping method 2) Method of mapping both of two SRS resources selected by an SRI to PUSCH transmission and indexing PUSCH ports by considering all the SRS ports of the two SRS resources: Mapping method 2 is a method of indexing PUSCH ports by considering all the ports transmitted through two panels. In a case of a codebook PUSCH, with respect to a PUSCH transmitted through a first SRS resource, identically to the SRS ports of the first SRS resource, SRS ports 0 to 3 (if the number of the SRS ports of the first SRS resource is 4) are mapped to PUSCH ports 0 to 3 transmitted by being configured to be identical to the first SRS resource, and with respect to a PUSCH transmitted through a second SRS resource, identically to the SRS ports of the second SRS resource, SRS ports 0 to 3 (if the number of the SRS ports of the second SRS resource is 4) are mapped to PUSCH ports 4 to 7 transmitted by being configured to be identical to the second SRS resource. In a case of a noncodebook PUSCH, with respect to a PUSCH transmitted through a first panel, among SRS resources (a relation between an SRS resource and a panel may be defined through an implicit or explicit higher layer parameter) associated with the first panel, a port of a first SRS resource may be mapped to PUSCH port 0 transmitted through the first panel, a port of a second SRS resource may be mapped to PUSCH port 1 transmitted through the first panel, a port of a third SRS resource may be mapped to PUSCH port 2 transmitted through the first panel, and a port of a fourth SRS resource may be mapped to PUSCH port 3 transmitted through the first panel. In addition, with respect to a PUSCH transmitted through a second panel, among SRS resources (a relation between an SRS resource and a panel may be defined through an implicit or explicit higher layer parameter) associated with the second panel, a port of the first SRS resource may be mapped to PUSCH port 4 transmitted through the second panel, a port of a second SRS resource may be mapped to PUSCH port 5 transmitted through the second panel, a port of a third SRS resource may be mapped to PUSCH port 6 transmitted through the second panel, and a port of a fourth SRS resource may be mapped to PUSCH port 7 transmitted through the second panel. This is an example, the number of ports of an SRS resource or the number of SRS resources associated with each panel may be a value other than 4 like the example. In this case, mapping between SRS ports and PUSCH ports may be performed in the same manner as the above method.

Mapping method 1 and Mapping method 2 have been described in detail by assuming single DCI-based single TRP panel selection or single DCI-based single TRP multi-panel simultaneous transmission. However, also in order to support single DCI-based multi-TRP multi-panel simultaneous transmission by using the same mapping method, port indexing between a PUSCH transmitted to each TRP through each panel and an SRS resource set associated with transmission of the PUSCH and an SRS resource indicated through each SRI area may be performed through one method among Mapping method 1 or Mapping method 2. For example, if single DCI-based multi-TRP multi-panel simultaneous codebook PUSCH transmission is supported according to Mapping method 1, in order to transmit a PUSCH to TRP1 through a first panel, a first SRS port of an SRS resource indicated by an SRI in a first SRS resource set for transmitting the PUSCH to TRP1 may be mapped to port 0 of the PUSCH transmitted to TRP1, a second SRS port may be mapped to PUSCH port 1 transmitted to TRP1, a third SRS port may be mapped to PUSCH port 2 transmitted to TRP1, and a fourth SRS port may be mapped to PUSCH port 3 transmitted to TRP1. In addition, in order to transmit a PUSCH to TRP2 through a second panel, a first SRS port of an SRS resource indicated by an SRI in a second SRS resource set for transmitting the PUSCH to TRP2 may be mapped to port 0 of the PUSCH transmitted to TRP2, a second SRS port may be mapped to PUSCH port 1 transmitted to TRP2, a third SRS port may be mapped to PUSCH port 2 transmitted to TRP2, and a fourth SRS port may be mapped to PUSCH port 3 transmitted to TRP2.

If single DCI-based multi-TRP multi-panel simultaneous codebook PUSCH transmission is supported according to Mapping method 2, a relation between PUSCH ports and PUSCH ports of an SRS resource indicated by an SRI in a first SRS resource set is identical to Mapping method 1, and in order to transmit a PUSCH to TRP2 through a second panel, a first SRS port of an SRS resource indicated by an SRI in a second SRS resource set for transmitting the PUSCH to TRP2 may be mapped to port 4 of the PUSCH transmitted to TRP2, a second SRS port may be mapped to PUSCH port 5 transmitted to TRP2, a third SRS port may be mapped to PUSCH port 6 transmitted to TRP2, and a fourth SRS port may be mapped to PUSCH port 7 transmitted to TRP2.

If single DCI-based multi-TRP multi-panel simultaneous noncodebook PUSCH transmission is supported according to Mapping method 1, with respect to a PUSCH transmitted to TRP1, among SRS resources (a relation between an SRS resource and a panel may be defined through an implicit or explicit higher layer parameter) associated with a first panel in a first SRS resource set, a port of a first SRS resource may be mapped to PUSCH port 0 transmitted through the first panel, a port of a second SRS resource may be mapped to PUSCH port 1 transmitted through the first panel, a port of a third SRS resource may be mapped to PUSCH port 2 transmitted through the first panel, and a port of a fourth SRS resource may be mapped to PUSCH port 3 transmitted through the first panel. In addition, with respect to a PUSCH transmitted to TRP2, among SRS resources (a relation between an SRS resource and a panel may be defined through an implicit or explicit higher layer parameter) associated with a second panel in a second SRS resource set, a port of a first SRS resource may be mapped to PUSCH port 0 transmitted through the second panel, a port of a second SRS resource may be mapped to PUSCH port 1 transmitted through the second panel, a port of a third SRS resource may be mapped to PUSCH port 2 transmitted through the second panel, and a port of a fourth SRS resource may be mapped to PUSCH port 3 transmitted through the second panel.

Similarly, if single DCI-based multi-TRP multi-panel simultaneous noncodebook PUSCH transmission is supported according to Mapping method 2, PUSCH ports of a PUSCH transmitted to TRP1 by using a first panel may be indexed to be identical to Mapping method 1, and with respect to a PUSCH transmitted to TRP2 by using a second panel, among SRS resources (a relation between an SRS resource and a panel may be defined through an implicit or explicit higher layer parameter) associated with a second panel in a second SRS resource set, a port of a first SRS resource may be mapped to PUSCH port 4 transmitted through the second panel, a port of a second SRS resource may be mapped to PUSCH port 5 transmitted through the second panel, a port of a third SRS resource may be mapped to PUSCH port 6 transmitted through the second panel, and a port of a fourth SRS resource may be mapped to PUSCH port 7 transmitted through the second panel. The corresponding method has been described by assuming a specific association between each TRP and an SRS resource set, and between an SRS resource and a panel (it is assumed that TRP1 is associated with a first SRS resource set, TRP2 is associated with a second SRS resource set, and an SRS resource in an SRS resource set may be implicitly or explicitly associated with a particular panel.) However, PUSCH port indexing referring to an SRS port associated with a PUSCH port even for other associations between each TRP and an SRS resource set, and between an SRS resource and a panel may be performed according to Association 1 or Association 2.

<Fourth embodiment: Method for scheduling and determining multi-panel-based simultaneous transmission scheme>

In the fourth embodiment, a method in which the base station schedules one of various methods of simultaneously transmitting an uplink channel by the UE, based on multiple panels, and the UE determines and performs one of the various multi-panel-based simultaneous transmission techniques, based on scheduling information is described in detail.

In NR Release 18, methods of simultaneously transmitting an uplink channel, based on multiple panels may be supported as well as an mTRP TDM-based uplink channel repeated transmission introduced in NR Release 17. FIG. 17 illustrates an mTRP TDM-based uplink channel repeated transmission method and a multi-panel-based uplink channel simultaneous transmission method (SDM and SFN).

An mTRP TDM-based uplink channel repeated transmission method 1700 and 1710 may be classified into a "Sequential mapping" method 1700 and a "Cyclic mapping" method 1710 according to a method of mapping an uplink beam (or TRP for transmission) for multiple repeated transmissions. In the mTRP TDM-based uplink channel repeated transmission method performed based on the "Sequential mapping" method, first and second transmission occasions 1701 and 1702 are transmitted to a first TRP (or a first UL beam indicated by a first TCI state (a DL and UL joint TCI state or UL TCI state described above) or first spatial relation info), and third and fourth transmission occasions 1703 and 1704 are transmitted to a second TRP (or a second UL beam indicated by a second TCI state (a DL and UL joint TCI state or UL TCI state described above) or second spatial relation info). A transmission occasion and a TRP towards which uplink is oriented may be mapped in the same pattern also for more than four repeated transmissions (i.e., a TRP for transmission changes every two transmission occasions.).

In the mTRP TDM-based uplink channel repeated transmission method performed based on the "Cyclic mapping" method, first and third transmission occasions 1711 and 1713 are transmitted to a first TRP (or a first UL beam indicated by a first TCI state (a DL and UL joint TCI state or UL TCI state described above) or first spatial relation info), and second and fourth transmission occasions 1712 and 1714 are transmitted to a second TRP (or a second UL beam indicated by a second TCI state (a DL and UL joint TCI state or UL TCI state described above) or second spatial relation info). A transmission occasion and a TRP towards which uplink is oriented may be mapped in the same pattern also for more than four repeated transmissions (i.e., a TRP for transmission changes every transmission occasion.).

An SDM scheme 1720 is a scheme of configuring, to be a single transport block (TB), the entire one scheduled PUSCH resource considering the total number of layers and encoding information bits, based on the TB. Thereafter, according to the SDM scheme, the UE may divide the resource into two halves in the spatial domain and perform simultaneous transmission at the same time by using respective panels. That is, the UE may transmit different layers through respective panels. For example, the UE may transmit a first part (a part including a layer having a low index) through a first panel (1721), and transmit a second part (a part other than the first part) through a second panel (1722). This merely corresponds to an example, and each part may be mapped to a panel and transmitted in a sequence different from the example (e.g., the first part may be transmitted through the second panel and the second part may be transmitted through the first panel). DMRSs 1725 of a PUSCH transmitted through respective panels are configured by different DMRS ports, and the different DMRS ports may be included in different CDM groups. Alternatively, the DMRS ports are different, but may be included in the same CDM group. If one TB is divided into two halves and transmitted through respective panels and the two halves are transmitted to different TRPs by using respective panels, one part of the one TB is received by one TRP. Thereafter, the base station may, according to implementation of the base station, collect the halves, combine same into one, and performs joint decoding or separate decoding to receive a signal transmitted by the UE.

A single frequency network (SFN) scheme 1730 is a scheme of configuring and transmitting completely identical TBs and identical DMRSs on the same frequency and the same time resource. A PUSCH transmitted through each panel may include the same data and the same DMRS. That is, the UE may transmit a first part through a first panel (1731), and transmit a second part through a second panel (1732). This merely corresponds to an example, and each part may be mapped to a panel and transmitted in a sequence different from the example (e.g., the first part may be transmitted through the second panel and the second part may be transmitted through the first panel). If the identical TBs are transmitted through respective panels and are transmitted to different TRPs by using respective panels, the same TB is received by one TRP. Thereafter, the base station may, according to implementation of the base station, collect the TBs, combine same into one, and performs joint decoding or separate decoding to receive a signal transmitted by the UE. DMRSs transmitted through respective panels in the SFN scheme 1730 may be configured by the same DMRS ports (1735). However, even though DMRSs of respective panels have the same DMRS port index, different precoding matrixes may be applied to the DMRSs. That is, both of the two panels transmit the same TB through the same DMRS port, but precoding for the DMRS and data of each panel may be individually applied.

Other than the transmission methods described with reference to FIG. 17, repeated transmission of the same TB may be supported based on the SDM scheme. That is, any technique capable of simultaneous transmission in the time domain using different panels may follow a method of UCI multiplexing according to this embodiment. In FIG. 17, uplink channel transmission using mTRP and multiple panels is mainly described. However, dynamic switching may also be additionally considered and, accordingly, a transmission method based on panel switching using sTRP and a single panel may also be considered.

The base station may schedule, for the UE, one of various transmission methods for transmitting an uplink channel including the method described with reference to FIG. 17 and a transmission method using sTRP and a single panel. The UE needs to determine one of multiple transmission methods for a scheduled uplink channel (here, "scheduled" mainly means a dynamic grant based on a DCI grant, but may also indicate an uplink channel scheduled by a configured grant based on a higher layer parameter), and transmits the scheduled uplink channel by using the determined transmission method. The method of determining, by the UE, one of multiple transmission methods for a scheduled uplink channel may be associated with values indicated by DCI and/or all configured parameters described below, or may be associated with some of the parameters and/or DCI indication values. The above description may assume that the UE has reported, to the base station, a UE capability indicating that the UE is able to perform various uplink transmission methods and an operation of selecting a corresponding method.

- Higher layer parameter (RRC parameter) for configuring a unified TCI framework-based operation: The base station may configure or not configure, for the UE, a higher layer parameter (e.g., "unifiedTCI-StateType-r17" in the higher layer parameter "mimoParam-r17" is configured to be one value among "separate" or "joint") for indicating a unified TCI framework-based operation. According to whether the parameter is configured, the base station may support downlink, based on a TCI state or uplink, based on spatial relation info for the UE as in NR Release 15/16 (if the parameter is not configured, or may perform support based on an NR Release 18 enhanced unified TCI (hereinafter, eUTCI) framework to support an NR Release 17 unified TCI framework or mTRP (multiple TRPs). If the base station supports the UE, based on the NR Release 18 eUTCI framework, the base station may additionally configure a new higher layer parameter together with "unifiedTCI-StateType-r17" described above. Alternatively, the base station may not configure "unifiedTCI-StateType-r17" and additionally configure a new higher layer parameter. For example, the base station may configure a higher layer parameter such as "MIMOParam-r18" and configure "unifiedTCI-StateType-r18" in the parameter. Alternatively, the base station may add a higher layer parameter, such as "enableMultipleTCIstate," for indicating that operation based on multiple TCI states is possible, together with "unifiedTCI-StateType-r17," and configure a value of the corresponding area to be "enable." The described new higher layer parameter may be included in a higher layer parameter configuration, and for example, may be included in "ServingCellConfig." Alternatively, same may be included in another associated higher layer parameter configuration.

- Higher layer parameter for configuring method for transmitting uplink channel: The base station may configure a new higher layer parameter for the UE to select and support one or multiple of various methods (e.g., SDM, SFN, or eUTCI-based R18 TDM repeated transmission described above) for transmitting an uplink channel. For example, a named higher layer parameter, such as "ULTransmissionScheme" (or a named higher layer parameter for performing an identical/similar function), for indicating an uplink transmission method may be configured. The new higher layer parameter "ULTransmissionScheme" as in the example may be included in the higher layer parameter "PUSCH-Config," or may be included and configured in a higher layer parameter, such as "BWP-UplinkDedicated," associable with uplink channel (e.g., PUSCH) transmission. The base station may configure, for the UE, the new higher layer parameter "ULTransmissionScheme" to be a value indicating an uplink transmission method to be supported. As a specific example, the base station may configure, for the UE, "ULTransmissionScheme" to be one or multiple values among "SDM," "SFN," or "TDM" (or this may indicate an eUICI basis such as "enhancedTDM," or any value for TDM repeated transmission may not be configured). If multiple values are configured, the number of configured methods may be determined based on a UE capability report. If the new parameter "ULTransmissionScheme" is not configured, the UE may transmit an uplink channel (e.g., PUSCH), based on a transmission method configured by default. A TDM-based repeated transmission method may be supported by the transmission method configured by default. If the new parameter "ULTransmissionScheme" is configured to be "SDM," the UE may use an SDM method to a scheduled uplink channel (e.g., PUSCH). Thereafter, the UE may finally select a transmission method (e.g., one technique among single TRP-based transmission or multi-TRP multi-panel-based SDM method) by referring to a value indicated by scheduling DCI described later. If the new parameter "ULTransmissionScheme" is configured to be "SFN," the UE may use an SFN method to transmit a scheduled uplink channel (e.g., PUSCH). Similarly, the UE may finally select a transmission method (e.g., one technique among single TRP-based transmission or multi-TRP multi-panel-based SFN method) by referring to a value indicated by scheduling DCI described later.
- Number of indicated TCI states when unified TCI framework is supported: The base station may support, for the UE, a transmission and reception method based on a unified TCI framework. A transmission method which may be scheduled to transmit an uplink channel (e.g., PUSCH) may vary according to whether a single TCI state is activated or indicated or multiple (e.g., two) TCI states are activated or indicated by MAC-CE or DCI. Prior to the detailed explanation, when a transmission and reception method is supported based on a unified TCI framework as described above, the higher layer parameter "unifiedTCI-StateType-r17" may be configured to be "separate" or "joint." If same is configured to be "separate," the UE may determine TCI state information (e.g., an uplink transmission beam or transmission filter referring to reference signal indicated by a TCI state and a transmission power parameter for uplink transmission indicated by the TCI state) for uplink transmission according to indicated TCI-UL-State. If "unifiedTCI-StateType-r17" is configured to be "joint," the UE may determine TCI state information (e.g., an uplink transmission beam or transmission filter referring to reference signal indicated by a TCI state and a transmission power parameter for uplink transmission indicated by the TCI state) for uplink transmission according to indicated TCI-State. Hereinafter, for convenience of explanation, a case where "unifiedTCI-StateType-r17" is configured to be "joint" is assumed. However, a method described later may be similarly applied to a case where "unifiedTCI-StateType-r17" is configured to be "separate." If the base station indicates only one TCI state to the UE through a MAC-CE/DCI, an uplink channel (e.g., PUSCH) scheduled after a BAT, after which the indicated TCI state starts to be applied, is transmitted by referring to one TCI state. That is, the UE transmits an uplink channel (e.g., PUSCH) scheduled after one TCI state is indicated, based on sTRP. If the base station indicates multiple (e.g., two) TCI states to the UE through a MAC-CE/DCI, an uplink channel (e.g., PUSCH) scheduled after a BAT, after which the indicated TCI states start to be applied, may be transmitted by referring to one or multiple (e.g., two) TCI states. That is, the UE may transmit an uplink channel (e.g., PUSCH) scheduled after multiple TCI states are indicated, based on sTRP or mTRP. If multiple TCI states are indicated, the UE may select one of an sTRP-based or mTRP-based transmission method by referring to an indicator or configuration for indicating a TCI state applied at the time of uplink channel transmission described later, and transmit an uplink channel to the base station.
- Repetition count of uplink channel according to scheduling information: The base station may indicate a value for a repeated transmission count in scheduling DCI (or a higher layer configuration for an operation based on a configured grant) to schedule, for the UE, an uplink transmission method based on repeated transmission or single transmission.

In the scheduling DCI, repeated transmission count information and resource allocation information in the time domain of an uplink channel (e.g., PUSCH) which are indicated by a time domain resource allocation (TDRA) area may be indicated. If a repeated transmission count is greater than 1, the UE may select one of sTRP-based repeated transmission or mTRP-based repeated transmission according to a subsequently indicated value, and SFN-based repeated transmission may be additionally considered. Alternatively, SFN-based transmission may be scheduled only when the repeated transmission count is not greater than 2. Alternatively, SDM-based transmission may be considered together with repeated transmission as well as SFN-based transmission so that a method of repeating SFN or SDM transmission in the time domain may also be additionally considered. If SFN or SDM transmission is unable to be combined with repeated transmission, SFN or SDM transmission may be performed only when the repeated transmission count of the scheduled uplink channel (e.g., PUSCH) is not greater than 2. Alternatively, if SFN or SDM transmission is scheduled, the UE may disregard the indicated repeated transmission count and transmit the scheduled uplink channel (e.g., PUSCH) in the time domain only once.

- Configuration or indicator for indicating TCI state to be applied by UE at time of uplink channel transmission: The base station may perform indication for determining a TCI state to be applied to transmit an uplink channel (e.g., PUSCH) among multiple TCI states (if multiple TCI states are indicated) indicated by DCI described above. As a first method for indicating a TCI state applied to an uplink channel (e.g., PUSCH) among multiple indicated TCI states, a field in DCI scheduling an uplink channel (e.g., PUSCH) may be used to indicate same.

FIG. 18 is a diagram illustrating an example for DCI indicating a TCI state and DCI scheduling an uplink channel. Identically to FIG. 11 illustrating a method of indicating a TCI state, based on a unified TCI state and applying the BAT-indicated TCI state described above, a TCI state may be indicated through DCI format 1_1 (or DCI format 1_2) 18-05 not scheduling downlink data, and the UE transmits a PUCCH 18-10 including a HARQ-ACK for reporting whether the DCI has been received to the base station (18-00). The UE transmits or receives a physical channel according to the newly indicated TCI from a first slot 18-20 after the time of a BAT 18-15 after a time point of transmitting the PUCCH 18-10 (18-30). Until the slot before the first slot 18-20 after the time of the BAT 18-15 (18-25), the UE transmits or receives a physical channel according to a previously indicated TCI state. Thereafter, the base station may transmit DCI format 0_1 or 0_2 18-55 for scheduling a PUSCH 18-60 for the UE. The DCI 18-55 scheduling the PUSCH 18-60 may include a field for indicating a TCI state applied to transmit the PUSCH 18-60 among the above multiple TCI states (if multiple TCI states are indicated by the DCI 18-05) as well as scheduling information up to NR Release 17 required for transmitting the PUSCH 18-60. As the field for indicating a TCI state applied to transmit the PUSCH 18-60 among the multiple TCI states, one field among fields configuring DCI up to NR Release 17 may be reused, or a new field may be added in NR Release 18. As a specific example of a method of determining a TCI state applied to transmit a PUSCH by reusing one field included in conventional DCI, an SRS resource set indicator field included in DCI may be considered. In NR Release 17, in order to support mTRP PUSCH repeated transmission, the technique has been enhanced so that a maximum of two SRS resource sets having "codebook" or "nonCodebook" as usage are supportable instead of one set. If up to two SRS resource sets are configured in the UE, an SRS resource set indicator may be included and indicated in DCI formats 0_1 and 0_2 for scheduling a PUSCH. An SRS resource set indicator may be configured to be 0 bits (when only one SRS resource set is configured) or 2 bits (when two SRS resource sets are configured). Codepoints "00" and "01" in NR Release 17 have been used to indicate sTRP PUSCH transmission (the respective codepoints indicate sTRP transmission based on a first SRS resource set and sTRP transmission based on a second SRS resource set), and codepoints "10" and "11" have been used to indicate mTRP PUSCH repeated transmission (the respective codepoints indicate execution of PUSCH repeated transmission in the sequence {first-second SRS resource set} and execution of PUSCH repeated transmission in the {second-first SRS resource set sequence}). In NR Release 18, an SRS resource set indicator may be used to indicate sTRP or mTRP PUSCH transmission. However, if the indicator is combined with additional higher layer signaling, the indicator may be used to indicate another operation. Alternatively, the indicator may define the relation (this may be implicit or explicit) between an SRS resource set referred to for transmitting a scheduled PUSCH and a TCI state applied thereto. For example, the 2-bit codepoints "00" and "01" of an SRS resource set indicator may indicate to apply one TCI state (e.g., "00" corresponds to a first TCI state, and "01" corresponds to a second TCI state) among multiple (e.g., two) TCI states indicated by the DCI 18-05 indicating a TCI state, to transmit a scheduled PUSCH. The 2-bit codepoints "10" and "11" of the SRS resource set indicator may indicate to apply all of multiple (e.g., two) TCI states indicated by the DCI 18-05 indicating a TCI state, to transmit a scheduled PUSCH (e.g., "10" indicates execution of PUSCH transmission in the {first TCI state-second TCI state sequence}, and "11" indicates execution of PUSCH transmission in the {second TCI state-first TCI state sequence} or may indicate a method different from a PUSCH transmission method indicated by codepoint "10" or a reserved area). If a new field for indicating a TCI state applied to transmit the PUSCH 18-60 among the multiple TCI states in the DCI 18-55 scheduling the PUSCH 18-60 is added, the field may be configured by 2 bits. Presence or absence of the field may be determined according to whether a higher layer parameter required for supporting NR Release 18 eUICI described above is configured. For example, if the base station configures a higher layer parameter such as "unifiedTCI-StateType-r18" for the UE to support an eUTCI state, a new 2-bit DCI field may be indicated together in the DCI 18-55 for scheduling the PUSCH 18-60. The new 2-bit DCI field may define an operation of indicating through each codepoint similarly (or identically) to reusing an SRS resource set indicator described above. If the DCI 18-05 indicating a TCI state indicates a single TCI state, the above process of indicating a TCI state applied to a PUSCH is omitted, and the indicated single TCI state may be applied to transmit the scheduled PUSCH 18-60.

FIG. 19 is a diagram illustrating an operation example of a base station for supporting multiple uplink transmission methods.

A base station transmits a UE capability enquiry to a UE to request a UE capability report from the UE (19-01). Then, the base station receives a UE capability reported by the UE (19-02). The base station may configure a higher layer parameter (RRC parameter), based on the UE capability reported by the UE (19-03). The RRC parameter configured by the base station for the UE may include parameters for unified TCI (UTCI) support (e.g., "unifiedTCI-StateType-r17" included in "MIMOParam-r17"), parameters for supporting an enhanced unified TCI (eUTCI) according to NR Release 18 (a corresponding parameter may be added together with a parameter configuration for UTCI support, and may be omitted if a separate RRC configuration is not required), RRC parameters for selecting and supporting an uplink transmission technique including uplink transmission techniques based on multiple panels (e.g., "ULTransmissionScheme"), and an SRS resource set configuration having "usage" of "codebook" or "nonCodebook" (e.g., up to two SRS resource sets may be configured to support mTRP or multi-panel uplink transmission). If the base station does not configure a UTCI-related RRC parameter and/or eUTCI-related RRC parameter for the UE, this may imply that the base station does not support an operation based on a unified TCI framework for the UE. That is, the base station may support PUSCH transmission based on NR Release 15/16/17 for the UE and, in particular, schedule sDCI-based mTRP PUSCH repeated transmission introduced in NR Release 17 (19-04). The base station may transmit DCI to the UE to indicate a TCI state (19-05). The DCI indicating a TCI state follows a signaling method based on a unified TCI state framework described above. The DCI may schedule a PDSCH, or may indicate only a TCI state without scheduling a PDSCH. The base station may activate candidate codepoints (e.g., a maximum of eight codepoints) of TCI states indicable to the UE through a MAC CE so as to indicate a TCI state through DCI. The DCI 19-05 may indicate one codepoint among a maximum of eight codepoints as described above, and indicate one or multiple (e.g., two) TCI states through the indicated codepoint.

The base station may identify that the DCI (if a PDSCH has been scheduled, together with the PDSCH) has been successfully received from the UE through the process 19-05, by receiving an ACK (19-06). If the DCI indicates a single TCI state, the base station may schedule sDCI-based sTRP PUSCH transmission thereafter (19-07). If the DCI indicates multiple (e.g., two) TCI states, the base station may perform different PUSCH schedulings 19-10 and 19-20 according to a transmission technique 19-08 configured by an RRC parameter among uplink transmission methods supportable by the UE. Here, as an example of the RRC parameter for configuring a transmission technique, the base station may identify "ULTransmissionScheme" described above. If the base station configures, for the UE, the RRC parameter "ULTransmissionScheme" to be "TDM," the base station may schedule TDM-based PUSCH repeated transmission or single PUSCH transmission for the UE (19-10). Alternatively, if the base station does not configure "ULTransmissionScheme" for the UE, one default transmission scheme may be one of multiple uplink transmission methods supportable by the UE and, for example, a "TDM"-based PUSCH transmission method may be defined as a default transmission scheme. If the default transmission scheme is defined as "TDM," and the base station does not configure "ULTransmissionScheme" for the UE, the base station may schedule TDM-based PUSCH repeated transmission or single PUSCH transmission for the UE (19-10). If the base station configures, for the UE, the RRC parameter "ULTransmissionScheme" to be one of "SDM" or "SFN," the base station may schedule, for the UE, SDM-based multi-panel uplink simultaneous transmission, SFN-based multi-panel simultaneous transmission, or single PUSCH transmission (19-20). If the base station configures "ULTransmissionScheme" to be "TDM" or does not configure the corresponding RRC (19-10), the base station may determine a repetition count of a PUSCH to be scheduled before scheduling the PUSCH (19-11). If the base station configures the repetition count of the PUSCH to be scheduled to be greater than 1, the base station may indicate the SRS resource indicator field in DCI scheduling the PUSCH as "10" or "11," or "00" or "01" (19-12). If the base station indicates the SRS resource indicator field in DCI scheduling the PUSCH as "10" or "11," the base station may schedule TDM-based mTRP PUSCH repeated transmission through single DCI 0_1/0_2 for scheduling a PUSCH for the UE (19-13). If the base station indicates the SRS resource indicator field in DCI scheduling the PUSCH as "00" or "10," the base station may schedule TDM-based sTRP PUSCH repeated transmission through single DCI 0_1/0_2 for scheduling a PUSCH for the UE (19-14). If the base station configures the repetition count of the PUSCH to be scheduled to be 1, the base station may schedule sTRP PUSCH single transmission for the UE (19-16). If the base station indicates the SRS resource set indicator in DCI scheduling the PUSCH as "00" or "01" (19-15) or configures any value therefor so that the field may be disregarded by the UE.

If the base station configures the RRC parameter "ULTransmissionScheme" to be one of "SDM" or "SFN" (19-20), the base station may indicate "10" or "11" (19-21) or indicate "00" or "01" (19-24) as the SRS resource set indicator field in DCI scheduling the PUSCH. If the base station indicates the SRS resource indicator field in DCI scheduling the PUSCH as "10" or "11" and configures the RRC parameter "ULTransmissionScheme" to be "SDM," the base station may schedule a PUSCH to be subject to SDM-based multi-panel simultaneous transmission through single DCI 0_1/0_2 for scheduling a PUSCH for the UE (19-22). If the base station indicates the SRS resource indicator field in DCI scheduling the PUSCH as "10" or "11" and configures the RRC parameter "ULTransmissionScheme" to be "SFN," the base station may schedule a PUSCH to be subject to SFN-based multi-panel simultaneous transmission through single DCI 0_1/0_2 for scheduling a PUSCH for the UE (19-23). If the base station indicates the SRS resource indicator field in DCI scheduling the PUSCH as "00" or "10" (19-24, or any value is configured therefor so that the field may be disregarded by the UE) and configures the RRC parameter "ULTransmissionScheme" to be one of "SDM" or "SFN," the base station may schedule, for the UE, sTRP PUSCH transmission (repeated transmission or single transmission may be scheduled according to a repeated transmission count of the scheduled PUSCH or, if one of "SDM" or "SFN" is configured, only single transmission may be scheduled) (19-25).

FIG. 20 is a diagram illustrating an operation example of a UE for supporting multiple uplink transmission methods.

A UE may receive, from a base station, a UE capability enquiry that requests a UE capability report (20-01). The UE may perform UE capability reporting, based on information on the UE capability enquiry received from the base station (20-02). Thereafter, the UE may receive a higher layer parameter (RRC parameter) from the base station (20-03), and the RRC parameter configured by the base station may be determined based on the UE capability report reported by the UE. The RRC parameter received by the UE may include, as described above, parameters for unified TCI (UTCI) support (e.g., "unifiedTCI-StateType-r17" included in "MIMOParam-r17"), parameters for supporting an enhanced unified TCI (eUTCI) according to NR Release 18 (a corresponding parameter may be added together with a parameter configuration for UTCI support, and may be omitted if a separate RRC configuration is not required), RRC parameters for selecting and supporting an uplink transmission technique including uplink transmission techniques based on multiple panels (e.g., "ULTransmissionScheme"), and an SRS resource set configuration having "usage" of "codebook" or "noncodebook" (e.g., up to two SRS resource sets may be configured to support mTRP or multi-panel uplink transmission). If the base station does not configure an RRC parameter for supporting a UTCI and/or eUTCI, the UE may understand that an operation based on a unified TCI framework is not supported. That is, the UE may expect that a PUSCH scheduled from the base station is a conventional NR Release 15/16/17 PUSCH (based on spatial relation info rather than a unified TCI framework) rather than a unified TCI framework. In particular, the UE may be scheduled to transmit sDCI-based mTRP PUSCH repeated transmission introduced in NR Release 17, based on configured/indicated spatial relation info (20-04).

The UE may receive DCI indicating a TCI state from the base station and decode same to identify the indicated TCI state (20-05). The DCI indicating a TCI state is transmitted to the UE according to a signaling method based on a unified TCI state framework described above. The DCI may schedule a PDSCH, or may indicate only a TCI state without scheduling a PDSCH. A field indicating a TCI state included in DCI indicates one of codepoints for indicating a maximum of eight TCI states activatable by a MAC CE as described above, and may be configured by 3 bits. The codepoint indicated by the DCI 20-05 may indicate one or multiple (e.g., two) TCI states. When the UE successfully receives the DCI 20-05 and also successfully receives a PDSCH if the PDSCH has been scheduled, the UE may transmit a HARQ-ACK as an ACK (20-06). When the UE fails to successfully receive the DCI 20-05 (if a PDSCH has been scheduled, including a case where the UE has failed to successfully receive the PDSCH), the base station may transmit a HARQ-ACK as a NACK. If the DCI 20-05 indicates a single TCI state, the UE may understand that sDCI-based sTRP PUSCH transmission may be scheduled thereafter (20-07). If the DCI 20-05 indicates multiple (e.g., two) TCI states, the UE may perform different PUSCH transmissions 20-10 and 20-20 according to a transmission technique 20-08 configured by an RRC parameter. Here, as an example of the RRC parameter for configuring a transmission technique, the UE may identify "ULTransmissionScheme" described above. If the configured RRC parameter "ULTransmissionScheme" is configured to be "TDM," TDM-based PUSCH repeated transmission or single PUSCH transmission may be scheduled for the UE (20-10). Alternatively, if "ULTransmissionScheme" is not configured, one default transmission scheme may be one of multiple uplink transmission methods supportable by the UE and, for example, a "TDM"-based PUSCH transmission method may be previously defined by the base station and the UE as a default transmission scheme. If the default transmission scheme is defined as "TDM," and the RRC parameter "ULTransmissionScheme" is not configured, TDM-based PUSCH repeated transmission or single PUSCH transmission may be scheduled for the UE (20-10).

If the configured RRC parameter "ULTransmissionScheme" is configured to be one of "SDM" or "SFN," SDM-based multi-panel uplink simultaneous transmission, SFN-based multi-panel simultaneous transmission, or single PUSCH transmission may be scheduled for the UE (20-20). If the RRC parameter "ULTransmissionScheme" is configured to be "TDM" or the RRC parameter is not configured (20-10), the UE may receive DCI format 0_1 or 0_2 for scheduling a PUSCH from the base station (20-11). Thereafter, the UE may decode the received DCI to identify scheduling information of a scheduled PUSCH and, in particular, identify whether a repeated transmission count of the scheduled PUSCH is greater than 1 (20-12). If the repeated transmission count of the scheduled PUSCH is greater than 1, the UE may identify an SRS resource set indicator field included in the DCI (20-13). If the SRS resource indicator field is indicated as "10" or "11," the UE may transmit a PUSCH scheduled by the single DCI through a TDM-based mTRP PUSCH repeated transmission technique (20-14). If the SRS resource indicator field is indicated as "01" or "10," the UE may transmit a PUSCH scheduled by the single DCI through a TDM-based sTRP PUSCH repeated transmission technique (20-15). If the repeated transmission count of the scheduled PUSCH is 1, the UE may transmit the PUSCH through an sTRP PUSCH single transmission technique (20-17). The SRS resource set indicator in scheduling DCI is indicated as "00" or "01" (20-16) or is configured to be any value, so that the field may be disregarded by the UE. If the SRS resource set indicator is indicated as "00" or "10," the UE may perform transmission based on a first SRS resource set (an SRS resource set configured to have the lowest value of SRS-resourcesetId among multiple (e.g., two) SRS resource sets having "codebook" or "nonCodebook" as usage), and may perform transmission based on a first TCI state among multiple indicated TCI states as described above. Similarly, if the SRS resource set indicator is indicated as "01" or "11," the UE may perform transmission based on a second SRS resource set (an SRS resource set configured to have the highest value of SRS-resourcesetId among multiple (e.g., two) SRS resource sets having "codebook" or "noncodebook" as usage), and may perform transmission based on a second TCI state among multiple indicated TCI states as described above. If the base station configures "ULTransmissionScheme" to be one of "SDM" or "SFN" (20-20), the UE may receive DCI format 0_1 or 0_2 for scheduling a PUSCH from the base station (20-21). The UE identifies whether the SRS resource set indicator field in the received DCI 20-21 is configured to be one of "10" or "11" or is configured to be one of the other values ("01" or "10") (20-22). If the SRS resource set indicator field in the scheduling DCI is indicated as "10" or "11" and the RRC parameter "ULTransmissionScheme" is configured to be "SDM," the UE may transmit a PUSCH scheduled by the single DCI through an SDM-based multi-panel uplink simultaneous transmission technique (20-23). If the SRS resource set indicator field in the scheduling DCI is indicated as "10" or "11" and the RRC parameter "ULTransmissionScheme" is configured to be "SFN," the UE may transmit a PUSCH scheduled by the single DCI through an SFN-based multi-panel uplink simultaneous transmission technique (20-24). If the SRS resource set indicator field in the scheduling DCI is indicated as "00" or "01," the UE may transmit a PUSCH scheduled by the DCI through an sTRP PUSCH transmission (repeated transmission or single transmission may be scheduled according to a repeated transmission count of the scheduled PUSCH or, if one of "SDM" or "SFN" is configured, only single transmission may be scheduled) technique regardless of whether the RRC parameter "ULTransmissionScheme" is configured to be "SDM" or "SFN" (20-25).

In FIG. 19 and FIG. 20, a case where a PUSCH is scheduled based on DCI has been described as a specific example. However, similar application is also possible for a Type1 Configured grant PUSCH, the transmission of which may be determined based on an RRC parameter, or a Type2 Configured grant PUSCH, the transmission of which may be determined based on an RRC parameter and DCI for activation. In this case, the same operation may be performed through a value configured by an RRC parameter for the same role rather than information indicated in scheduling DCI (e.g., timeDomainAllocation in rrc-Configured UplinkGrant).

<Fifth embodiment: Method of supporting DCI field for supporting multi-panel-based simultaneous transmission scheme>

In the fifth embodiment, a method of, when the UE supports various uplink transmission techniques, interpreting an SRS resource set indicator indicated by DCI and selecting a technique for transmitting a scheduled uplink channel is described in detail.

As described above, in NR Release 17, in order to support mTRP PUSCH repeated transmission, configuration of a maximum of two SRS resource sets having "codebook" or "nonCodebook" as usage has been allowed instead of one set. If up to two RRC parameter configurations for corresponding SRS resource sets are configured, a 2-bit SRS resource set indicator field is indicated in DCI formats 0_1 and 0_2 scheduling a PUSCH, and the field is designed for indicating which SRS resource set among the two SRS resource sets is used to transmit the PUSCH scheduled by the DCI. In NR Release 17, the UE may use an SRS resource set indicator indicated by DCI format 0_1 or 0_2 to determine an SRS resource set used to transmit a PUSCH scheduled by the DCI. For example, if the SRS resource set indicator is indicated as "00," the UE configures PUSCH ports and transmits the PUSCH by using a first SRS resource set (an SRS resource set having a smaller value of SRS-ResourceSetId among two SRS resource sets) among two SRS resource sets (these are SRS resource sets having "codebook" or "noncodebook" as usage, and in the following description, this is omitted, but an SRS resource set mentioned in the fifth embodiment refers to the corresponding SRS resource set). If the SRS resource set indicator is indicated as "01," the UE configures PUSCH ports and transmits the PUSCH by using a second SRS resource set (an SRS resource set having a greater value of SRS-ResourceSetId among the two SRS resource sets) among the two SRS resource sets. If the SRS resource set indicator is indicated as "10," the UE performs transmission by using both of the two SRS resource sets, and configures PUSCH ports and transmits the PUSCH by referring to the SRS resource sets in the sequence {first SRS resource set-second SRS resource set} with respect to PUSCH repeated transmission. If the SRS resource set indicator is indicated as "11," the UE performs transmission by using both of the two SRS resource sets, and configures PUSCH ports and transmits the PUSCH by referring to the SRS resource sets in the sequence {second SRS resource set-first SRS resource set} with respect to PUSCH repeated transmission.

In NR Release 18, as described in the fourth embodiment, a multi-panel-based transmission method may be additionally supported in addition to sDCI-based TDM mTRP PUSCH repeated transmission. If an RRC parameter as described in the fourth embodiment above is configured and one of multiple uplink transmission methods is indicated using a field in DCI, an SRS resource set field may be additionally identified to transmit a PUSCH, based on the indicated method. The UE may understand each codepoint of the SRS resource set field as follows:

- [Method 1] Indication of SRS resource set to be referred to for PUSCH transmission: Identically as indicated by an SRS resource set indicator of NR Release 17, an SRS resource set to be referred to for transmitting a PUSCH scheduled by DCI including an SRS resource set indicator is indicated. An operation indicated by each codepoint may be the same as described above. An uplink transmission method additionally introduced in NR Release 18 operates based on a unified TCI state, and thus may additionally require an association between an SRS resource set and an indicated TCI state. As an example for an association between an SRS resource set and an indicated TCI state, a first SRS resource set may be associated with a first indicated TCI state (TCI-state or TCI-UL-State), and a second SRS resource set may be associated with a second indicated TCI state (TCI-state or TCI-UL-State).
- [Method 2] Indication of TCI state to be used for PUSCH transmission: Multiple uplink transmission methods described in the disclosure operate based on a unified TCI framework (excluding a method in which unified TCI-related RRC is not configured and PUSCH transmission is performed based on spatial relation). If there are multiple (e.g., two) indicated TCI states, a TCI state applied to a scheduled PUSCH among the two TCI states needs to be indicated. In this case, an SRS resource set indicator indicated together by DCI format 0_1 or 0_2 scheduling the PUSCH may be used to indicate a TCI state applied to the PUSCH. As a specific example, an operation of the UE indicated by each codepoint may be as follows. If the SRS resource set indicator is indicated as "00," a first TCI state among the two TCI states is applied to the PUSCH scheduled by the DCI to transmit same. That is, the UE may transmit the PUSCH by applying SRI and TPMI fields associated with the first TCI state among multiple SRI fields and (if a codebook-based PUSCH is supported) TPMI fields. As an example of the SRI and TPMI fields associated with the first TCI state, a first SRI and a first TPMI among two SRI fields and two TPMI fields may be associated with the first TCI state. In this case, a second SRI field and a second TPMI field may be reserved or may be used for another purpose. If the SRS resource set indicator is indicated as "01," a second TCI state among the two TCI states is applied to the PUSCH scheduled by the DCI to transmit same. That is, the UE may transmit the PUSCH by applying SRI and TPMI fields associated with the second TCI state among the multiple SRI fields and (if a codebook-based PUSCH is supported) TPMI fields. As an example of the SRI and TPMI fields associated with the second TCI state, the first SRI and the first TPMI among the two SRI fields and two TPMI fields may be associated with the first TCI state. In this case, the second SRI field and the second TPMI field may be reserved or may be used for another purpose. Alternatively, the second TCI state may be associated with the second SRI and the second TPMI among the two SRI fields and two TPMI fields. In this case, the first SRI field and the first TPMI field may be reserved or may be used for another purpose. If the SRS resource set indicator is indicated as "10," the PUSCH scheduled by the DCI is transmitted using both of the two TCI states. In this case, the first SRI and the first TPMI may be associated with the first TCI state, and the second SRI and the second TPMI may be associated with the second TCI state. If the scheduled PUSCH is repeatedly transmitted, the TCI states may be mapped to the PUSCH repeated transmission in the sequence {first TCI state-second TCI state}. Alternatively, in a case of multi-panel-based simultaneous transmission, the first TCI state is applied to first DMRS ports (DMRS ports corresponding to a layer determined by the first TPMI field (codebook PUSCH) or the first SRI field (noncodebook PUSCH)) among DMRS ports, and the second TCI state is applied to second DMRS ports (DMRS ports corresponding to a layer determined by the second TPMI field (codebook PUSCH) or the second SRI field (noncodebook PUSCH)) among the DMRS ports. If the SRS resource set indicator is indicated as "11," the PUSCH scheduled by the DCI is transmitted using both of the two TCI states. In this case, the first SRI and the first TPMI may be associated with the first TCI state, and the second SRI and the second TPMI may be associated with the second TCI state. If the scheduled PUSCH is repeatedly transmitted, the TCI states may be mapped to the PUSCH repeated transmission in the sequence {second TCI state-first TCI state}. Alternatively, in a case of multi-panel-based simultaneous transmission, the first TCI state is applied to the second DMRS ports (DMRS ports corresponding to a layer determined by the second TPMI field (codebook PUSCH) or the second SRI field (noncodebook PUSCH)) among the DMRS ports, and the second TCI state is applied to the first DMRS ports (DMRS ports corresponding to a layer determined by the first TPMI field (codebook PUSCH) or the first SRI field (noncodebook PUSCH)) among the DMRS ports. Alternatively, the first SRI and the first TPMI may be associated with the second TCI state, and the second SRI and the second TPMI may be associated with the first TCI state. In this case, in a case of multi-panel-based simultaneous transmission, the first TCI state is applied to the first DMRS ports (DMRS ports corresponding to a layer determined by the second TPMI field (codebook PUSCH) or the second SRI field (noncodebook PUSCH)) among the DMRS ports, and the second TCI state is applied to the second DMRS ports (DMRS ports corresponding to a layer determined by the first TPMI field (codebook PUSCH) or the first SRI field (noncodebook PUSCH)) among the DMRS ports. That is, the corresponding method applies DMRS port mapping differently from the above description, and there may be difference in that the layer indicated by the second TPMI field or the second SRI field is mapped to DMRS ports first, and the layer indicated by the first TPMI field or the first SRI field is mapped to subsequent DMRS ports. With respect to the entire description in [Method 2], the first SRI field and the first TPMI field are associated with a first SRS resource set, and the second SRI field and the second TPMI field are associated with a second SRS resource set. Alternatively, if the SRS resource set indicator is indicated as "11," it may be understood that the PUSCH is transmitted by an uplink transmission method different from the case where the SRS resource set indicator is indicated as "10." For example, when the SRS resource set indicator is indicated as "10," SDM-based PUSCH simultaneous transmission using multiple panels may be performed for the PUSCH scheduled by the DCI, and when the SRS resource set indicator is indicated as "11," SFN-based PUSCH simultaneous transmission using multiple panels may be performed for the PUSCH scheduled by the DCI. Alternatively, technique switching between SDM and TDM may be indicated, or technique switching between SFN and TDM may be indicated. The indicator may be used for dynamic switching between two techniques among the above multiple uplink transmission methods.

In addition to the method of using/reinterpreting an SRS resource set indicator as in [Method 1] or [Method 2], a new 2-bit DCI field may be added to perform the same operation as in [Method 1] or [Method 2].

FIG. 21 illustrates a structure of a UE in a wireless communication system according to an embodiment of the disclosure.

Referring to FIG. 21, the UE may include a transceiver, which refers to a UE receiver 2100 and a UE transmitter 2110 as a whole, a memory (not illustrated), and a UE processor 2105 (or UE controller or processor). The UE transceiver 2100 and 2110, the memory, and the UE processor 2105 may operate according to the above-described communication methods of the UE. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with the base station. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include a storage medium such as a ROM, a RAM, a hard disk, a CD-ROM, or a DVD, or a combination of storage media. In addition, the memory may include multiple memories.

The processor may control a series of processes such that the UE can operate according to the above-described embodiments. For example, the processor may control components of the UE to receive DCI configured in two layers so as to simultaneously receive or transmit multiple PDSCHs. The processor may include multiple processors, and the processor may perform operations of controlling the components of the UE by executing programs stored in the memory.

FIG. 22 illustrates a structure of a base station in a wireless communication system according to an embodiment of the disclosure.

Referring to FIG. 22, the base station may include a transceiver, which refers to a base station receiver 2200 and a base station transmitter 2210 as a whole, a memory (not illustrated), and a base station processor 2205 (or base station controller or processor). The base station transceiver 2200 and 2210, the memory, and the base station processor 2205 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with the UE. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include a storage medium such as a ROM, a RAM, a hard disk, a CD-ROM, or a DVD, or a combination of storage media. In addition, the memory may include multiple memories.

The processor may control a series of processes such that the base station can operate according to the above-described embodiments of the disclosure. For example, the processor may control components of the base station to configure DCI configured in two layers including allocation information regarding multiple PDSCHs and to transmit the same. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

**1.** A method performed by a terminal (user equipment, UE) in a wireless communication system, the method comprising:

receiving, from a base station, configuration information including first configuration information for a physical uplink shared channel (PUSCH) and second configuration information on a first sounding reference signal (SRS) resource set and a second SRS resource set, the first configuration information including information on a scheme of multi-panel simultaneous transmission;

receiving, from the base station, first downlink control information (DCI) related to information on a first transmission configuration indicator (TCI) state and a second TCI state related to the PUSCH;
receiving, from the base station, second DCI that schedules the PUSCH, the second DCI including an SRS resource set indicator field; and
transmitting the PUSCH to the base station, based on the SRS resource set indicator field, wherein, in case that a codepoint of the SRS resource set indicator field indicates a first value, the first TCI state is applied to the transmission of the PUSCH,
wherein, in case that the codepoint of the SRS resource set indicator field indicates a second value, the second TCI state is applied to the transmission of the PUSCH, and
wherein, in case that the codepoint of the SRS resource set indicator field indicates a third value, the first TCI state and the second TCI state are applied to the transmission of the PUSCH.

**2.** The method of claim 1, wherein, in case that the codepoint of the SRS resource set indicator field indicates the third value:

the first TCI state is applied to a first PUSCH antenna port associated with the first SRS resource set;
the second TCI state is applied to a second PUSCH antenna port associated with the second SRS resource set;
the first PUSCH antenna port is associated with a first PUSCH transmission occasion of the transmission of the PUSCH; and
the second PUSCH antenna port is associated with a second PUSCH transmission occasion of the transmission of the PUSCH.

**3.** The method of claim 1, wherein the second DCI comprises a first SRS resource indicator (SRI) field, a first transmit precoder matrix indicator (TPMI)-related field, a second SRI field, and a second TPMI-related field,

wherein, in case that the codepoint of the SRS resource set indicator field indicates the first value, the first SRI field and the first TPMI-related field are associated with the first SRS resource set, and the second SRS field and the second TPMI-related field are reserved,
wherein, in case that the codepoint of the SRS resource set indicator field indicates the second value, the first SRI field and the first TPMI-related field are associated with the second SRS resource set, and the second SRS field and the second TPMI-related field are reserved, and
wherein, in case that the codepoint of the SRS resource set indicator field indicates the third value, the first SRI field and the first TPMI-related field are associated with the first SRS resource set, and the second SRS field and the second TPMI-related field are associated with the second SRS resource set.

**4.** The method of claim 3, wherein, based on the third value, the PUSCH is transmitted based on the multi-panel simultaneous transmission.

**5.** A method performed by a base station in a wireless communication system, the method comprising:

transmitting, to a terminal, configuration information including first configuration information for a physical uplink shared channel (PUSCH) and second configuration information on a first sounding reference signal (SRS) resource set and a second SRS resource set, the first configuration information including information on a scheme of multi-panel simultaneous transmission;
transmitting, to the terminal, first downlink control information (DCI) related to information on a first transmission configuration indicator (TCI) state and a second TCI state related to the PUSCH;
transmitting, to the terminal, second DCI that schedules the PUSCH, the second DCI including an SRS resource set indicator field; and
receiving the PUSCH from the terminal, based on the SRS resource set indicator field,
wherein, in case that a codepoint of the SRS resource set indicator field indicates a first value, the PUSCH is received based on the first TCI state,
wherein, in case that the codepoint of the SRS resource set indicator field indicates a second value, the PUSCH is received based on the second TCI state, and
wherein, in case that the codepoint of the SRS resource set indicator field indicates a third value, the PUSCH is received based on the first TCI state and the second TCI state.

**6.** The method of claim 5, wherein, in case that the codepoint of the SRS resource set indicator field indicates the third value:

the first TCI state is applied to a first PUSCH antenna port associated with the first SRS resource set;
the second TCI state is applied to a second PUSCH antenna port associated with the second SRS resource set;
the first PUSCH antenna port is associated with a first PUSCH transmission occasion of the transmission of the PUSCH; and
the second PUSCH antenna port is associated with a second PUSCH transmission occasion of the transmission of the PUSCH.

**7.** The method of claim 5, wherein the second DCI comprises a first SRS resource indicator (SRI) field, a first transmit precoder matrix indicator (TPMI)-related field, a second SRI field, and a second TPMI-related field,

wherein, in case that the codepoint of the SRS resource set indicator field indicates the first value, the first SRI field and the first TPMI-related field are associated with the first SRS resource set, and the second SRS field and the second TPMI-related field are reserved,
wherein, in case that the codepoint of the SRS resource set indicator field indicates the second value, the first SRI field and the first TPMI-related field are associated with the second SRS resource set, and the second SRS field and the second TPMI-related field are reserved, and
wherein, in case that the codepoint of the SRS resource set indicator field indicates the third value, the first SRI field and the first TPMI-related field are associated with the first SRS resource set, and the second SRS field and the second TPMI-related field are associated with the second SRS resource set.

**8.** The method of claim 7, wherein, based on the third value, the PUSCH is received based on the multi-panel simultaneous transmission.

**9.** A terminal (user equipment, UE) in a wireless communication system, the terminal comprising:

a transceiver; and
a controller connected to the transceiver,
wherein the controller is configured to:

receive, from a base station, configuration information including first configuration information for a physical uplink shared channel (PUSCH) and second configuration information on a first sounding reference signal (SRS) resource set and a second SRS resource set, the first configuration information including information on a scheme of multi-panel simultaneous transmission;
receive, from the base station, first downlink control information (DCI) related to information on a first transmission configuration indicator (TCI) state and a second TCI state related to the PUSCH;
receive, from the base station, second DCI that schedules the PUSCH, the second DCI including an SRS resource set indicator field; and
transmit the PUSCH to the base station, based on the SRS resource set indicator field,
wherein, in case that a codepoint of the SRS resource set indicator field indicates a first value, the first TCI state is applied to the transmission of the PUSCH, wherein, in case that the codepoint of the SRS resource set indicator field indicates a second value, the second TCI state is applied to the transmission of the PUSCH, and
wherein, in case that the codepoint of the SRS resource set indicator field indicates a third value, the first TCI state and the second TCI state are applied to the transmission of the PUSCH.

**10.** The terminal of claim 9, wherein, in case that the codepoint of the SRS resource set indicator field indicates the third value:

the first TCI state is applied to a first PUSCH antenna port associated with the first SRS resource set;
the second TCI state is applied to a second PUSCH antenna port associated with the second SRS resource set;
the first PUSCH antenna port is associated with a first PUSCH transmission occasion of the transmission of the PUSCH; and
the second PUSCH antenna port is associated with a second PUSCH transmission occasion of the transmission of the PUSCH.

**11.** The terminal of claim 9, wherein the second DCI comprises a first SRS resource indicator (SRI) field, a first transmit precoder matrix indicator (TPMI)-related field, a second SRI field, and a second TPMI-related field,

wherein, in case that the codepoint of the SRS resource set indicator field indicates the first value, the first SRI field and the first TPMI-related field are associated with the first SRS resource set, and the second SRS field and the second TPMI-related field are reserved,
wherein, in case that the codepoint of the SRS resource set indicator field indicates the second value, the first SRI field and the first TPMI-related field are associated with the second SRS resource set, and the second SRS field and the second TPMI-related field are reserved, and
wherein, in case that the codepoint of the SRS resource set indicator field indicates the third value, the first SRI field and the first TPMI-related field are associated with the first SRS resource set, and the second SRS field and the second TPMI-related field are associated with the second SRS resource set.

**12.** The terminal of claim 11, wherein, based on the third value, the PUSCH is transmitted based on the multi-panel simultaneous transmission.

**13.** A base station in a wireless communication system, the base station comprising:

a transceiver; and
a controller connected to the transceiver,
wherein the controller is configured to:

transmit, to a terminal, configuration information including first configuration information for a physical uplink shared channel (PUSCH) and second configuration information on a first sounding reference signal (SRS) resource set and a second SRS resource set, the first configuration information including information on a scheme of multi-panel simultaneous transmission;
transmit, to the terminal, first downlink control information (DCI) related to information on a first transmission configuration indicator (TCI) state and a second TCI state related to the PUSCH;
transmit, to the terminal, second DCI that schedules the PUSCH, the second DCI including an SRS resource set indicator field; and
receive the PUSCH from the terminal, based on the SRS resource set indicator field,
wherein, in case that a codepoint of the SRS resource set indicator field indicates a first value, the PUSCH is received based on the first TCI state,
wherein, in case that the codepoint of the SRS resource set indicator field indicates a second value, the PUSCH is received based on the second TCI state, and
wherein, in case that the codepoint of the SRS resource set indicator field indicates a third value, the PUSCH is received based on the first TCI state and the second TCI state.

**14.** The base station of claim 13, wherein, in case that the codepoint of the SRS resource set indicator field indicates the third value:

the first TCI state is applied to a first PUSCH antenna port associated with the first SRS resource set;
the second TCI state is applied to a second PUSCH antenna port associated with the second SRS resource set;
the first PUSCH antenna port is associated with a first PUSCH transmission occasion of the transmission of the PUSCH; and
the second PUSCH antenna port is associated with a second PUSCH transmission occasion of the transmission of the PUSCH.

**15.** The base station of claim 13, wherein the second DCI comprises a first SRS resource indicator (SRI) field, a first transmit precoder matrix indicator (TPMI)-related field, a second SRI field, and a second TPMI-related field,

wherein, in case that the codepoint of the SRS resource set indicator field indicates the first value, the first SRI field and the first TPMI-related field are associated with the first SRS resource set, and the second SRS field and the second TPMI-related field are reserved,
wherein, in case that the codepoint of the SRS resource set indicator field indicates the second value, the first SRI field and the first TPMI-related field are associated with the second SRS resource set, and the second SRS field and the second TPMI-related field are reserved, and
wherein, in case that the codepoint of the SRS resource set indicator field indicates the third value, the first SRI field and the first TPMI-related field are associated with the first SRS resource set, and the second SRS field and the second TPMI-related field are associated with the second SRS resource set.

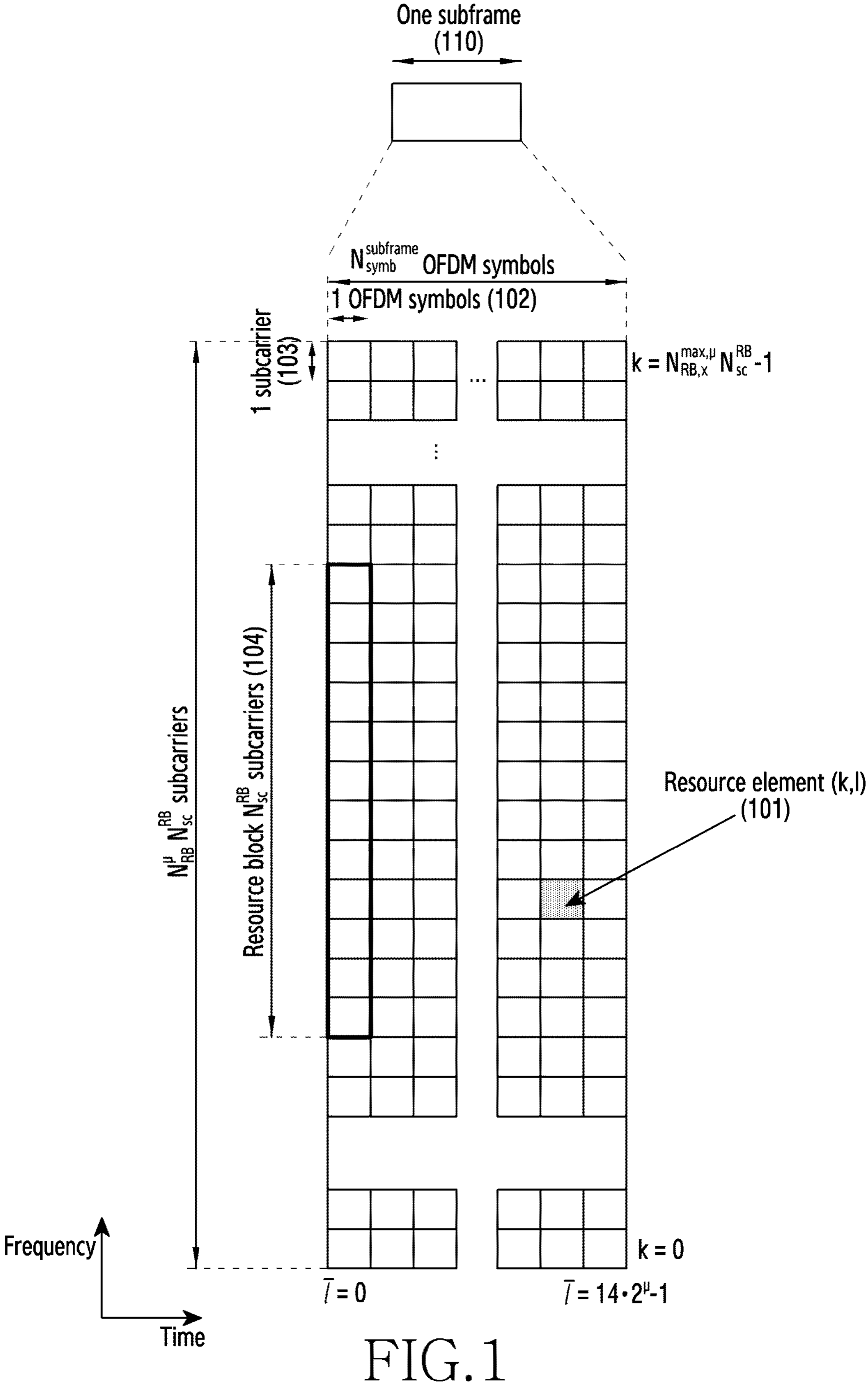
One subframe
(110)
$N_{symb}^{subframe}$ OFDM symbols
1 OFDM symbols (102)
1 subcarrier
(103)
$k = N_{RB,x}^{max,\mu} N_{sc}^{RB} - 1$
$N_{RB}^{\mu} N_{sc}^{RB}$ subcarriers
Resource block $N_{sc}^{RB}$ subcarriers (104)
Resource element (k,l)
(101)
k = 0
$\bar{l} = 0$
$\bar{l} = 14 \cdot 2^{\mu} - 1$
Frequency
Time

FIG.1

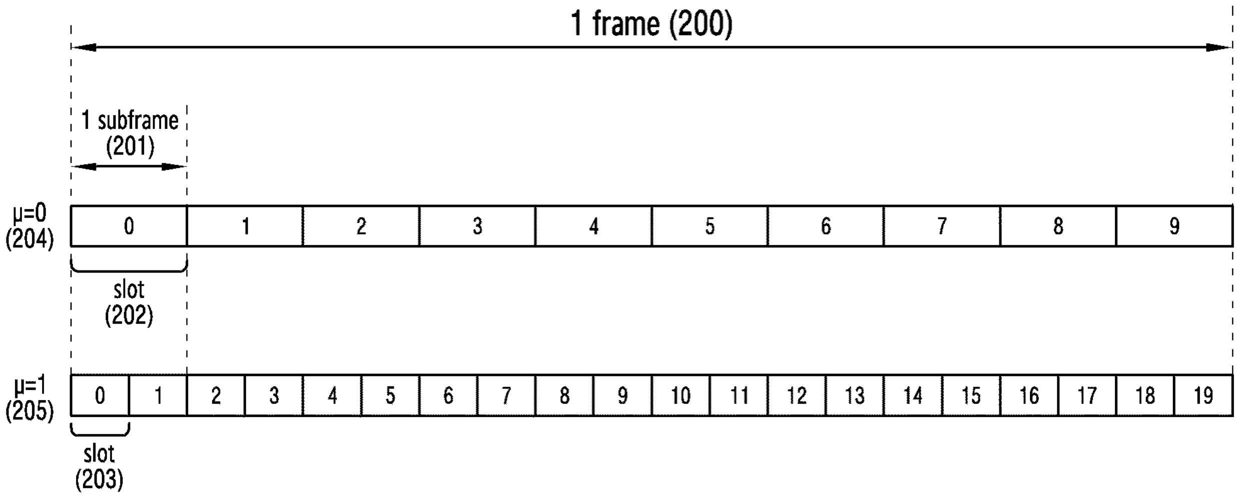
1 frame (200)
1 subframe
(201)
μ=0
(204)
0
1
2
3
4
5
6
7
8
9
slot
(202)
μ=1
(205)
0
1
2
3
4
5
6
7
8
9
10
11
12
13
14
15
16
17
18
19
slot
(203)

FIG.2

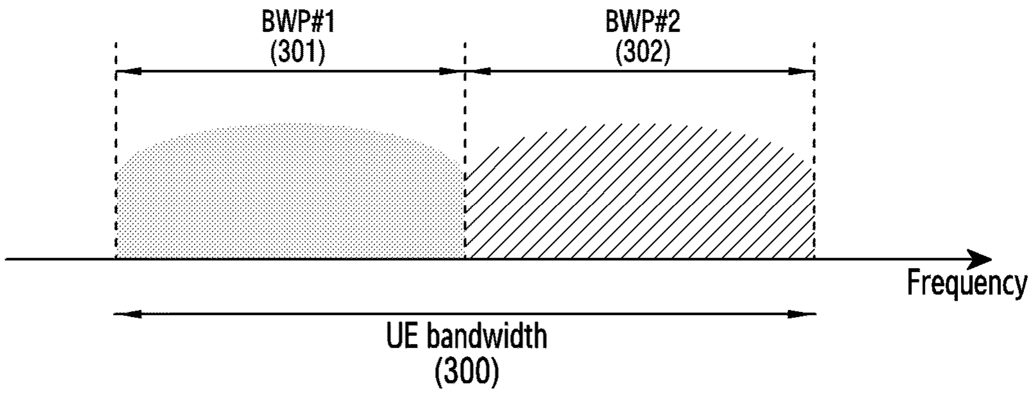


FIG.3

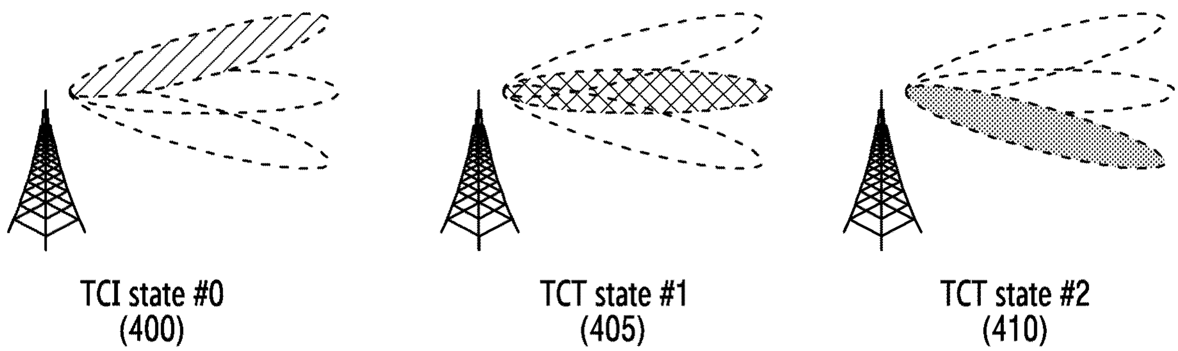


FIG.4

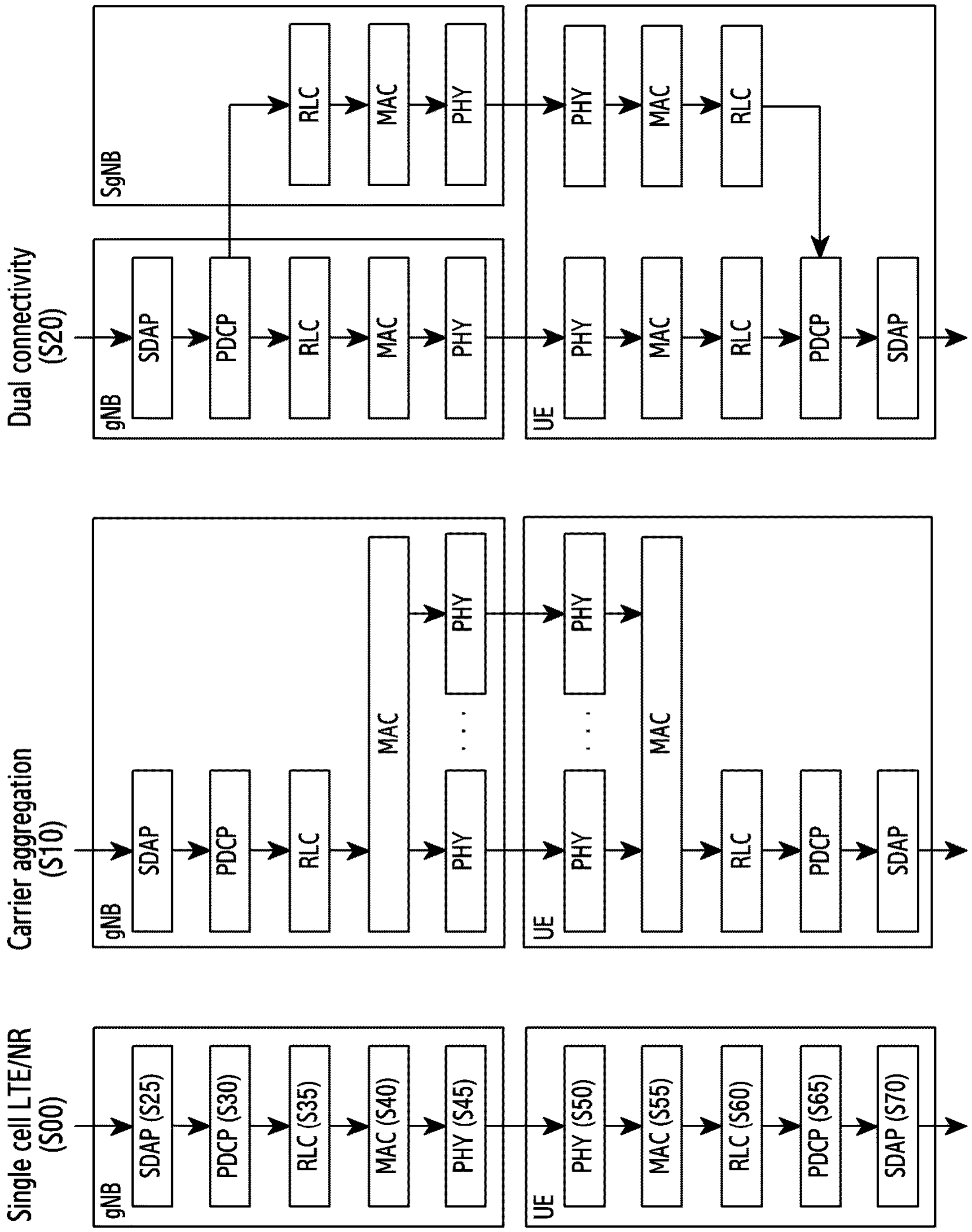
Single cell LTE/NR (S00)
gNB
SDAP (S25)
PDCP (S30)
RLC (S35)
MAC (S40)
PHY (S45)
UE
PHY (S50)
MAC (S55)
RLC (S60)
PDCP (S65)
SDAP (S70)
Carrier aggregation (S10)
gNB
SDAP
PDCP
RLC
MAC
PHY
PHY
UE
PHY
PHY
MAC
RLC
PDCP
SDAP
Dual connectivity (S20)
gNB
SDAP
PDCP
RLC
MAC
PHY
SgNB
RLC
MAC
PHY
UE
PHY
MAC
RLC
PDCP
SDAP
PHY
MAC
RLC

FIG.5

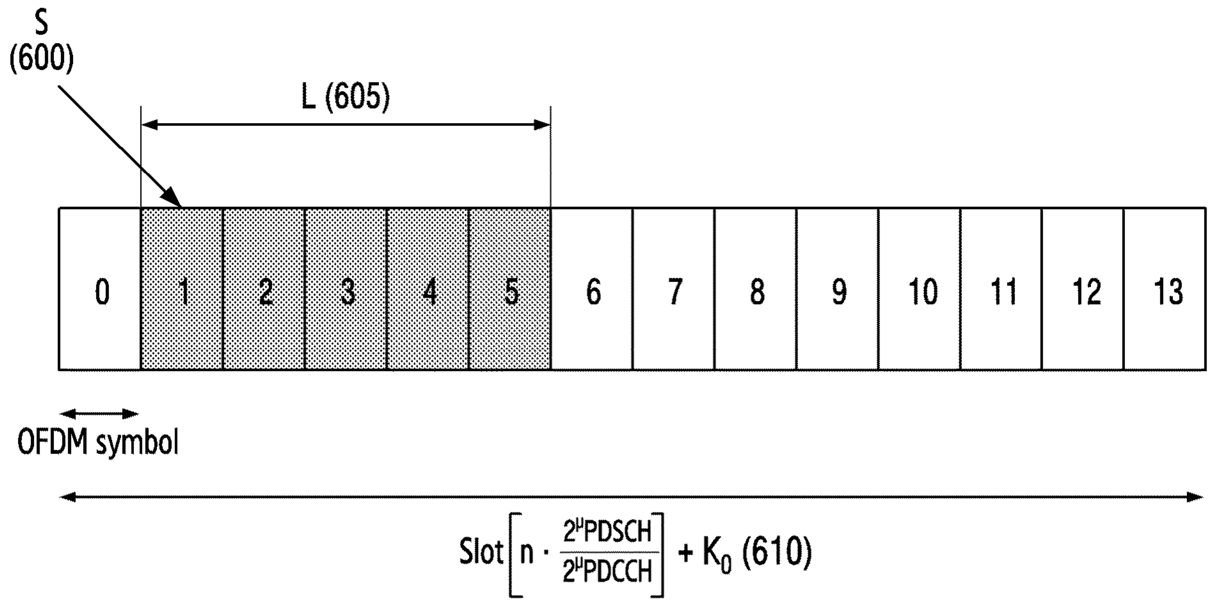
S
(600)
L (605)
0
1
2
3
4
5
6
7
8
9
10
11
12
13
OFDM symbol
Slot $\left\lfloor n \cdot \frac{2^{\mu PDSCH}}{2^{\mu PDCCH}} \right\rfloor + K_0$ (610)

FIG.6

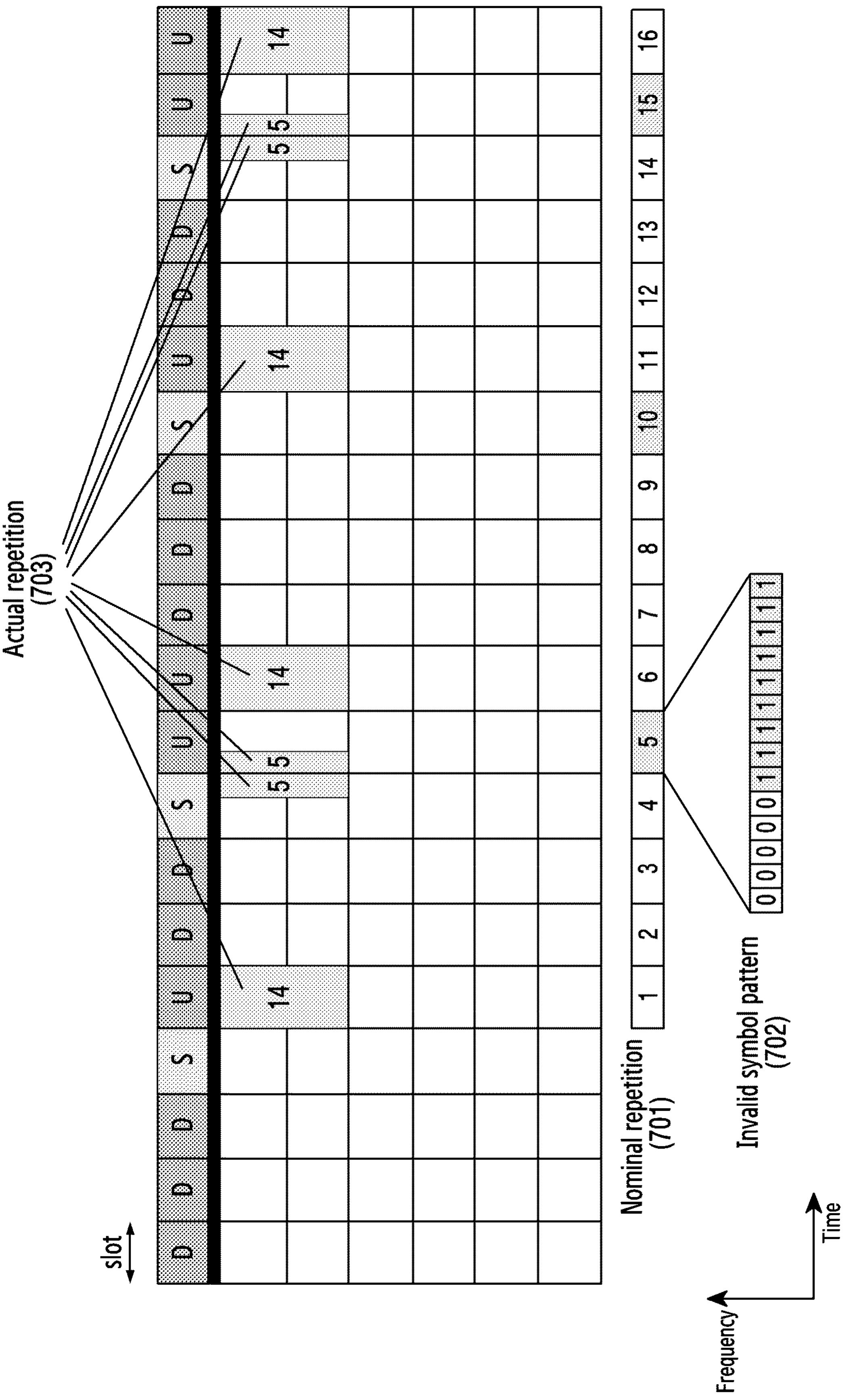
Actual repetition
(703)
slot
D D D S U D D S U U D D D S U D D S U U
14
5 5
14
14
5 5
14
Nominal repetition
(701)
1 2 3 4 5 6 7 8 9 10 11 12 13 14 15 16
Invalid symbol pattern
(702)
0 0 0 0 0 1 1 1 1 1 1 1 1 1
Frequency
Time

FIG.7

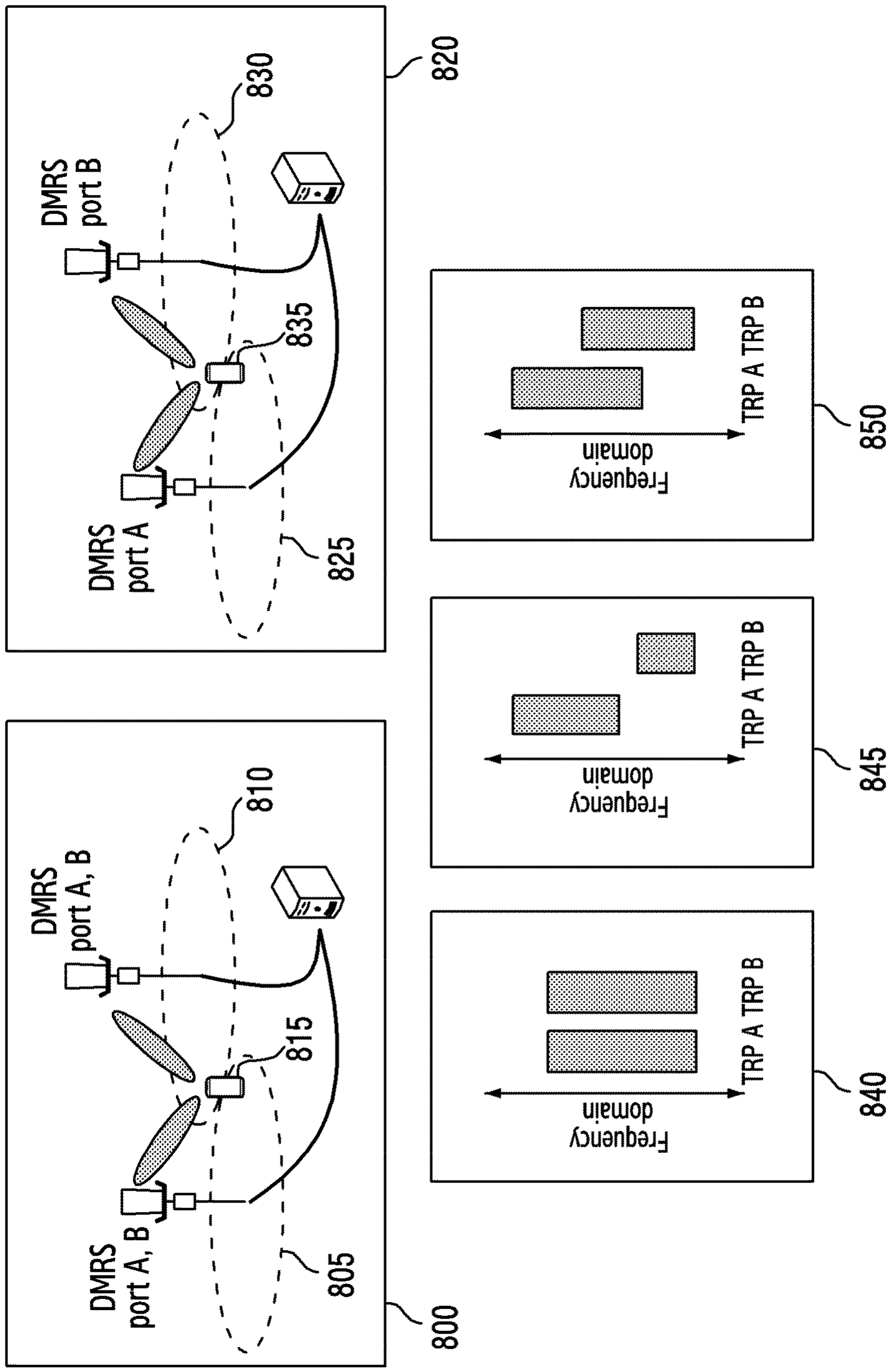

DMRS port A, B
DMRS port A, B
805
810
815
800
DMRS port A
DMRS port B
825
830
835
820
Frequency domain
TRP A TRP B
840
Frequency domain
TRP A TRP B
845
Frequency domain
TRP A TRP B
850


FIG.8

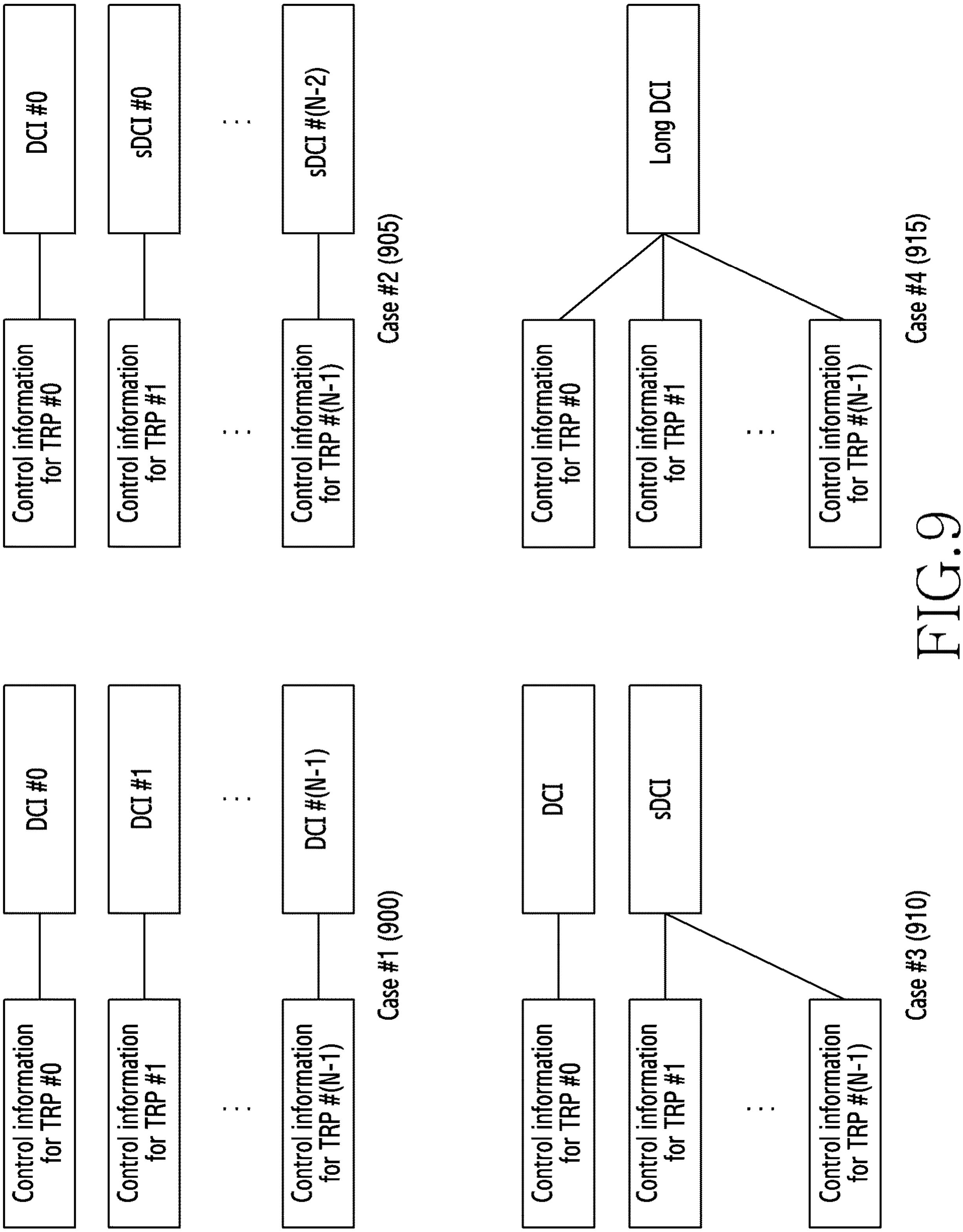
Control information for TRP #0
Control information for TRP #1
Control information for TRP #(N-1)
DCI #0
DCI #1
DCI #(N-1)
Case #1 (900)
Control information for TRP #0
Control information for TRP #1
Control information for TRP #(N-1)
DCI #0
sDCI #0
sDCI #(N-2)
Case #2 (905)
Control information for TRP #0
Control information for TRP #1
Control information for TRP #(N-1)
DCI
sDCI
Case #3 (910)
Control information for TRP #0
Control information for TRP #1
Control information for TRP #(N-1)
Long DCI
Case #4 (915)

FIG.9

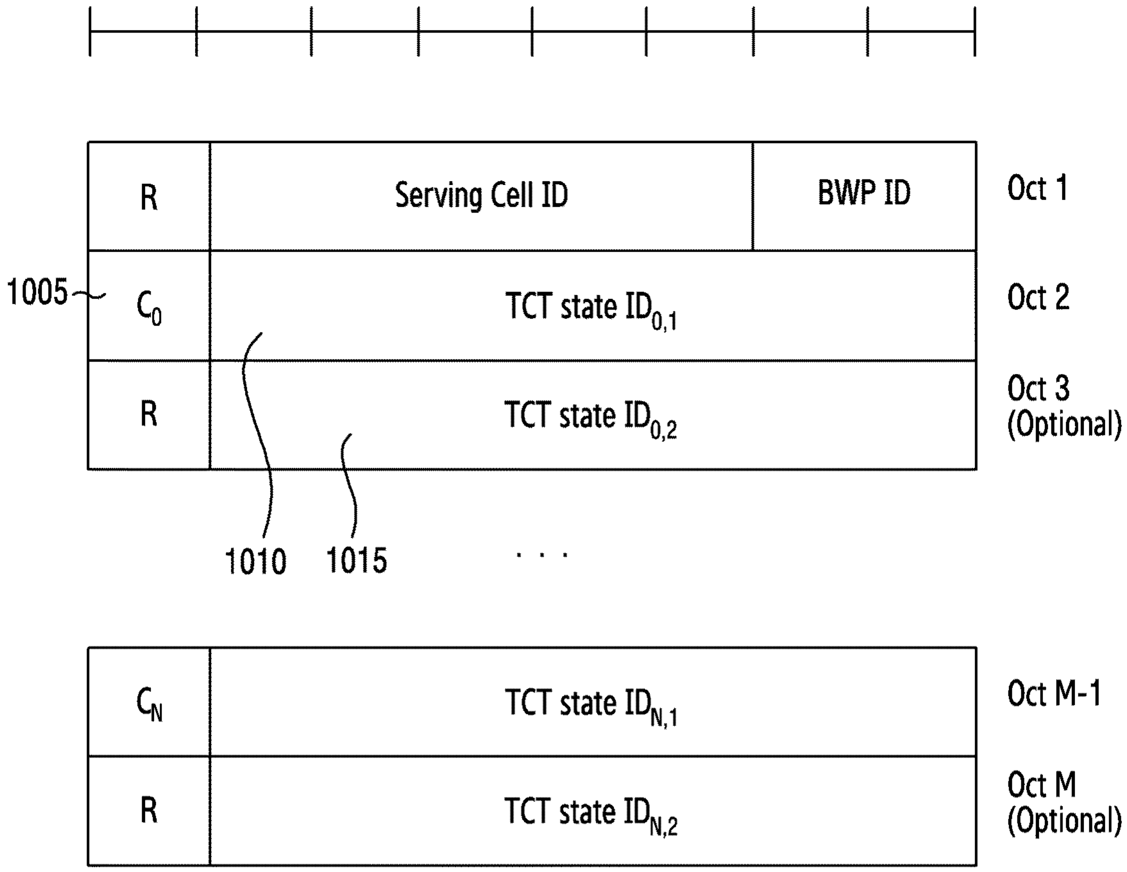
R
Serving Cell ID
BWP ID
Oct 1
1005
C0
TCT state ID0,1
Oct 2
R
TCT state ID0,2
Oct 3
(Optional)
1010
1015
. . .
CN
TCT state IDN,1
Oct M-1
R
TCT state IDN,2
Oct M
(Optional)

FIG.10

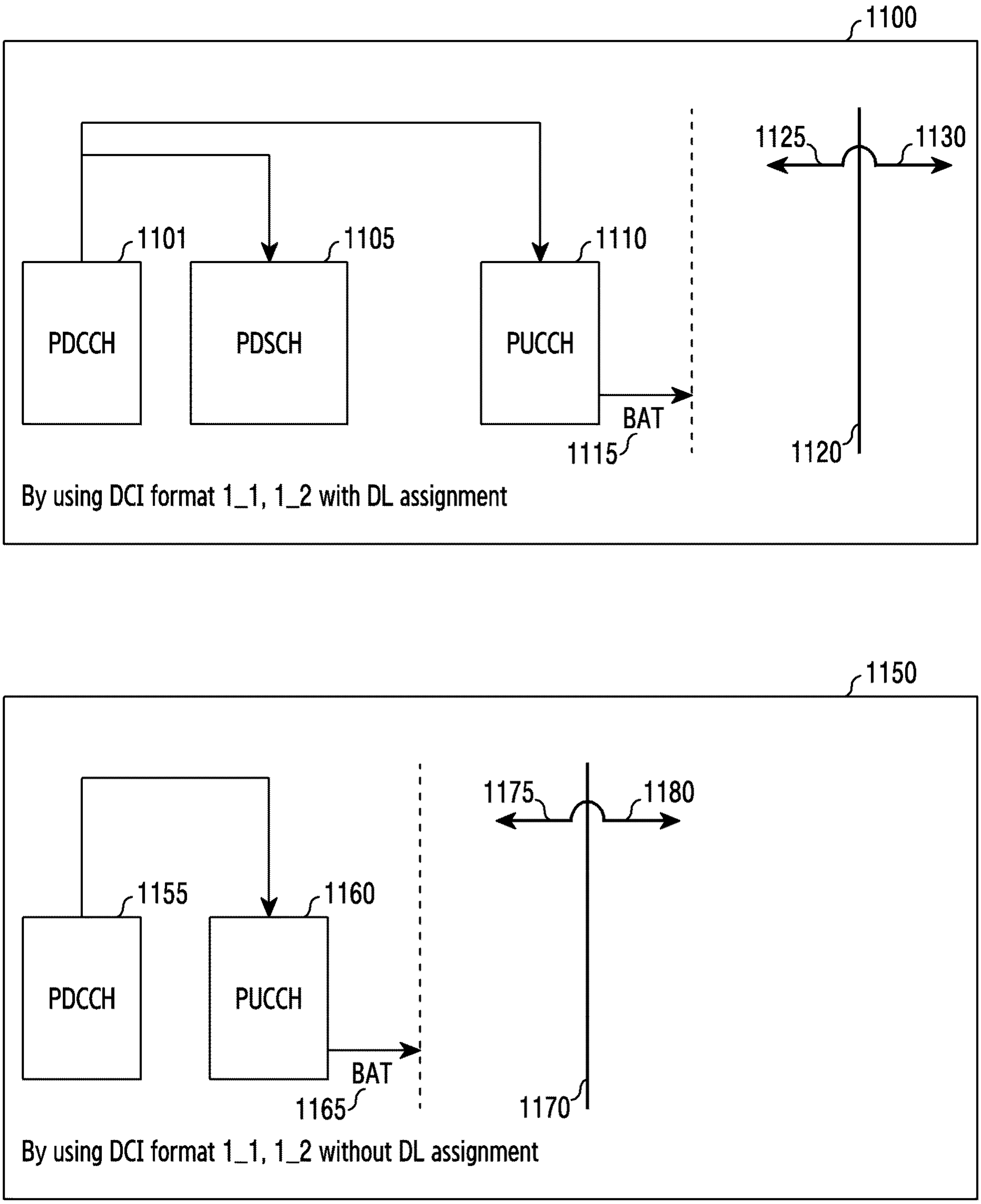
1100
1125
1130
1101
1105
1110
PDCCH
PDSCH
PUCCH
BAT
1115
1120
By using DCI format 1_1, 1_2 with DL assignment
1150
1175
1180
1155
1160
PDCCH
PUCCH
BAT
1165
1170
By using DCI format 1_1, 1_2 without DL assignment

FIG.11

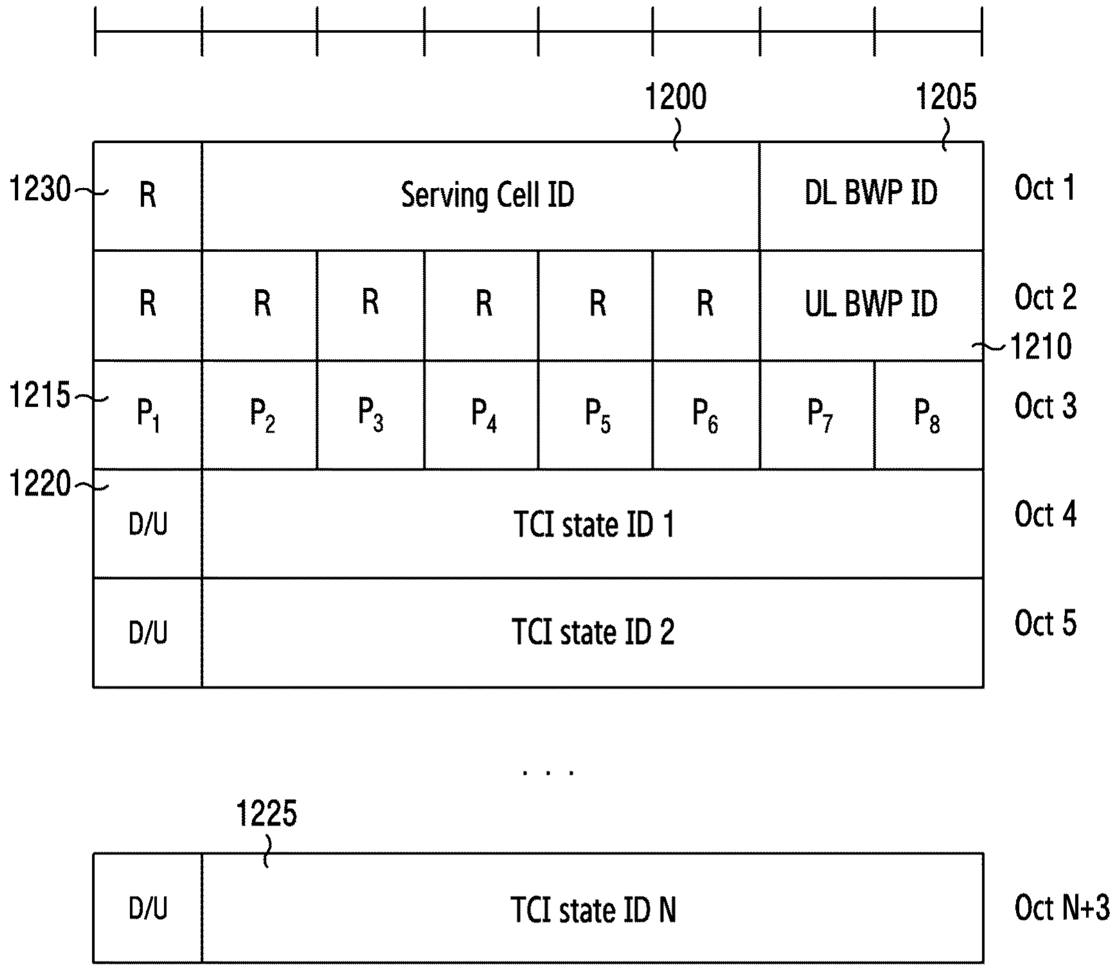
1200
1205
1230
R
Serving Cell ID
DL BWP ID
Oct 1
R
R
R
R
R
R
UL BWP ID
Oct 2
1210
1215
$P_1$
$P_2$
$P_3$
$P_4$
$P_5$
$P_6$
$P_7$
$P_8$
Oct 3
1220
D/U
TCI state ID 1
Oct 4
D/U
TCI state ID 2
Oct 5
. . .
1225
D/U
TCI state ID N
Oct N+3

FIG.12

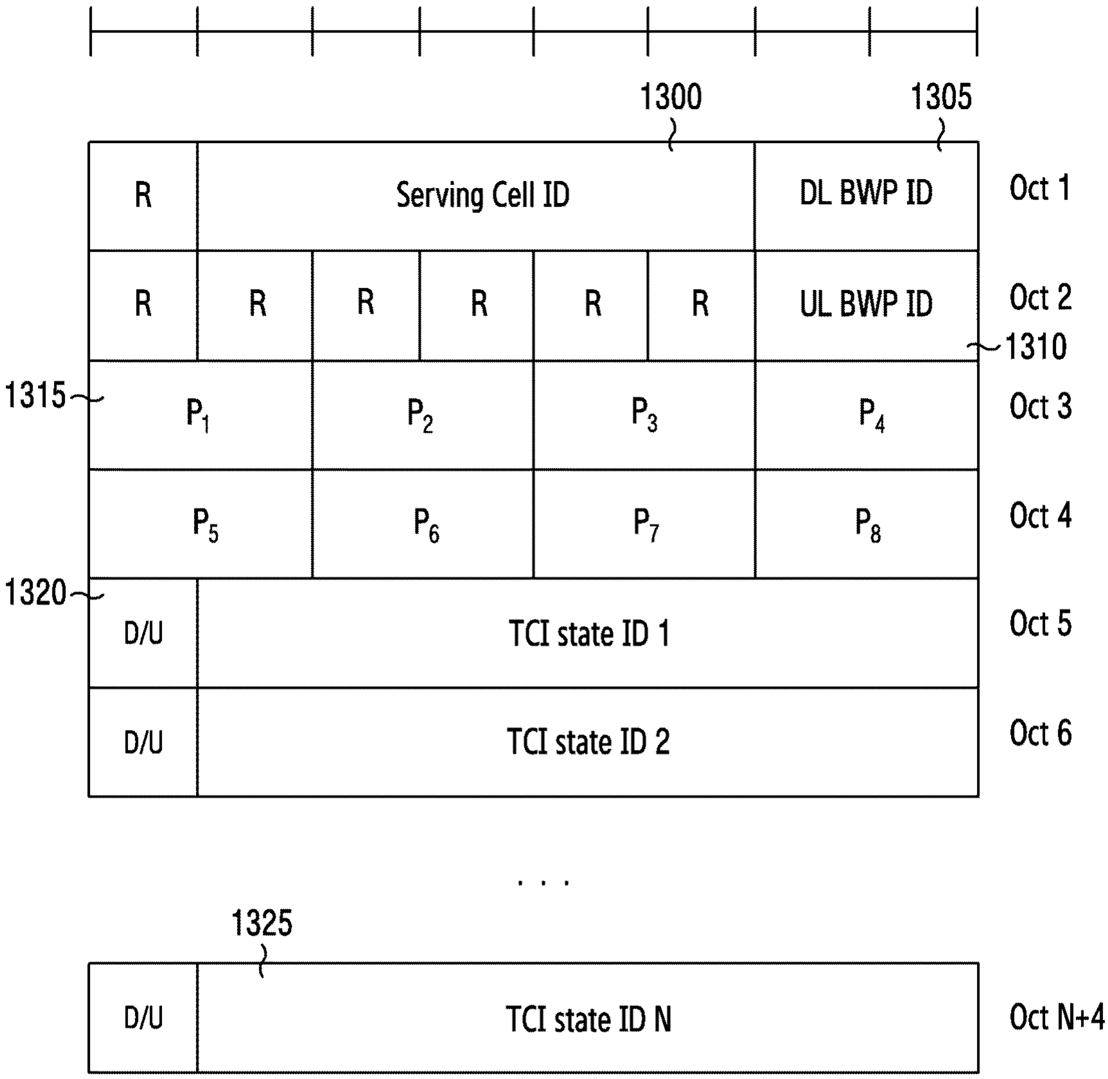
1300
1305
R
Serving Cell ID
DL BWP ID
Oct 1
R
R
R
R
R
R
UL BWP ID
Oct 2
1310
1315
P1
P2
P3
P4
Oct 3
P5
P6
P7
P8
Oct 4
1320
D/U
TCI state ID 1
Oct 5
D/U
TCI state ID 2
Oct 6
. . .
1325
D/U
TCI state ID N
Oct N+4

FIG.13

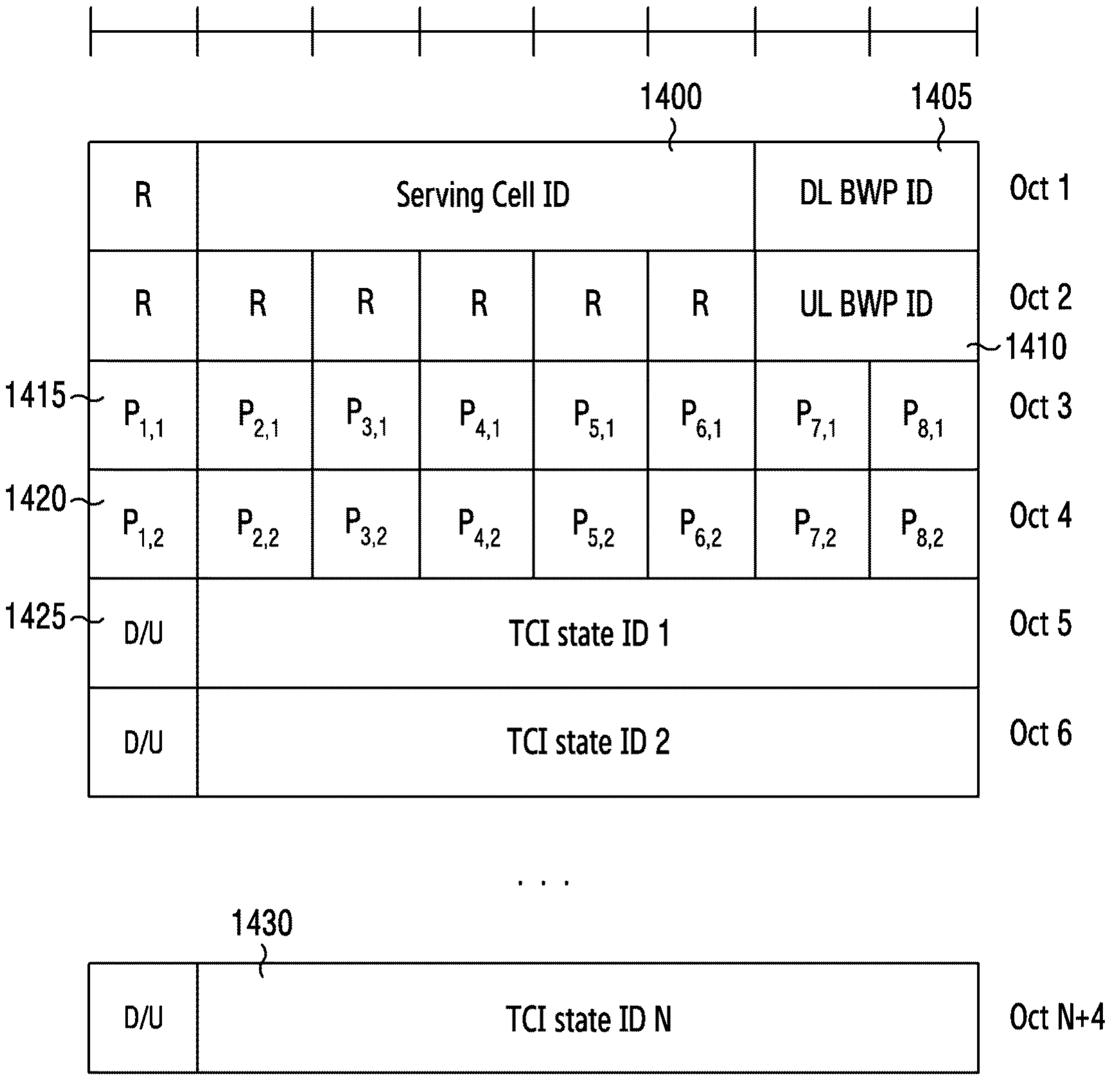

1400
1405
R
Serving Cell ID
DL BWP ID
Oct 1
R
R
R
R
R
R
UL BWP ID
Oct 2
1410
1415
$P_{1,1}$ $P_{2,1}$ $P_{3,1}$ $P_{4,1}$ $P_{5,1}$ $P_{6,1}$ $P_{7,1}$ $P_{8,1}$
Oct 3
1420
$P_{1,2}$ $P_{2,2}$ $P_{3,2}$ $P_{4,2}$ $P_{5,2}$ $P_{6,2}$ $P_{7,2}$ $P_{8,2}$
Oct 4
1425
D/U
TCI state ID 1
Oct 5
D/U
TCI state ID 2
Oct 6
. . .
1430
D/U
TCI state ID N
Oct N+4


FIG.14

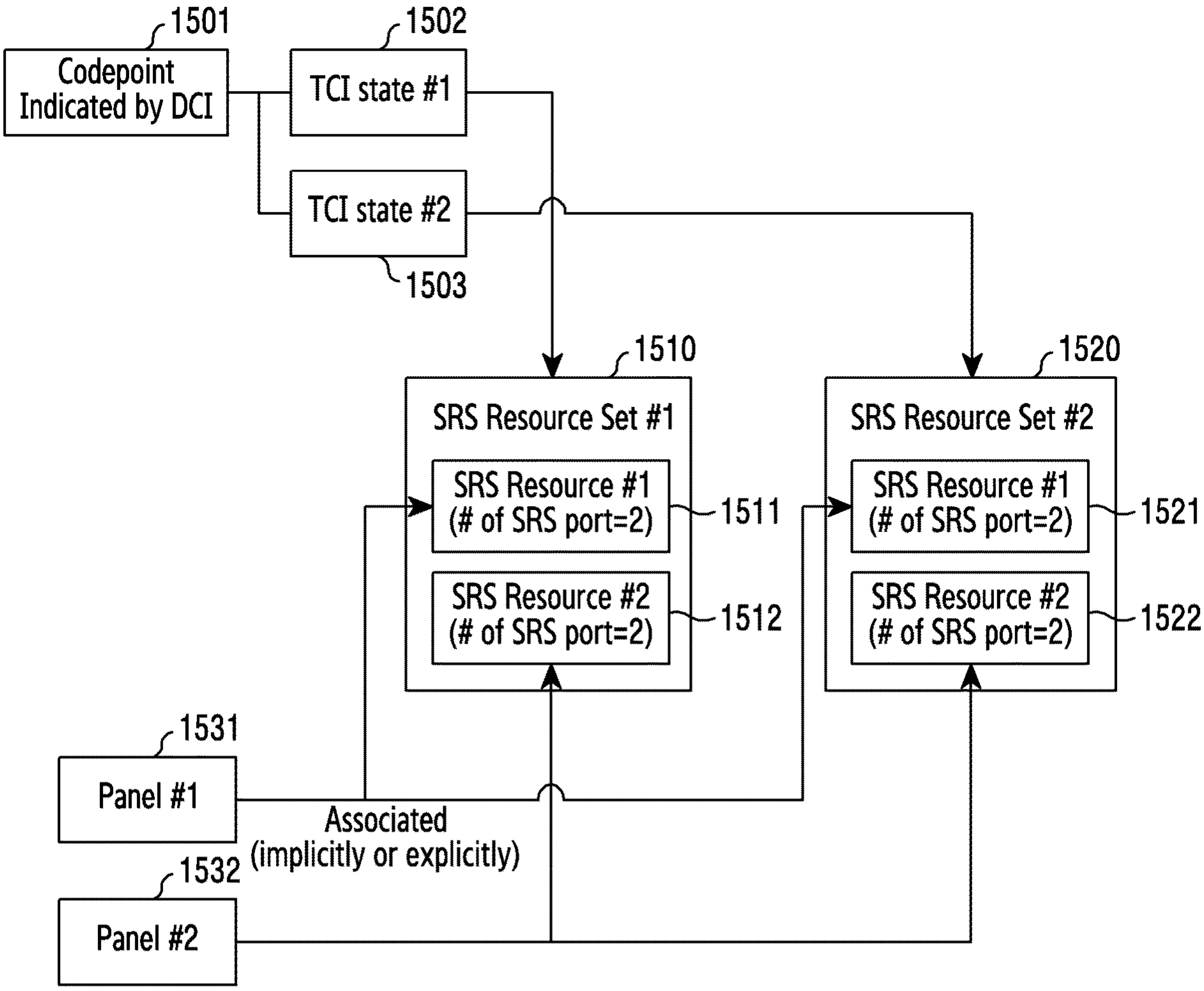
1501
Codepoint Indicated by DCI
1502
TCI state #1
TCI state #2
1503
1510
SRS Resource Set #1
SRS Resource #1 (# of SRS port=2)
1511
SRS Resource #2 (# of SRS port=2)
1512
1520
SRS Resource Set #2
SRS Resource #1 (# of SRS port=2)
1521
SRS Resource #2 (# of SRS port=2)
1522
1531
Panel #1
Associated (implicitly or explicitly)
1532
Panel #2

FIG.15

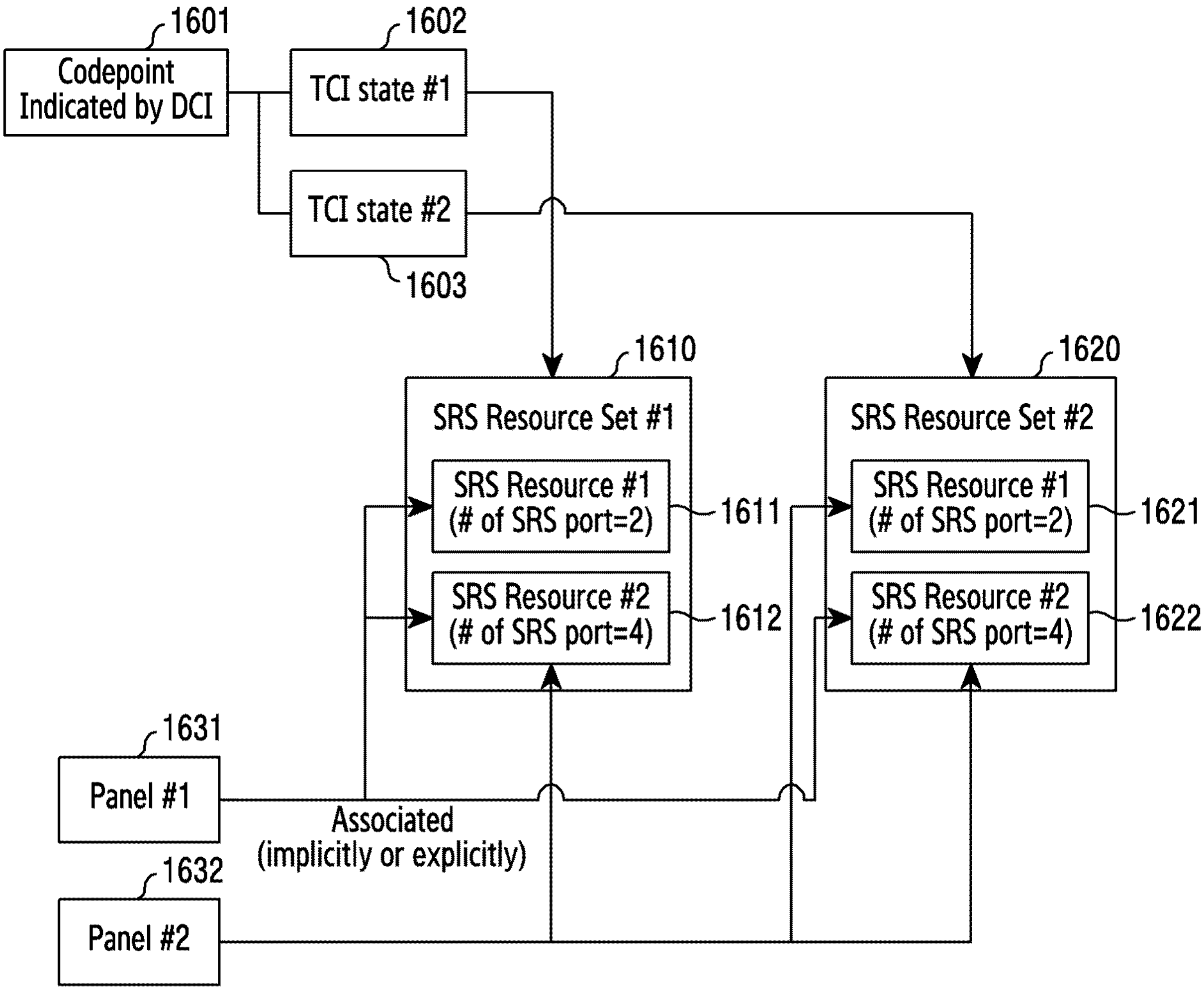
1601
Codepoint Indicated by DCI
1602
TCI state #1
TCI state #2
1603
1610
SRS Resource Set #1
SRS Resource #1 (# of SRS port=2)
1611
SRS Resource #2 (# of SRS port=4)
1612
1620
SRS Resource Set #2
SRS Resource #1 (# of SRS port=2)
1621
SRS Resource #2 (# of SRS port=4)
1622
1631
Panel #1
Associated (implicitly or explicitly)
1632
Panel #2

FIG.16

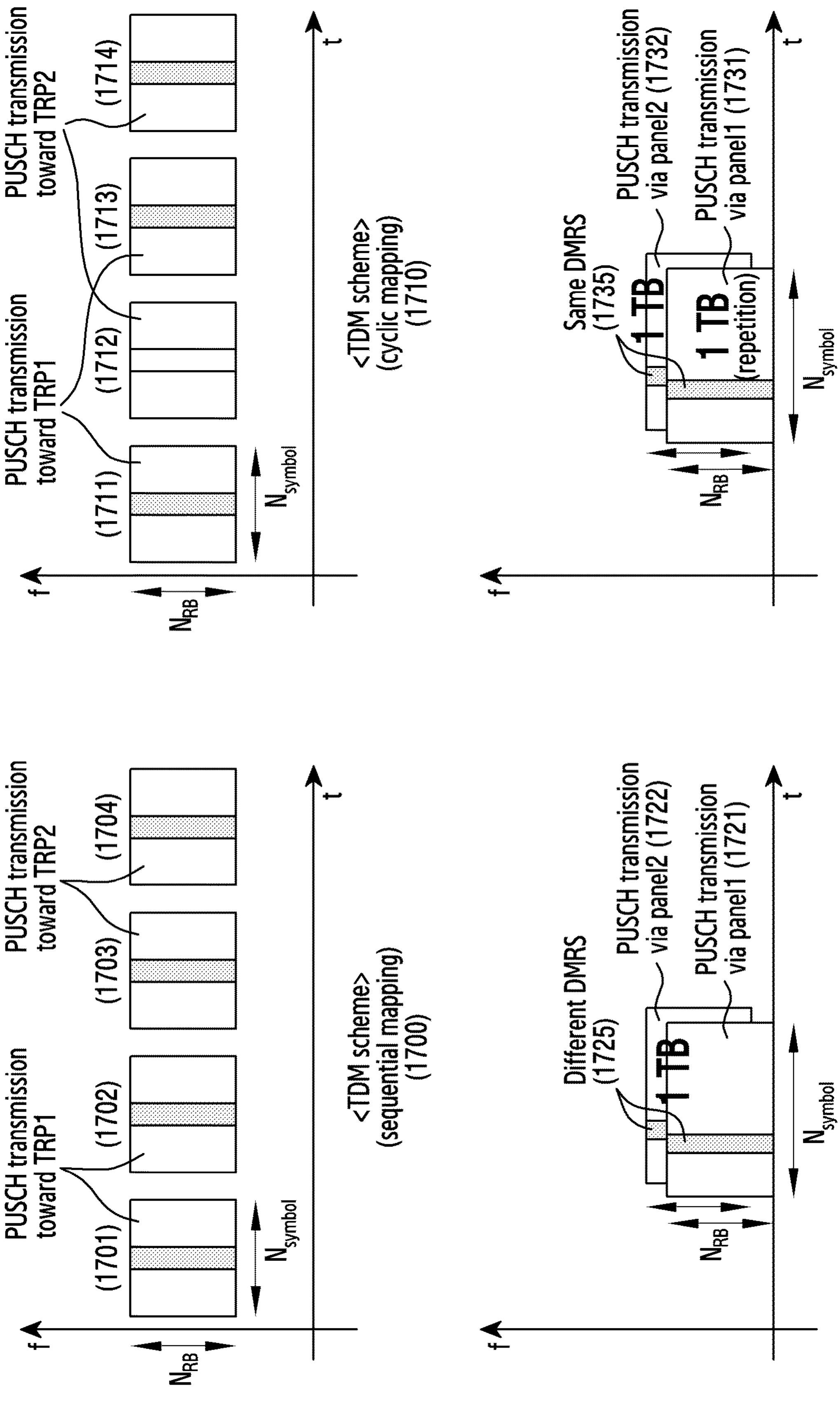
PUSCH transmission toward TRP1
PUSCH transmission toward TRP2
(1701)
(1702)
(1703)
(1704)
$N_{RB}$
$N_{symbol}$
f
t
<TDM scheme> (sequential mapping) (1700)
PUSCH transmission toward TRP1
PUSCH transmission toward TRP2
(1711)
(1712)
(1713)
(1714)
<TDM scheme> (cyclic mapping) (1710)
Different DMRS (1725)
PUSCH transmission via panel2 (1722)
PUSCH transmission via panel1 (1721)
1 TB
<SDM scheme> (1720)
Same DMRS (1735)
PUSCH transmission via panel2 (1732)
PUSCH transmission via panel1 (1731)
1 TB
1 TB (repetition)
<SFN scheme> (1730)

FIG. 17

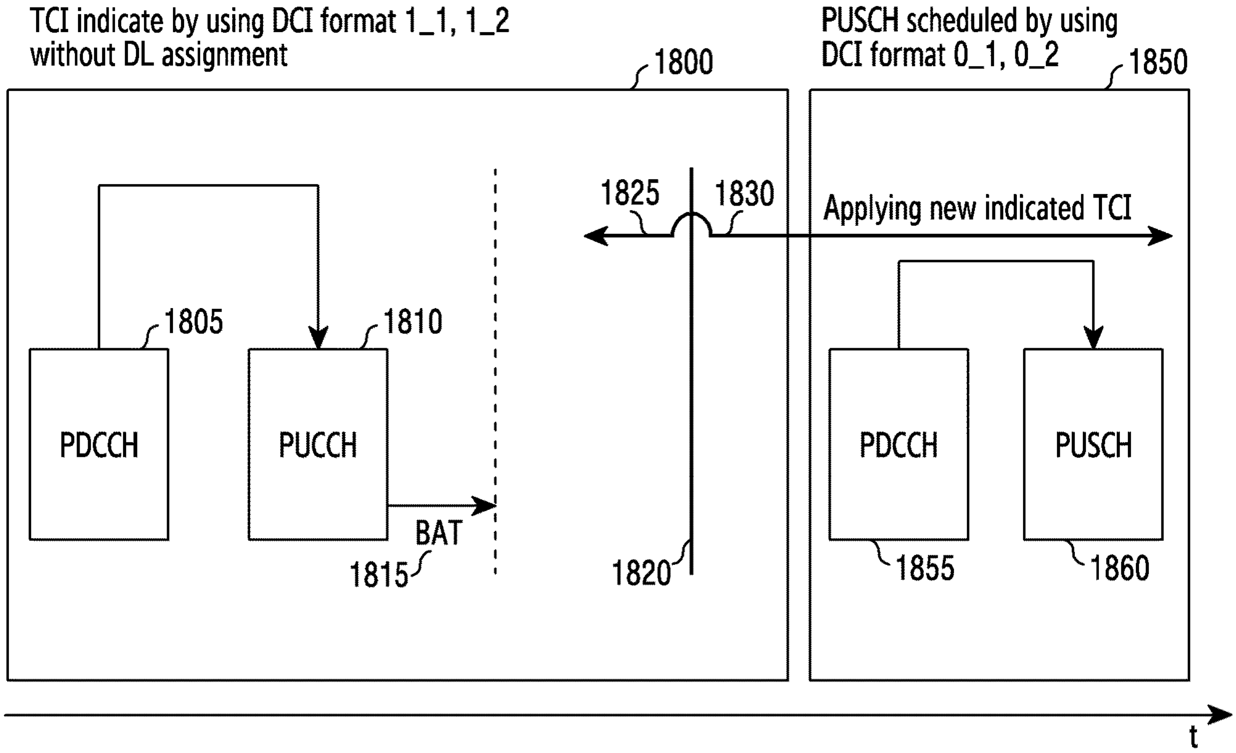
TCI indicate by using DCI format 1_1, 1_2
without DL assignment
1800
PUSCH scheduled by using
DCI format 0_1, 0_2
1850
1825
1830
Applying new indicated TCI
1805
1810
PDCCH
PUCCH
BAT
1815
1820
PDCCH
PUSCH
1855
1860
t

FIG.18

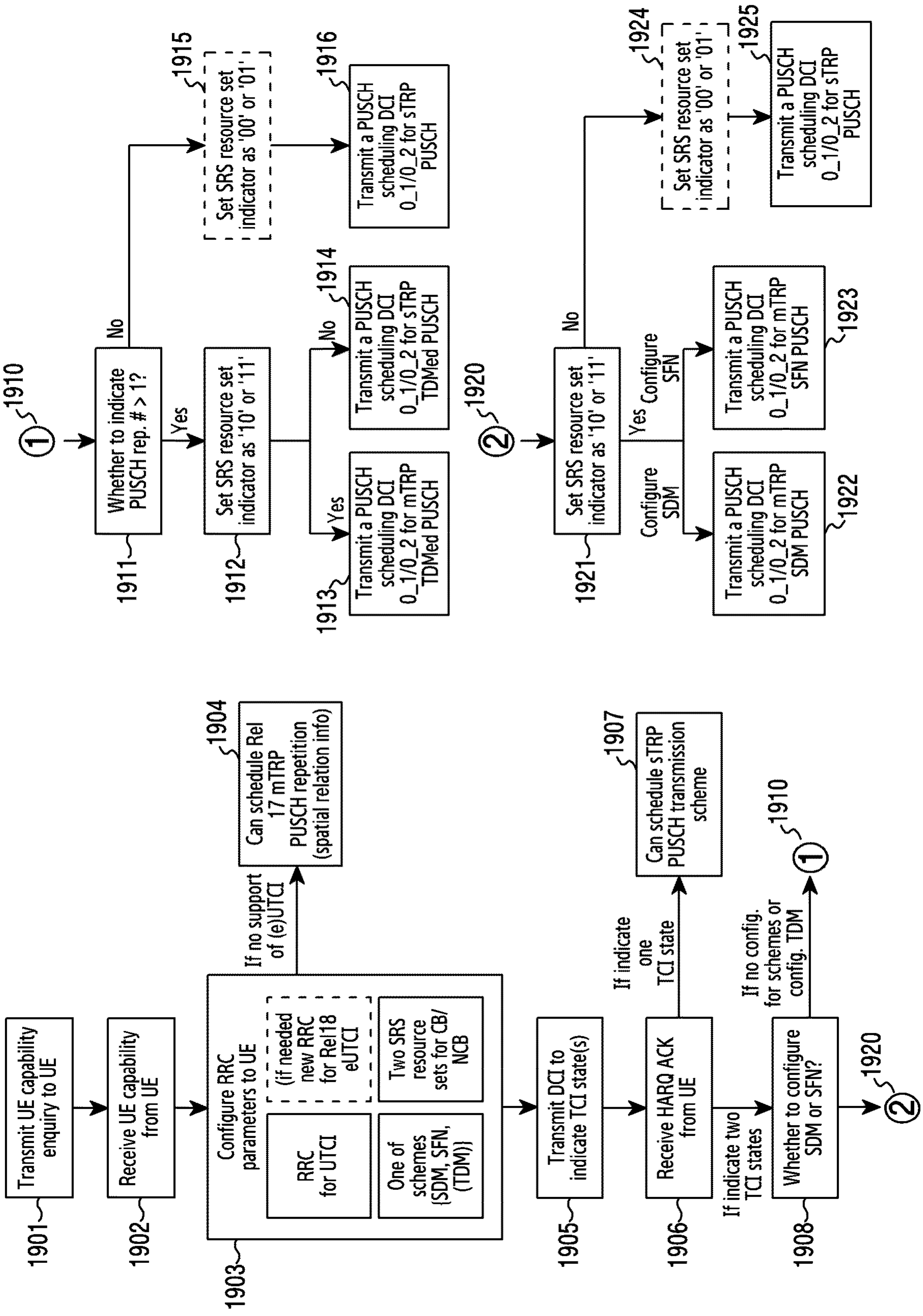
Transmit UE capability enquiry to UE
1901
Receive UE capability from UE
1902
Configure RRC parameters to UE
RRC for UTCI
(if needed new RRC for Rel18 eUTCI
One of schemes (SDM, SFN, (TDM))
Two SRS resource sets for CB/NCB
1903
If no support of (e)UTCI
Can schedule Rel 17 mTRP PUSCH repetition (spatial relation info)
1904
Transmit DCI to indicate TCI state(s)
1905
Receive HARQ ACK from UE
1906
If indicate one TCI state
Can schedule sTRP PUSCH transmission scheme
1907
If indicate two TCI states
Whether to configure SDM or SFN?
1908
If no config. for schemes or config. TDM
1910
1920
1910
Whether to indicate PUSCH rep. # > 1?
1911
Yes
No
Set SRS resource set indicator as '10' or '11'
1912
Yes
No
Transmit a PUSCH scheduling DCI 0_1/0_2 for mTRP TDMed PUSCH
1913
Transmit a PUSCH scheduling DCI 0_1/0_2 for sTRP TDMed PUSCH
1914
Set SRS resource set indicator as '00' or '01'
1915
Transmit a PUSCH scheduling DCI 0_1/0_2 for sTRP PUSCH
1916
1920
Set SRS resource set indicator as '10' or '11'
1921
Yes
No
Configure SDM
Configure SFN
Transmit a PUSCH scheduling DCI 0_1/0_2 for mTRP SDM PUSCH
1922
Transmit a PUSCH scheduling DCI 0_1/0_2 for mTRP SFN PUSCH
1923
Set SRS resource set indicator as '00' or '01'
1924
Transmit a PUSCH scheduling DCI 0_1/0_2 for sTRP PUSCH
1925

FIG.19

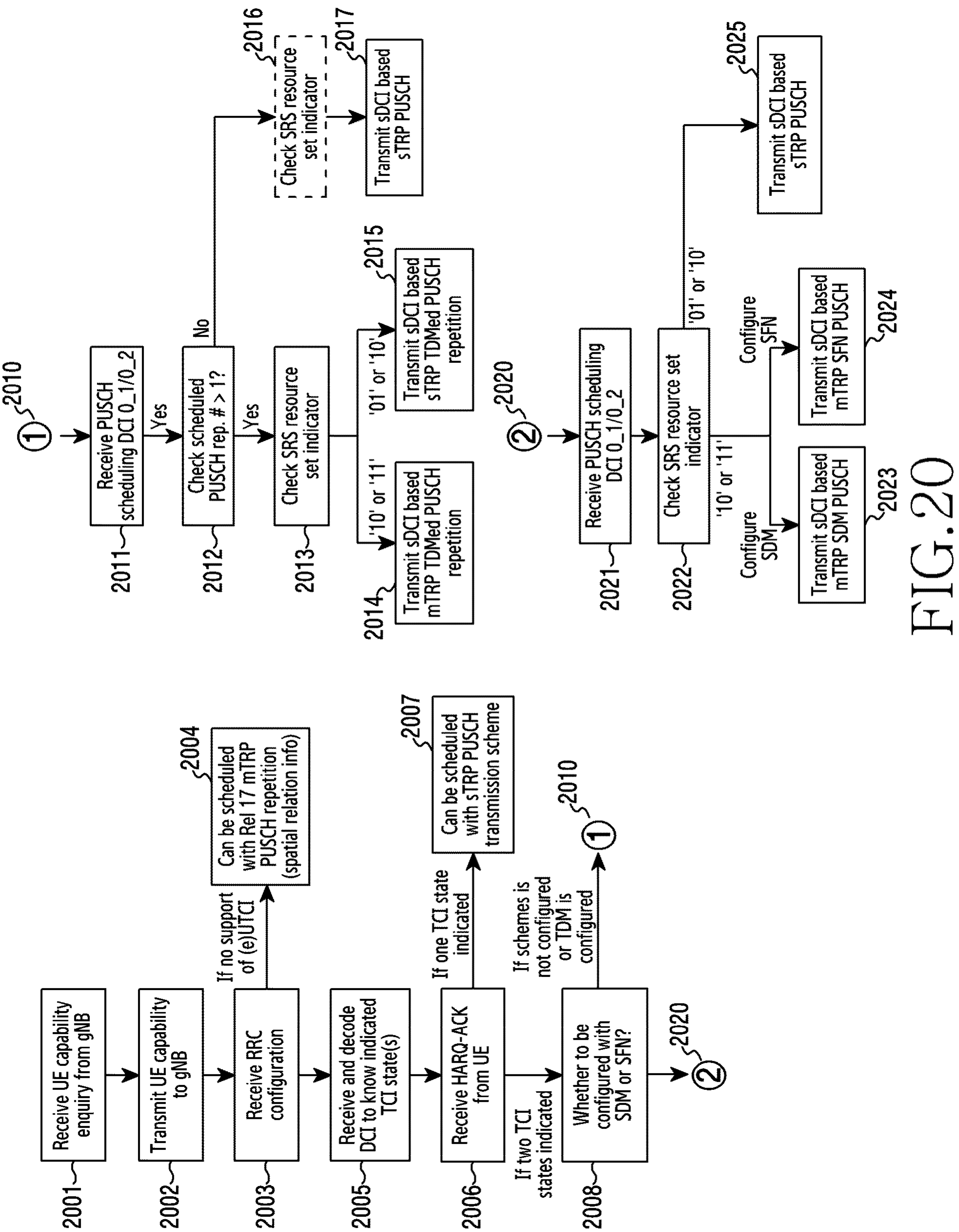

Receive UE capability enquiry from gNB
2001
Transmit UE capability to gNB
2002
Receive RRC configuration
2003
If no support of (e)UTCI
Can be scheduled with Rel 17 mTRP PUSCH repetition (spatial relation info)
2004
Receive and decode DCI to know indicated TCI state(s)
2005
Receive HARQ-ACK from UE
2006
If one TCI state indicated
Can be scheduled with sTRP PUSCH transmission scheme
2007
If two TCI states indicated
Whether to be configured with SDM or SFN?
2008
If schemes is not configured or TDM is configured
1
2010
2
2020
Receive PUSCH scheduling DCI 0_1/0_2
2011
Yes
Check scheduled PUSCH rep. # > 1?
2012
No
Yes
Check SRS resource set indicator
2013
'10' or '11'
Transmit sDCI based mTRP TDMed PUSCH repetition
2014
'01' or '10'
Transmit sDCI based sTRP TDMed PUSCH repetition
2015
Check SRS resource set indicator
2016
Transmit sDCI based sTRP PUSCH
2017
Receive PUSCH scheduling DCI 0_1/0_2
2021
Check SRS resource set indicator
2022
'10' or '11'
Configure SDM
Transmit sDCI based mTRP SDM PUSCH
2023
Configure SFN
Transmit sDCI based mTRP SFN PUSCH
2024
'01' or '10'
Transmit sDCI based sTRP PUSCH
2025


FIG.20

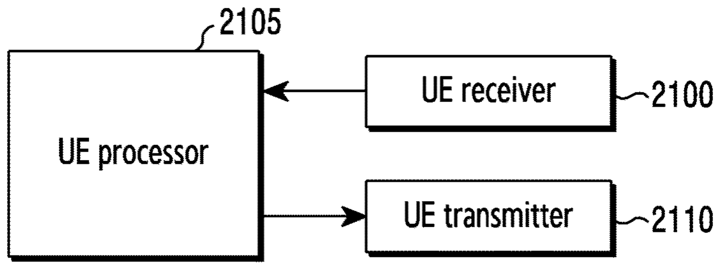


FIG.21

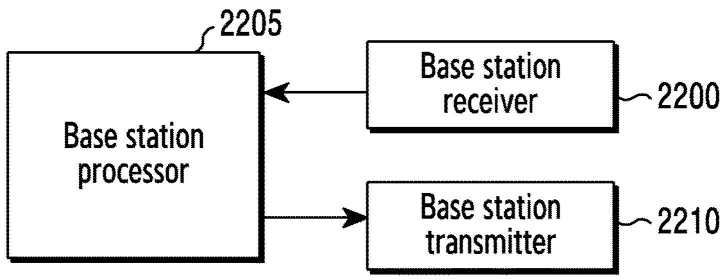
2205
Base station processor
Base station receiver
2200
Base station transmitter
2210

FIG.22

## INTERNATIONAL SEARCH REPORT

International application No.
**PCT/KR2024/001557**

### A. CLASSIFICATION OF SUBJECT MATTER

**H04B 7/0456**(2017.01)i; **H04B 7/0404**(2017.01)i; **H04B 7/06**(2006.01)i; **H04W 72/12**(2009.01)i; **H04W 72/21**(2023.01)i; **H04W 72/231**(2023.01)i; **H04W 72/232**(2023.01)i; **H04L 5/00**(2006.01)i

According to International Patent Classification (IPC) or to both national classification and IPC

### B. FIELDS SEARCHED

Minimum documentation searched (classification system followed by classification symbols)

H04B 7/0456(2017.01); H04W 52/24(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다중 패널 동시 전송(STxMP: simultaneous transmission across multi-panel), PUSCH(physical uplink shared channel), DCI(downlink control information), 설정(set), SRS 자원 세트 지시(SRS resource set indication), 구성(configuration), TCI(transmission configuration indicator), 코드 포인트(code point)

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0157964 A (LG ELECTRONICS INC.) 29 November 2022 (2022-11-29)<br>See paragraphs [0118] and [0335]-[0357]; and figure 10. | 1-15 |
| Y | US 2021-0195616 A1 (QUALCOMM INCORPORATED) 24 June 2021 (2021-06-24)<br>See paragraphs [0052]-[0053]; and figure 2. | 1-15 |
| Y | XIAOMI. Enhancements on multi-panel uplink transmission. R1-2211339, 3GPP TSG RAN WG1 Meeting #111. Toulouse, France. 07 November 2022.<br>See sections 2.5-2.6; and table 4. | 1-15 |
| A | OPPO. Transmission scheme and UL precoding indication for multi-panel transmission. R1-2211430, 3GPP TSG RAN WG1 Meeting #111. Toulouse, France. 07 November 2022.<br>See sections 2.1-2.2; and tables 2-3. | 1-15 |
| A | QUALCOMM INCORPORATED. Simultaneous multi-panel transmission. R1-2212104, 3GPP TSG RAN WG1 Meeting #111. Toulouse, France. 05 November 2022.<br>See section 2; and tables 1-2. | 1-15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **24 May 2024** | **27 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/001557**

| Patent document cited in search report | Publication date (day/month/year) | Patent family member(s) | Publication date (day/month/year) |
|---|---|---|---|
| KR 10-2022-0157964 A | 29 November 2022 | US 2023-0189254 A1 | 15 June 2023 |
| | | WO 2021-194218 A1 | 30 September 2021 |
| US 2021-0195616 A1 | 24 June 2021 | CN 114830580 A | 29 July 2022 |
| | | EP 4078874 A1 | 26 October 2022 |
| | | US 11930488 B2 | 12 March 2024 |
| | | WO 2021-126374 A1 | 24 June 2021 |

Form PCT/ISA/210 (patent family annex) (July 2022)